Europäisches Patentamt

European Patent Office

Office européen des brevets

(11) Publication number: **0 063 458**
**B1**

# EUROPEAN PATENT SPECIFICATION

(45) Date of publication of patent specification: **23.08.89**

(21) Application number: **82301871.8**

(22) Date of filing: **08.04.82**

(51) Int. Cl.⁴: **G 06 F 15/06,** G 06 F 9/26,
G 06 F 9/46

(54) Microcomputer system.

(30) Priority: **13.04.81 US 253452**
**13.04.81 US 253642**
**13.04.81 US 253644**
**22.06.81 US 276412**

(43) Date of publication of application:
**27.10.82 Bulletin 82/43**

(45) Publication of the grant of the patent:
**23.08.89 Bulletin 89/34**

(84) Designated Contracting States:
**DE FR GB NL**

(56) References cited:
**US-A-3 980 991**
**US-A-3 990 054**

(73) Proprietor: **TEXAS INSTRUMENTS
INCORPORATED
13500 North Central Expressway
Dallas Texas 75265 (US)**

(72) Inventor: **Thaden, Robert C.
6425 S. Gessner 1220
Houston Texas 77036 (US)**
Inventor: **McDonough, Kevin C.
2102 Ashgrove
Houston Texas 77077 (US)**
Inventor: **Hayne, John W.
Box 1443 M/S 6405  ·
Houston Texas 77001 (US)**
Inventor: **Bellay, Jeffrey D.
8710 Nairn
Houston Texas 77074 (US)**
Inventor: **Swoboda, Gary L.
8814 Mountain Path Circle
Austin Texas 75759 (US)**
Inventor: **Patrick, Michael W.
8600 Commerce Park
Houston Texas 77036 (US)**

(74) Representative: **Abbott, David John et al
Abel & Imray Northumberland House 303-306
High Holborn
London, WC1V 7LH (GB)**

Courier Press, Leamington Spa, England.

## Description

Background of the invention

This invention relates to integrated semiconductor devices and systems, and more particularly to features used in an electronic digital processing system of the single-chip microprocessor or microcomputer form.

A microprocessor device is a central processing unit or CPU for a digital processor which is contained in a single semiconductor integrated circuit, usually fabricated by "MOS/LSI" technology, as shown in U.S. Patent No. 3,757,306 issued to Gary W. Boone and assigned to Texas Instruments. The Boone patent shows an 8-bit CPU on a chip including a parallel ALU, registers for data and addresses, an instruction register and a control decoder, all interconnected using a bidirectional parallel bus. U.S. Patent No. 4,074,351, issued to Gary W. Boone and Michael J. Cochran, assigned to Texas Instruments, shows a single-chip "microcomputer" type device which contains a 4-bit parallel ALU and its control circuitry, with on-chip ROM and RAM for program and data storage. The term microprocessor usually refers to a device employing external memory for program and data storage, while the term microcomputer refers to a device with on-chip ROM and RAM for program and data storage; the terms are also used interchangeably, however, and are not intended as restrictive as to this invention.

Subsequent to 1971 when Patents 3,757,306 and 4,074,351 were originally filed, many improvements have been made in microprocessors and microcomputers to increase the speed and capability of these devices and reduce the cost of manufacture, providing more circuitry in less space, i.e., smaller chip size. Improved photolithographic techniques allow narrower line widths and higher resolution, providing added circuit density, but circuit and system improvements also contribute to the goals of increased performance with smaller chip size. Some of these improvements in microprocessors are disclosed in the following U.S. Patents, all assigned to Texas Instruments: 3,991,305 issued to Edward R. Caudel and Joseph H. Raymond Jr.; 4,156,927 issued to David J. McElroy and Graham S. Tubbs; 3,934,233 issued to R. J. Fisher and G. D. Rogers; 3,921,142 issued to J. D. Bryant and G. A. Hartsell; 3,900,722 isued to M. J. Cochran and C. P. Grant; 3,932,846 issued to C. W. Brixey et al; 3,939,335 issued to G. L. Brantingham, L. H. Phillips and L. T. Novak; 4,125,901 issued to S. P. Hamilton, L. L. Miles, et al; 4,158,432 issued to M. G. VanBavel; 3,757,308 and 3,984,816.

Additional examples of microprocessor and microcomputer devices in the evolution of this technology are described in publications. In Electronics, September 25, 1972, p. 31—32, a 4-bit P-channel MOS microcomputer with on-chip ROM and RAM is shown which is similar to Patent 3,991,305. Two of the most widely used 8-bit microprocessors like that of Patent 3,757,306 are described in Electronics, April 18, 1974 at pp. 88—95 (the Motorola 6800) and pp. 95—100 (the Intel 8080). A microcomputer version of the 6800 is described in Electronics, February 2, 1978 at pp. 85—103. Likewise, a single-chip microcomputer version of the 8080 is shown in Electronics, November 25, 1976 at pp. 99—105 and a 16-bit microprocessor evolving from the 8080 is described in Electronics, February 16, 1978, pp. 99—104. Another single-chip microcomputer, the Mostek 3872, is shown in Electronics, May 11, 1978; at pp. 105—110. An improved version of the 6800 is disclosed in Electronics, September 17, 1979 at pp. 122—125, while a 16-bit microprocessor identified as the 68000 which evolved from the 6800 is described in Electronic Design, September 1, 1978 at pp. 100—107.

US—A—3,900,054 (Perlowski) discloses a microprogramming apparatus for a data processor using a diode matrix to translate an operation code of a macroinstruction into an address of a ROM storing microinstructions.

US—A—3,980,991 (Mercurio) describes an electronic computer in which a jump in a microprogram is executed in dependence upon the state of a selected one of a plurality of bistable circuits. The states of the bistable circuits are set either in response to the execution of microprograms by the computer or in response to whether or not a logical condition specified by a microinstruction has been met.

The technology of integrated circuit design and manufacture has progressed to a point where virtually any electronic system having digital processing or control functions can employ a microcomputer or microprocessor chip. The cost of designing and manufacturing the devices is a limiting factor, however. Semiconductor manufacturing is oriented toward production of large quantities of a single device type, rather than production of a few of many different specialty items, and so to be economical a chip design must be adaptable for a wide variety of uses, not only by changing the ROM code but also by providing many input/output options and similar features. Thus, a device as in Patent 3,991,305 has been manufactured in quantities of millions of units for many different electronic calculators, electronic games, appliance controllers, and the like. Not only the semiconductor manufacturing cost is minimized by use of the same device, but also the design cost is minimized because very little circuit design is needed (only external to the chip) and the programming effort employs an instruction set and commonly-used subroutines and algorithms in which a high level of experience is acquired. Nevertheless, the design cost for using a microcomputer device in a new application may be prohibitive even though only assembly language programming is needed, this software cost is unduly high because of the number of different and incompatible programming languages used on the wide variety of device types.

It is the principal object of this invention to provide an improved microcomputer or microprocessor device which is adaptable for a wide variety of uses but yet is constructed to facilitate low-cost manufacture and to minimize programming costs.

According to the present invention there is provided an electronic digital processor system comprising: internal memory means for storage of data and instructions which define operations on said data and other functions of the system; arithmetic and logic means for performing said operations on said data; register means for temporary storage of said data and temporary storage of addresses for accessing said internal memory means; a plurality of data paths coupling said internal memory means, said arithmetic and logic means, and said register means; and control and timing circuitry means coupled to said data paths, said control and timing circuitry means receiving instructions from said internal memory means via said data paths and generating command signals to said arithmetic and logic means, to said data paths, and to said register means for execution of said instructions to define the operation of the processor system; characterized by peripheral control circuitry means for providing one of a plurality of memory configurations which provide access to said internal memory means while providing offset addressing access to peripheral components including a plurality of multi-bit input/output ports for providing input and output of information for the processor system, said peripheral control circuitry means being coupled to said data paths for transferring addresses and data and receiving command signals from said control and timing circuitry means.

According to the invention there is further provided a method as set forth in claim 18.

Brief description of the drawings

The novel features believed characteristic of the invention are set forth in the appended claims. The invention itself, however, as well as other features and advantages thereof, will be best understood by reference to the detailed description which follows, read in conjunction with the accompanying drawings, wherein:

Figure 1 is an electrical diagram in block form of an MOS/LSI microcomputer chip including CPU, ROM and RAM and utilizing features of the invention;

Figure 2 is a memory map for the logical address space for the microcomputer of Figure 1 and Figures 2a—2e are detailed memory maps like Figure 2 for various operating modes of this microcomputer;

Figure 3 is a greatly enlarged plan view of the semiconductor chip containing the microcomputer of Figure 1 showing the physical layout of the various parts of the device;

Figure 3a is an enlarged detail view of a part of the layout of Figure 3 showing the regular pattern of the ALU and register strip;

Figure 3b is a pictorial view of the microcomputer chip of Figure 3 mounted in a 40-pin dual-in-line package;

Figure 4 is a timing diagram showing voltage vs. time for various events in operation of the system of Figure 1;

Figure 5 is a detailed electrical diagram of the CPU, including ALU, shifter S, registers and busses, in the microcomputer of Figure 1;

Figure 6 is a detailed electrical diagram of the control ROM used in the microcomputer of Figure 1;

Figure 7 is a map of the relative locations of the Figures 7a—7f;

Figures 7a—7f are electrical schematic diagrams of various parts of the ALU and register strip within the CPU of the microcomputer of Figure 1;

Figures 8a—8j (six sheets) show a logic flow chart of the execution of the microinstructions of Tables B and C in the microcomputer device of Figure 1;

Figure 9 is a map of the opcodes for the macroinstructions of Table A executed by the microcomputer of Figure 1;

Figures 10a—10d are electrical diagrams of microprocessor systems using the microcomputer chip 10 of Figure 1 in various operating modes;

Figure 10e is a timing diagram for operating modes of Figures 10b—10d;

Figure 11a is a table illustrating the group decode circuit bus addresses which product peripheral activating signals;

Figure 11b is a table illustrating the operating mode specifications for the different memory configurations of Figures 2 and 10;

Figure 12a is a table listing the interrupt vector locations in memory;

Figure 12b is a table illustrating the input/output control register contents;

Figure 12c is a conceptual block diagram of the programmable timer/event counter;

Figure 12d is a table illustrating the contents of the timer data register and the timer control register;

Figure 13a is a schematic diagram of the A port;

Figure 13b is a schematic diagram of the B port;

Figure 13c is a schematic diagram of the C port;

Figure 13d is a schematic diagram of the D port;

Figure 13e is table illustrating interrupt generation for the system emulator mode.

Detailed description of specific embodiment

The microcomputer chip

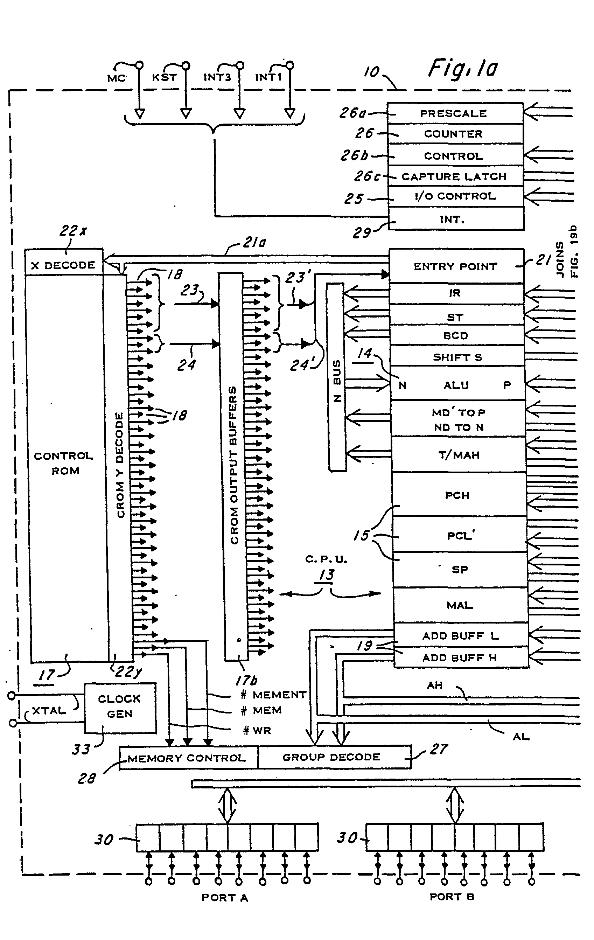

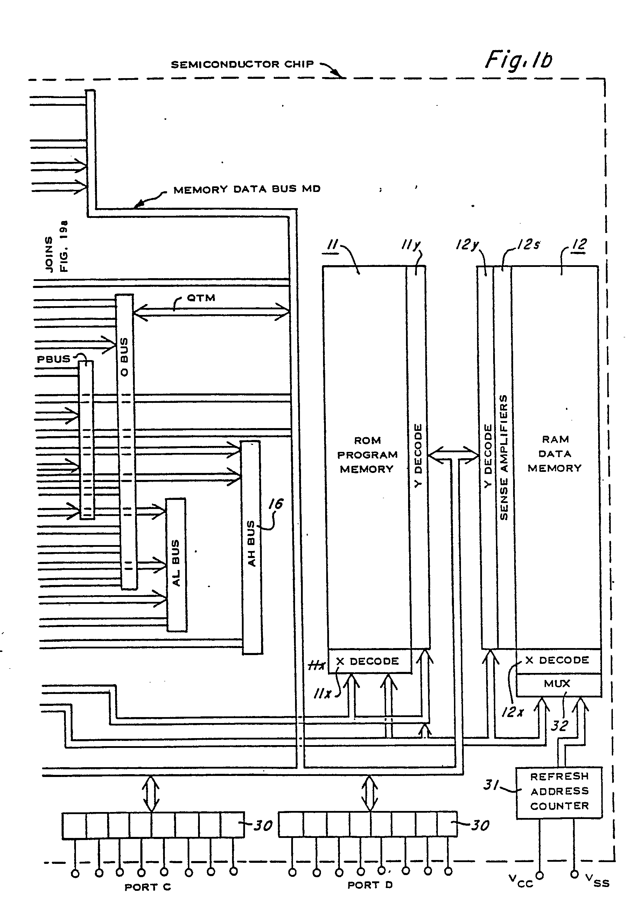

With reference to Figure 1, a microcomputer chip 10 is shown which employs features according to one embodiment of the invention. The chip 10 is a semiconductor integrated circuit of the MOS/LSI type including a silicon bar of less than about 200 mils on a side, mounted in a standard 40-pin package. Totally contained within the chip 10 is a digital processor having a ROM or read-only memory 11 for program storage and a RAM or read/write memory 12 for data storage, along with a CPU 13. The CPU consists of an arithmetic logic unit or ALU 14 with its working registers 15 and busses 16, along with a control ROM or CROM 17 for generating microinstructions or control signals on lines 18. The CPU 13 accesses the ROM and RAM memory 11, 12 by three busses: a memory data bus MD, a high address bus AH, and a low address bus AL, along with three of the control lines 18. Communication with devices external to the chip is by means of four 8-bit ports A, B, C and D which are accessed by the MD bus and operated by peripheral control circuitry as will be described. The MD, AH and AL busses are each eight bits wide, as are the ALU 14, the registers 15 and the ports, although of course concepts herein described would be applicable to 4-bit, 16-bit or 32-bit devices, for example.

The registers 15 in the CPU 13 include an instruction register IR, a status register ST, circuitry BCD for binary-coded-decimal constants, a shift circuit S which receives the output of the ALU 14, a register T/MAH which functions as both a temporary store for operands and for the high order byte of the memory address (memory address high), a sixteen bit program counter split into two eight bit registers PCH and PCL (program counter high and low); a stack pointer SP, and a memory address low register MAL. Address buffers 19 generate true and complement address signals on busses AH' and AL' from the address busses AH and AL. Operands are for the most part stored in the RAM 12 which functions as a register file RF, rather than in temporary registers 15 associated with the CPU 13.

The busses 16 interconnect the various registers 15, the ALU 14 and MD, AH' and AL' busses. The ALU 14 always receives a P input from a P bus and an N input from an N bus, and produces an output via shifter S to an output or O bus. Access to these P, N and O busses 16, to the registers 15 and ALU 14, and to the MD, AH and AL busses is controlled by the control signals 18 from the CROM 17.

The microcomputer chip 10 operates on the basis of 8-bit macroinstruction words stored in the ROM 11 and transferred to the instruction register IR one at a time. One example of a macroinstruction set executed in the CPU 13 is described in Table A which will be discussed in detail below. The Table gives the instruction word in mneumonics, also referred to as assembly language or source code, and also gives the machine-language opcode in binary (this is like object code except object is in hex). Usually an opcode plus one or more address bytes are used to execute an instruction. An instruction word or opcode held in IR is an input to an entry point circuit 21 which produces an 8-bit address via lines 21a to address circuitry 22 for the CROM 17, accessing one of 256 possible CROM addresses (in the example embodiment) to produce signals 18 defining a microinstruction as set forth in Tables B and C, to be described below. One macroinstruction of Table A produces a sequence of microinstructions. A part of each of the microinstructions (i.e. some of outputs 18) is used to generate the next CROM address; a microjump address is fed back to the entry point circuit via lines 23, and dispatch control information is fed back via lines 24, as will be explained. Thus, a sequence of microinstructions is generated from each macroinstruction in IR, also dependent upon status bits in the status register ST and other conditions. Addresses for operands, if needed, are contained in words from ROM 11 following the opcode and are transferred to MAL or MAH while the opcode stays in IR during this sequence.

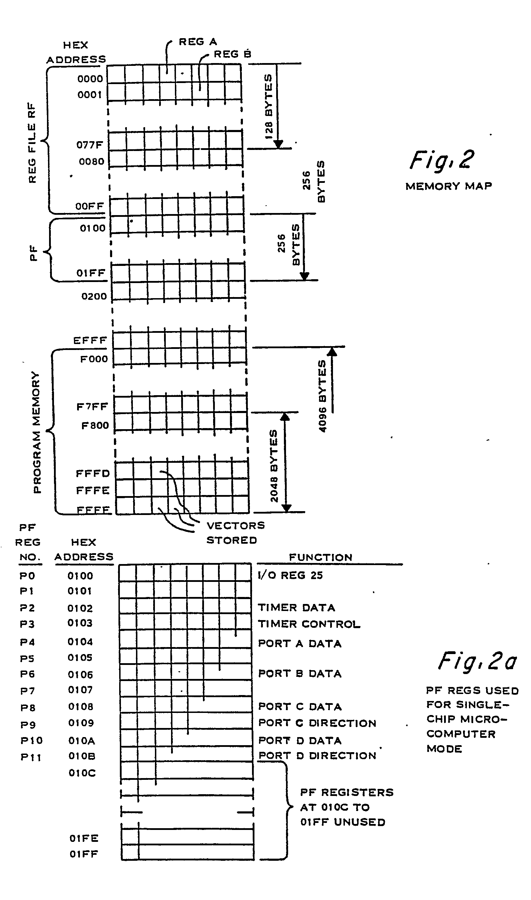

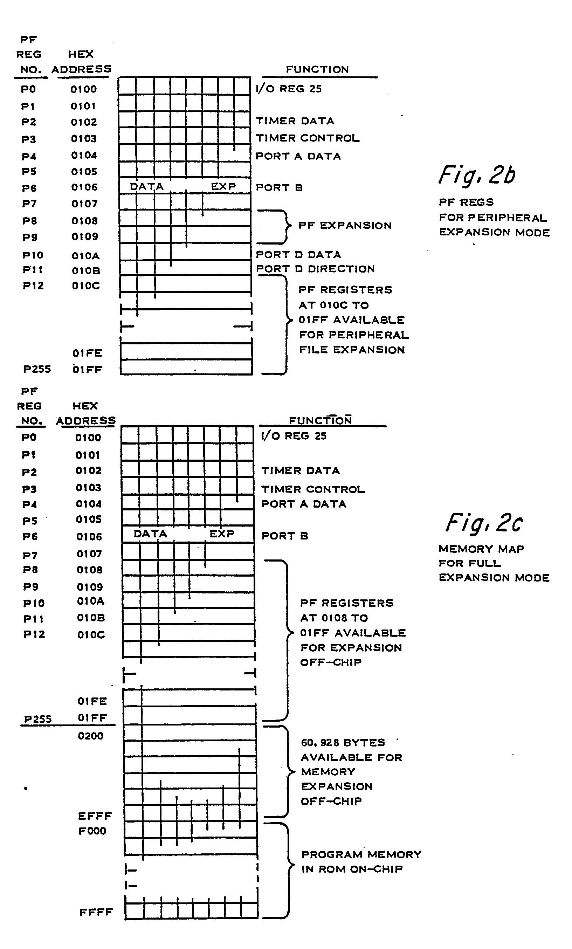

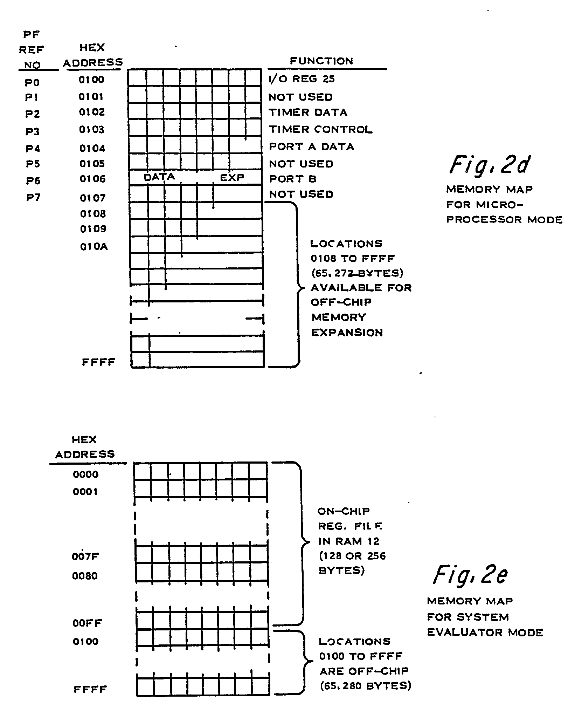

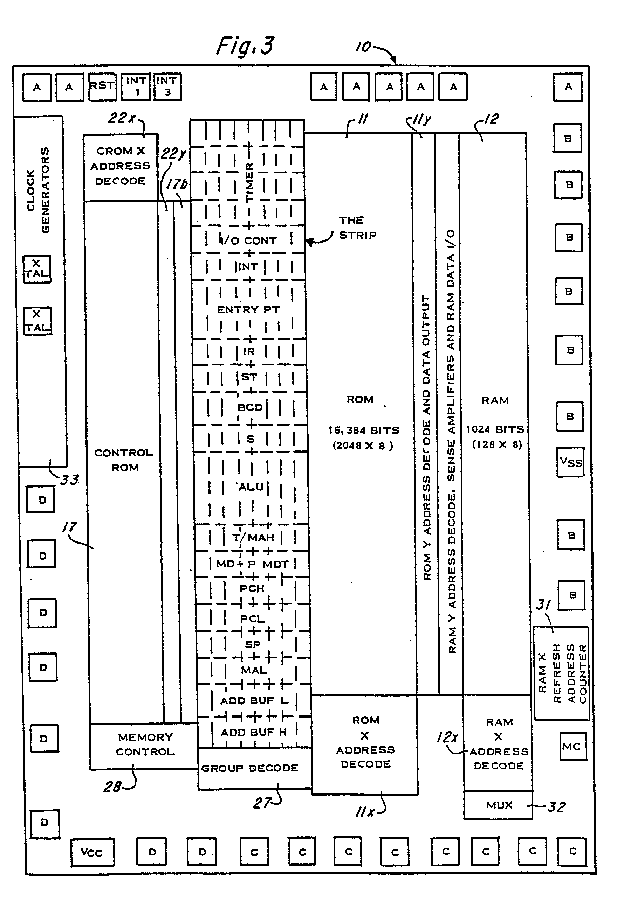

A map of the logical address space for the microcomputer of Figure 1 is shown in Figure 2. The example embodiment employs 8-bit AH and AL addresses, providing a 16-bit address, and so $2^{16}$ or 65,536 bytes are available in this space (often referred to as "64K" bytes where one "K" is 1,024). The addresses are shown in four hexidecimal digits, ranging from the first address 0000 to the last FFFF. In this description memory addresses will be given in hex, unless noted. A page is $2^8$ or 256 bytes, i.e. all addresses on a page are defined by AL and the page is selected to AH. The microcomputer 10 uses the zero page (addresses 0000 to 00FF) for the register file RF in RAM 12, the "one" page (addresses 0100 to 01FF) for the peripheral file PF, and the F0 to FF pages (addresses F000 to FFFF) for the program memory of ROM 11. Some of these spaces for RF and ROM 11 may not be populated, depending upon the size of the ROM and RAM chosen. Other space such as 0200 to EFFF is available for the expansion modes as will be explained.

In the microcomputer of Figure 1, the control circuitry responsive to the AH' and AL' busses and control bits 18 defines the way in which the CPU 13 accesses the peripheral file PF including external ports, timer, reset and interrupts, as well as memory control. An I/O and interrupt control register 25 at memory location 0100 of Figure 2 is loaded directly by the MD bus and is part of the ALU/register strip; this register contains two memory mode control bits which define the memory expansion modes as will be described, as well as interrupt masks and flags. A programmable timer and event counter is also included in this peripheral control circuitry, and comprises a counter 26, a register 26a which functions as start/stop control, input select and prescaler, a control 26b, and a capture latch 26c. These elements of the timer are accessed by the MD bus and are eight bits wide, so are advantageously constructed as part of the ALU/register strip. The counter 26 is a fixed divide-by-8 pseudorandom 8-bit shift counter which simply divides its input by eight. The input to the counter 26, which may be an internal clock or an external clock or event, goes through the prescaler part of the register 26a which is an additional 5-bit divide-by-N counter loaded (via a prescale register) from the MD bus with any number up to thirty-two. The 8-bit timer register 26g is loaded from MD with the desired final count, up to eight bits or 256. When this count is reached, an interrupt INT2 is signalled. The instantaneous count may be read out on MD via the 8-bit capture latch 26c without stopping an ongoing count in the counter 26; this is instigated by INT3.

In this peripheral control circuitry, a group decode circuit 27 and memory control circuit 28 receive the AH' and AL' address bits and three control signals 18 (#MEM, #WR and #MEMCNT) and produce controls which select between the ROM 11, RAM 12, ports A, B, C or D, the timer or I/O control, etc. for access by a given address. Only one of these is activated in any one cycle. The group decode 27 and memory control circuitry 28 likewise generate commands for controlling and/or selecting functions as will be explained.

Two interrupt input pins INT1 and INT3 are provided, in addition to the timer interrupt INT2. These inputs are connected to interrupt control circuitry 29 which is also responsive to the contents of the register 25. A reset input RST is used to zero or initialize the microcomputer, overriding any function or interrupt.

A mode control input pin MC connected as an input to the peripheral control circuitry provides a selection of the operating modes (along with the internally-loaded bit-7 and bit-6 of the I/O control register 25). Figures 2a to 2e are memory maps showing the unique parts of the address space for these modes; the register file address space RF remains the same as Figure 2 for all modes. The modes are: (1) single-chip microcomputer mode where all memory is on-chip in the ROM 11 and RAM 12 as in Figure 2 and the peripheral file PF is configured as in Figure 2a, this being the primary mode of operation; (2) a peripheral expansion mode of Figure 2b where some additional off-chip circuitry may be accessed in the PF space via ports B and C; (3) a full expansion mode of Figure 2c where almost 64K bytes of off-chip memory may be accessed by ports B and C, the RF and ROM being the same as Figure 2; (4) a microprocessor mode of Figure 2d where the on-chip ROM 11 is ignored and all program memory is off-chip, but the on-chip RAM 12 is used as Figure 2; or (5) the emulator mode of Figure 2e in which both the peripheral file PF and the on-chip ROM 11 are disabled and all I/O and program memory is off chip, accessed by ports B and C with the on-chip RAM 12 or RF being used as in Figure 2. The various modes allow a wide variety of different functions to be provided by one basic chip type without design, layout or microcode modifications, thus greatly reducing the cost. Input/output buffers 30 connect the ports A, B, C, D to the MD bus, as defined by direction control registers P7, P9, P11, for some modes and by the mode control arrangement via group decode 27 and memory control circuitry 28.

One of the important features of the microcomputer chip of Figure 1 is that the RAM 12 is of the dynamic type using one-transistor cells with transparent refresh. On-chip RAM for microcomputers is usually of the static or pseudo-static type; if the RAM is of the dynamic type as in Patent 4,074,351, then the refresh function may interfere with access by the CPU. In contrast, the microcomputer of Figure 1 contains a refresh address counter 31 which is self-incrementing and may produce a new 5-bit row address to the row address decoder 12X every machine cycle, so one row of the RAM is accessed for refresh if none is accessed by the CPU. If a memory 12 access cycle is occurring, however, the counter 31 is not incremented and the refresh address output of the counter 31 is not applied to the decoder 12X. The RAM 12 is of the folded-bit-line type with a memory bit and its complement on opposite sides of sense amplifiers 12S; i.e., dual memory bits are employed instead of dummy cells traditionally used in dynamic RAMs. In the 128 byte RAM of the example, $128 \times 8$ or 1024 bits are needed, and with two one-transistor cells per bit the RAM array 12 has 2048 one-transistor cells. The array is partitioned $32 \times 8 \times 4$, so the X decoder 12X is a one-of-32 select, the Y decoder 12Y is a one-of-4 select for each of the eight input/output bits of the RAM, and thirty-two sense amplifiers 12S are used. Of course, the RAM size can be doubled to use the whole zero page of Figure 2, in which case $256 \times 8 \times 2 = 4096$ cells are needed.

The strip architecture

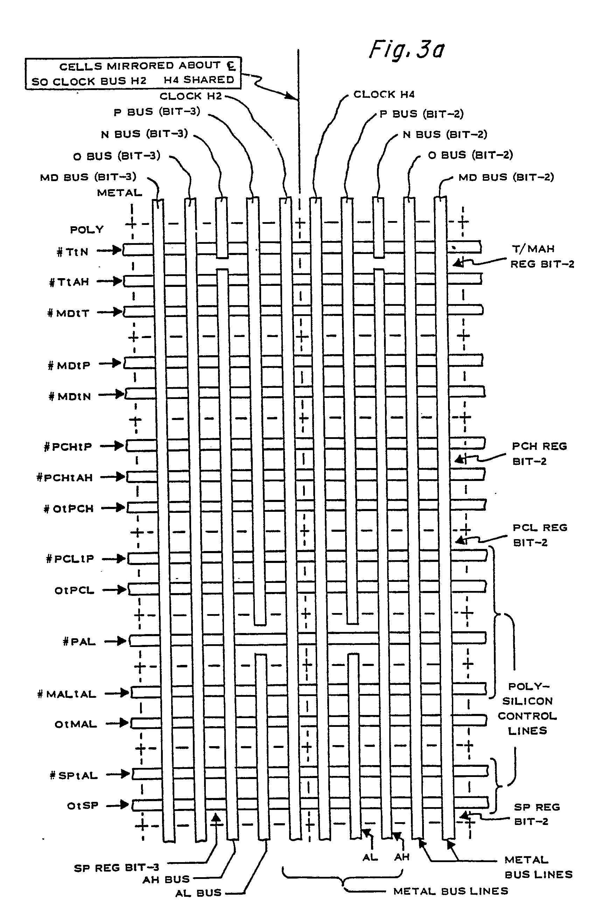

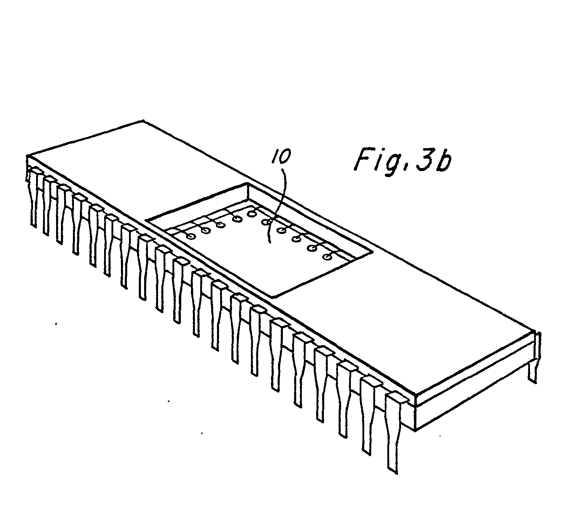

In Figure 3, the microcomputer of Figure 1 is illustrated in chip layout form. A major part of the area of the chip 10 is occupied by the memory including the ROM 11 and RAM 12 with their address decoders. The ROM 11 has associated with it an X address decoder 11X and a Y address decode and ROM data output circuit 11y of conventional design; eleven address bits are used to define one of 2048 eight-bit bytes in the ROM (twelve bits if a 4096 byte ROM is employed), so an address for the ROM needs both the MAL and MAH registers, i.e., address bits from both AL and AH busses. The RAM has an X address decoder 12X which selects 1-of-32 row lines, and a Y address decoder 12Y which selects 1-of-4 column lines, so only seven bits are needed for the RAM select (eight if a 256 byte RAM is used). Another major part of the chip area is the control ROM 17 and its associated X and Y decoders 22X and 22Y, and output buffers 17b. If fully populated, the number of bits in the control ROM would be 256 times the number of output lines 18. Only forty-five output lines 18 are needed for the example instruction set of Table A, and only 160 microinstruction addresses as in Tables B and C, so the control ROM is only $160 \times 45$ or 7,200 bits. The output ports A, B, C, and D each have eight bonding pads on the chip (total of thirty-two) for connection to external, and the areas of the chip around these bonding pads are occupied by the buffers 30 used for the ports. It will be noted that the port A is only used for input, so the space needed for the input buffers for this port is much less than for the remaining ports B, C, and D which require tri-state output buffers.

Between the ROM 11 and the CROM buffers 17b on the chip 10 of Figure 3 is the "strip" which is an array of rows (parallel to control lines 18) and columns (parallel with metal bus lines 16 and register/ALU bits 14, 15) containing all of the 8-bit registers, ALU bits, and like circuitry associated with the busses 16 and control lines 18. As set forth in prior application S.N. 210,109, filed November 24, 1980 by McDonough, Guttag and Laws, assigned to Texas Instruments, an important feature is that the ALU 14 and its associated registers IR, ST, S, T/MAH, PCH, PCL, SP, and MAL us described above are laid out on the MOS/LSI chip 10 in a regular strip pattern as seen in Figure 3. Other circuitry connected to the busses and having controls 18 shared by eight bits is also in the strip, such as entry point 21, address buffers 19, timer 26, I/O control register 25, etc. Each of these registers as well as the ALU contains eight bits or stages which are laid out in a pattern like memory cells, the bits arranged horizontally and aligned vertically as seen in Figure 3. The MD, AL, AH, O, N and P busses of Figure 1 are each eight parallel metal strips on top of the cells of the ALU and registers (rather than beside the registers as depicted in Figure 1), and all of the dozens of control lines 18 are horizontal polysilicon lines typically used as the control gates for transistors in the ALU 14 and its registers and like circuitry. The number of control lines 18 needed for the ALU 14 is greater than for a single register such as the MAL register, for example, and conveniently the space needed to lay out the ALU stages is greater than for a single register, so waste space in minimized. That is, the space needed in the control ROM 17 to generate the controls 18 is about the same as the space needed for the controlled circuitry. This layout arrangement is indeed advantageous because the ALU and registers fit alongside the control ROM with virtually none of the wasted space used merely for routing conductors in conventional construction of microprocessors. All bus lines MD, AL, AH, O, N and P, and all control lines 18 are routed over functional regions or cells of the chip rather than over unused silicon, and almost all 90 degree turns are produced inherently at functional cells rather than in conductor routing. In the prior devices, the control ROM, the registers, the ALU, etc., were islands of circuitry connected by busses or conductors. The enlarged view of Figure 3a shows a small part of the strip, two-bits wide, illustrating the metal bus lines and the polysilicon control lines 18 for an N-channel silicon gate MOS device made generally by a single-level polysilicon process according to U.S. Patent 4,055,444, assigned to Texas Instruments. Various contacts (not shown) would be made within each register bit or stage from metal to silicon or to polysilicon. It is significant to note that most of the connecting lines from registers to busses illustrated in Figure 1 are not physically lines or elongated conductors at all but instead are merely metal-to-silicon or metal-to-poly contact areas along the metal bus lines of Figure 3a. That is, routing of 8-bit sets of parallel conductors is minimized by the strip feature, and the size of the chip 10 is reduced. The busses 16 are staggered so that all six busses are not needed in any one part of the strip, and thus the pitch or maximum width of cells of the strip is minimized since the metal-to-metal spacing is a critical limiting factor in bit density. To this end, the placement of the registers 15 is such that the N bus need not co-exist in any register with the AL or AH busses, and the P bus ends where the AL bus starts, as illustrated in Figures 1 and 3a. Some of the clocks needed in the registers and ALU of the strip are run in metal lines like the busses 15 (H1 shown in Figure 3a) so these place further constraints on the density and make the strip concept and bus/register optimum placement more significant. Connections from MD to P or N busses are made by transistors located in the strip like a register and labelled MDtP, MDtN; since this logic requires eight parallel bits of transfer gates, tied to sets of eight parallel busses, and using CROM outputs 18 as controls, it fits well in the strip.

The CROM 17 fits alongside the strip to provide the controls 18 in the control-intensive areas of the ALU and register/bus connections, and alongside the entry point circuitry 21 where the address control and jump address lines 23, 24 are needed. The design is oriented toward the control ROM as the source of all controls rather than random logic, and the chip layout of Figures 3 and 3a illustrates that the area of the chip is dominated by the ROM, RAM and CROM with their decoders, and the strip containing a regular array of ALU/register bits, with little space occupied by other control logic. This design approach is enhanced by and enhances the microprogramming facility which makes the microcomputer 10 particularly easy to modify by changing the micro or macrocode.

The microcomputer 10 may be modified at three levels, plus the mode control. The first level is changing the ROM code of the ROM 11, and of course this is the most widely practiced modification. The ROM code is defined by a single mask in the manufacturing process as set forth for example in U.S. Patents 3,541,543, 4,208,726 or 4,230,504, assigned to Texas Instruments. The macroinstruction set may be supplemented (keeping basically the same microinstruction set), or the microinstruction set may be changed, both of these levels requiring changes in the CROM 17 code upon manufacture. The CROM code is defined by a single mask in manufacture, just as the ROM code, so physically it is just as easy to change the microinstruction set; however, the macro assemblers and micro assemblers (computer programs used as design aids for customers) then are different. In addition to these ways of altering the device 10, the sizes of the ROM and RAM may be increased to allow more complex algorithms to be programmed in the ROM code, and the size of the CROM 17 may be increased to provide more complex micro- and/or macro-instruction sets. It is important to note that the mode control MC (and bits 6—7 of register 25) allows changes without any type of physical or mask change; no fuse links or the like are needed.

System timing

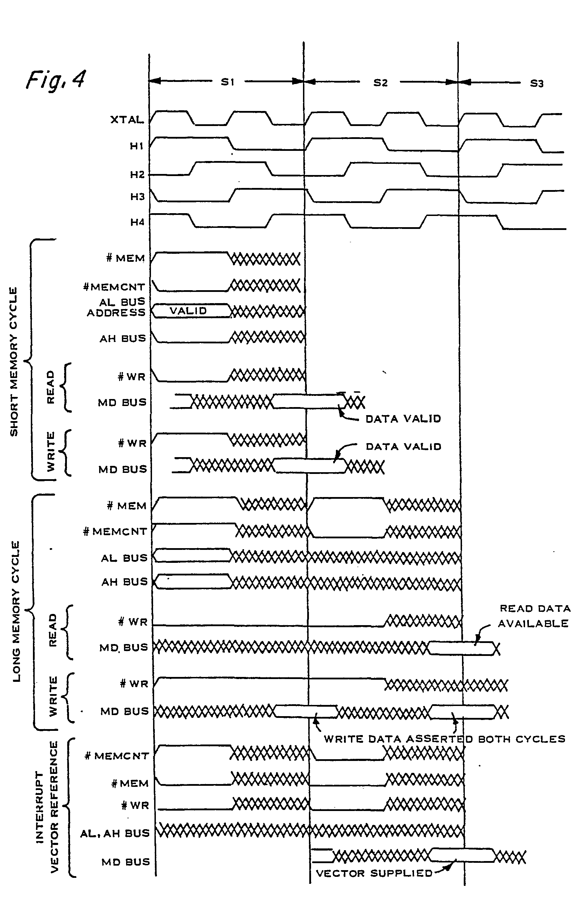

The microcomputer chip 10 operates from a basic clock frequency referred to as Xtal in Figure 4. This frequency of about 5 MHz is supplied by an internal oscillator 33 controlled by an external crystal coupled to two pads labelled Xtal in Figure 1 or 3. From the clock Xtal, clock generator circuitry 33 produces four basic overlapping half-cycle clocks H1, H2, H3 and H4 for each microinstruction cycle or state time S1, S2, etc., as seen in Figure 4. Each state time equals two complete cycles of the clock Xtal. H4 overlaps two state times.

Short memory cycles to access the RAM 12 are completed in one state time such as S1 of Figure 4;

#MEMCNT is low and all bits of the AH bus are low during H1, and the RAM address is valid on the AL bus while #MEM is high. The write control #WR is high for write or low for read. The data accessed is then valid on the MD bus during H4 at the end of the cycle, extending over into the beginning of the next cycle, so the data may be loaded into the registers T or IR at the end of a cycle or gated onto the P or N busses at the beginning of the next cycle.

All memory references to the register file RF in the RAM 12 use this short cycle; all other memory references (i.e., to the on-chip ROM 11, the peripheral file PF, and extended memory) require two microinstruction executions and are called long memory cycles as illustrated in Figure 4. For long cycles, the memory continue command #MEMCNT is high during the first state time and low during the second. The memory command #MEM must be high during H1 of both cycles, and the address valid on AH and AL during H1 of the first cycle. For read, the write command #WR is low from the beginning of the first cycle through H1 of the second, and the data is valid during H4 beginning at the end of the second cycle. For long write, #WR is high, and the write data is gated onto the MD bus for H4 of both first and second cycles.

Within a given state time or microinstruction cycle, the address on the AH' and AL' busses becomes valid during H2. This address is based on the address loaded onto AH and AL during H1. In the ROM 11, the array is precharged during H1 with all row or X lines going to Vss and all column or Y lines going to Vcc, then the ROM X address gated into the array from decoder 11X beginning at H3 and the ROM Y address coming valid at the beginning of H4, so the ROM output is valid at H4.

## The CPU

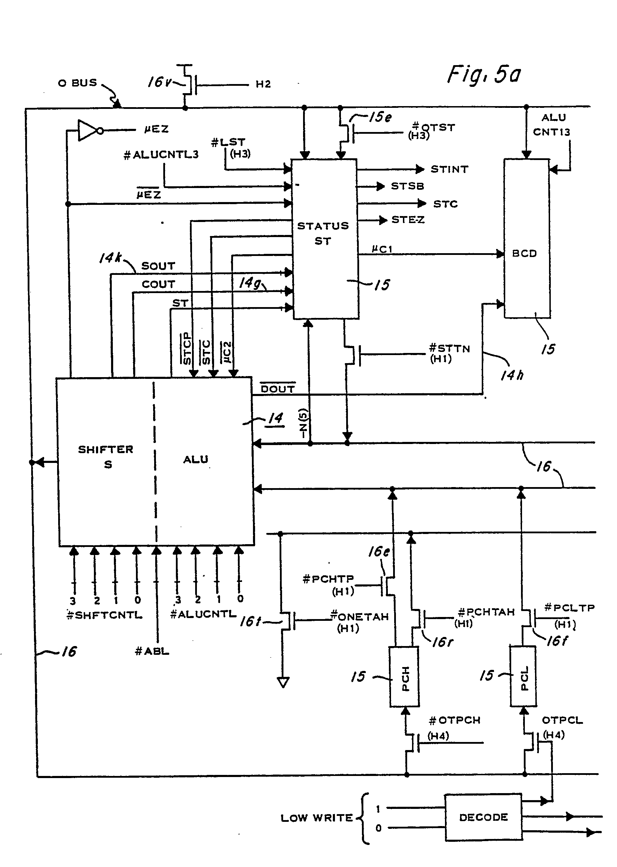

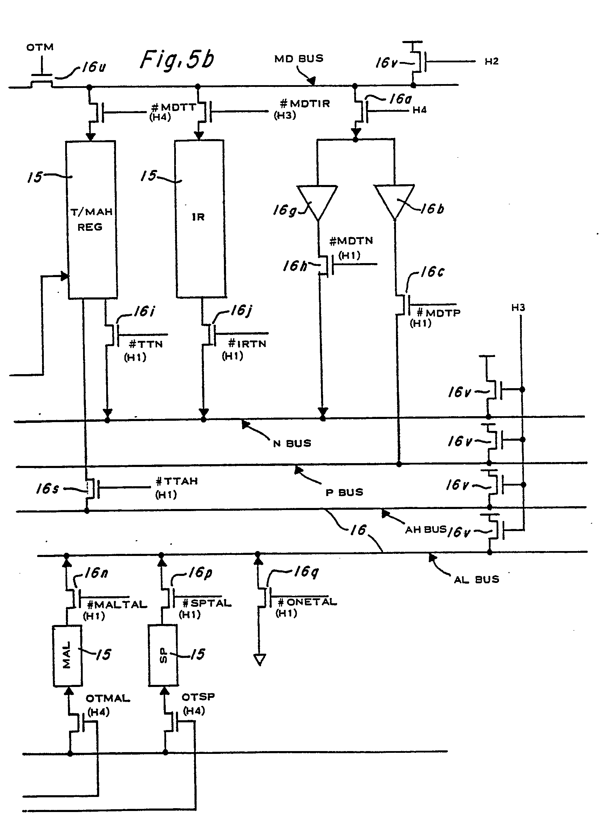

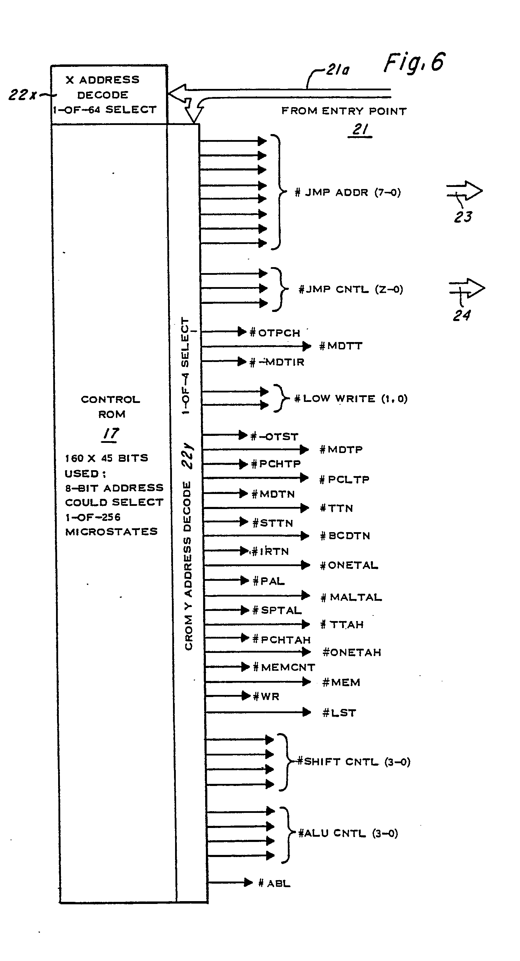

The CPU 13 in the microcomputer 10 of Figure 1 consists of the ALU 14, the registers 15 and the busses 16 controlled by the CROM 17. In Figure 5 a more detailed block diagram of the ALU and shifter S and the associated busses is shown, and Figure 6 shows the CROM 17 and its microinstruction output bits 18. Control of the ALU and access to the busses is defined entirely by these microinstructions or bits 18, identified in Figure 6 for the illustrative embodiment. An 8-bit address on lines 21a from the entry point circuitry 21 contains a 6-bit X address on lines 21X and a 2-bit Y address on lines 21Y. The lines 21X are connected to X decoder 22X which selects one of up to 64 X lines in the array of ROM bits of the CROM 17. The lines 21Y are connected to a Y decoder 22Y which selects 1-of-4 in each group of four Y lines (only forty-five groups used). Thus, for each 8-bit address on lines 21a, a different "microinstruction" is output on the lines 18; a microinstruction may have any number of the lines 18 active, but usually a combination of only a few lines 18 is active for a given microinstruction. Each line 18 goes to a buffer 17b to drive a higher capacitance load than the array output Y line itself would allow, and to clocked gates and other such logic as needed. All microinstruction bits (control lines 18) in Figure 6 and throughout this description are referred to with a prefix "#". Some bits are active low and thus have a minus sign prefix, like #−OtST. In the microinstruction bits of Figure 6, the letter "t" means "to", so #−OtST means "O bus to ST register", i.e., the gates connecting the O bus to the status register are activated by this bit. The eight bit jump address on the lines 23 is denoted #JmpAddr (7-0), while the 3-bit jump control on the lines 24 used for dispatch addressing is denoted #JmpCntl (2-0); these eleven bits are used in the entry circuit 21 to generate the next CROM address. All of the twenty-one bits 18 from #OtPCH down to #ONEtAH in Figure 6 control the access to registers 15 from busses 16. Of these, #LowWrite0 and #LowWrite1 are decoded to produce pseudo-microinstructions OtPCL, OtMAL and OtSP. The bits #ONEtAL and #ONEtAH place a "1" on the AL or AH busses to generate the B register address 0001 or the PF page address 0100 (hex) in a microinstruction. Default to all 0's on AL and AH is A register address in the register file. Connections between registers 15 and busses 16 are described in detail below. The #MEMCNT bit is a "memory continue" control for long memory cycles; the RAM 12 can be accessed for read or write in one state time, but the ROM 11 or peripherals in PF require two states, so for this reason control line #MEMCNT is active in the first state of every long memory cycle as seen in Figure 4. #MEMCNT is used to form several other control signals, and always identifies the first or second state of a long memory cycle. The #MEM bit signifies a memory cycle and is active whenever ROM 11, RAM 12 or external memory is accessed. The #WR bit is a write command, so if #MEM and #WR are active a memory write condition exists, while if #MEM is active and #WR is not, a memory read condition exists. The #−LST signal is a load status command for ALU operations; the status register ST can also be loaded from the O bus by the #−LST command. The ALU is controlled by nine bits labelled #ShiftCntl (3-0), #AluCntl (3-0) and #ABL; these controls will be described below in detail.

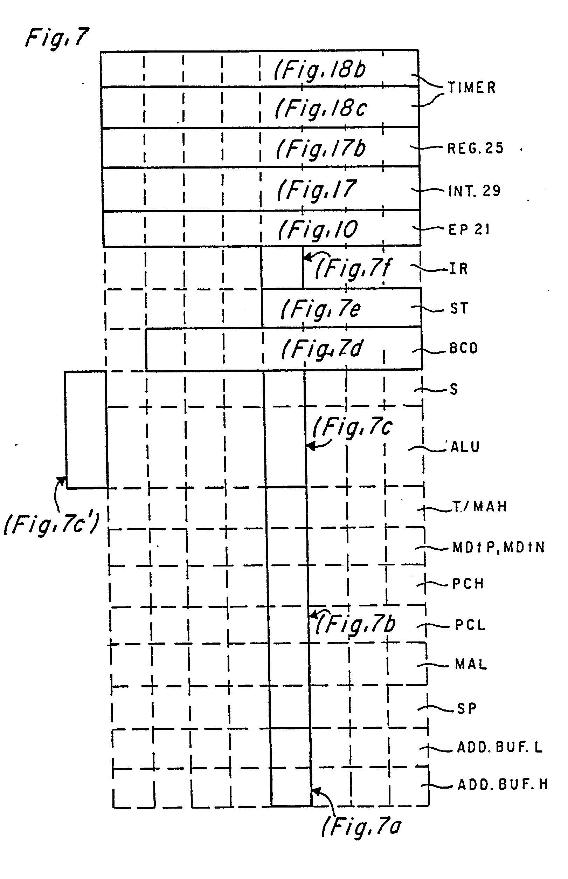

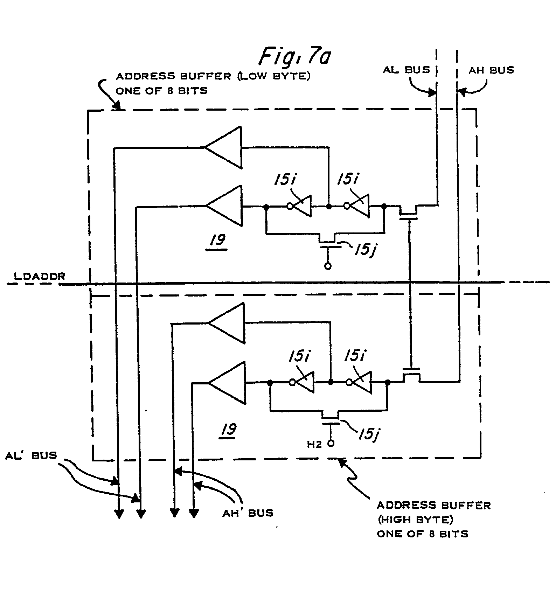

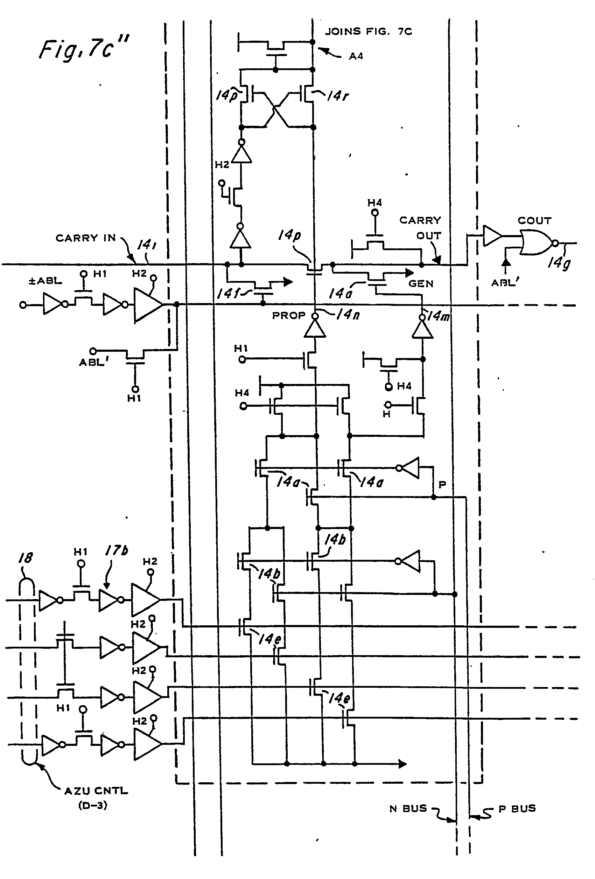

The microinstruction bits 18 are physically arranged in the order used in Figure 7a—7e rather than in the order shown in Figure 6, so that a control bit 18 is generated as close as possible to the point it is used in the strip.

The microinstruction control of access to the registers 15, busses 16 and ALU 14 will now be described in reference to Figures 5, 6 and 7a—7f.

## P Bus

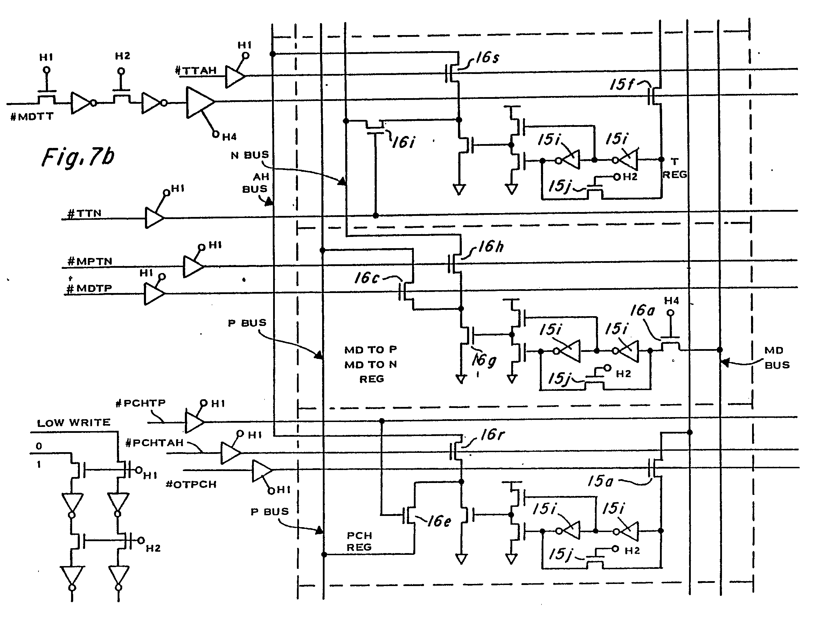

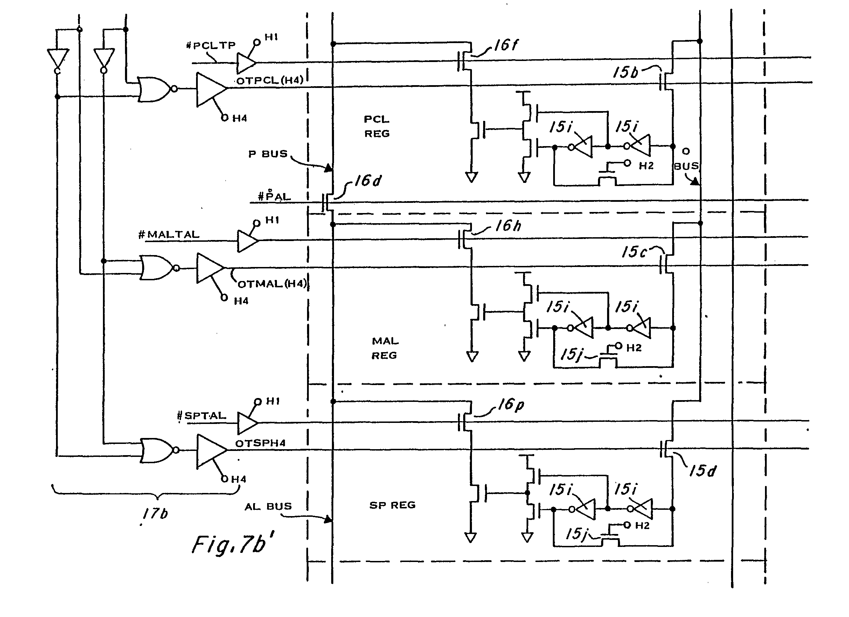

The P bus is one of the inputs to the ALU 14. It is called 'P' for "Positive", because in a subtract operation where the ALU 14 only computes P N the P bus contains the positive, or left-hand, operand. The P bus is loaded from the MD bus via transistors 16a, 16b, and 16c, loaded from the AL bus via transistor 16d (Figure 7b), loaded from the PCH register via transistor 16e, or from the PCL register via transistor 16f. Any of the AL bus sources may be placed on the P bus by gating them on the AL bus and asserting the #PAL microinstruction bit going to the gate of transistor 16d, connecting the P bus to the AL bus. If no source is specified, i.e., "default", the P bus assumes the value of all zeros. The P bus is loaded in the beginning of a microinstruction cycle, on phase H1. All of the possible P bus sources and the microinstruction bits or outputs 18 needed for each are as follows:

| P Bus source | Microinstruction bit(s) |
|---|---|
| MD Bus | #MDtP |
| PCH Register | #PCHtP |
| PCL Register | #PCLtP |
| MAL Register | #MALtAL,#PAL |
| SP Register | #SPtAL,#PAL |
| 01 Constant | #ONEtAL,#PAL |

**N Bus**

The N bus is the other input to the ALU 14. It is called N for "negative", since on the ALU subtract operation it contains the negative, or right-hand, operand. It is loaded from the MD bus via transistors 16a, 16g and 16h, loaded from the T/MAH register via transistor 16i, loaded from the IR register via transistor 16j, the status register ST via transistor 16k, or the BCD constant register via transistor 16m. It is understood, of course, that there are sets of eight of each of the transistors 16a to 16j, one for each of the eight bits of each bus and each register. Only four transistors in the sets 16k or 16m are needed. The source of the N bus is indicated directly by a bit in the microinstruction word, as shown below. If the bit is '1', the source is gated onto the N bus. If no source is specified, the N bus assumes the value of all zeros. The N bus is also loaded at the beginning of a microinstruction cycle, on phase H1.

| N Bus source | Microinstruction bit(s) |
|---|---|
| MD Bus | #MDtN |
| T Register | #TtN |
| Status register | #STtN |
| BCD Constant | #BCDtN |
| IR Register | #IRtN |

**AL Bus**

The AL or address low bus holds the lower eight bits of all memory addresses. This comprises the entire address for references to the register file RF in RAM 12, or the lower byte for references to the peripheral file PF, on-chip ROM 11 and extended memory in expansion modes. The AL bus is loaded during the phase H1. The sources of the AL bus are the MAL register via transistor 16n, the SP register via transistor 16p, or the constant 01 via transistor 16q. The constant is provided to efficiently address RAM location 01 which is the "B" register. If no source is specified, "default", the AL bus assumes the value 00 which is the A register in the RAM.

The AL bus may also be connected to the P bus via transistor 16d by asserting the #PAL microinstruction bit. In this manner, the AL bus sources (MAL, SP, and the constant 01) may be gated onto the AL bus and then onto the P bus to be operated on by the ALU. Likewise, the P bus sources (PCH, PCL, and MD bus contents) may be gated onto the P bus and then onto the AL bus via transistor 16d and #PAL to serve as low order address lines. The MD bus contents moved in this case are those present at the start of the microinstruction. In summary, all of the possible sources of the AL bus are listed below:

| AL Bus source | Microinstruction bit(s) |
|---|---|
| MAL Register | #MALtAL |
| SP Register | #SPtAL |
| PCL Register | #PCLtP,#PAL |
| PCH Register | #PCHtP,#PAL |
| MD Bus | #MDtP,#PAL |
| 01 Constant | #ONEtAL |

**AH Bus**

The 8-bit AH (Address High) bus contains the high-order byte of the address referenced by the CPU, loaded during H1. It may be loaded with the contents of the PCH register via transistor 16r, the T/MAH register via transistor 16s, or the constant 01 via transistor 16t. The high byte of the program counter is usually transferred to the buffers 19 for use in the peripheral control circuitry 20, and the T/MAH register is used to hold the high byte of other addresses in memory for use in a later microinstruction state. The constant 01 is provided to efficiently access addresses in the peripheral file in this embodiment (i.e. page-one addresses of the form 01xx in hex). If no source is explicitly specified in the microinstruction word, "default", the AH bus takes on the value 00; this is useful for referencing the on-chip register file RF in RAM 12. The sources of the AH bus are summarized below:

| AH Bus source | Microinstruction bit(s) |
| --- | --- |
| PCH Register | #PCHtAH |
| T/MAH Register | #TtAH |
| 01 Constant | #ONEtAH |

**O Bus**

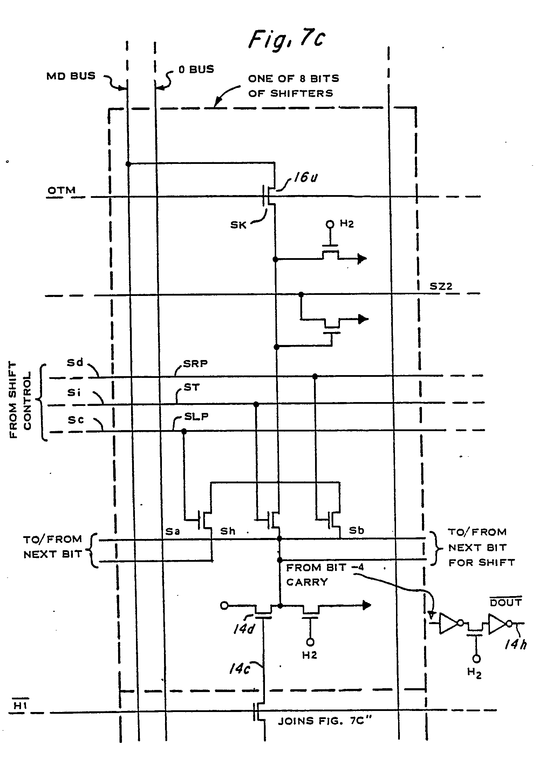

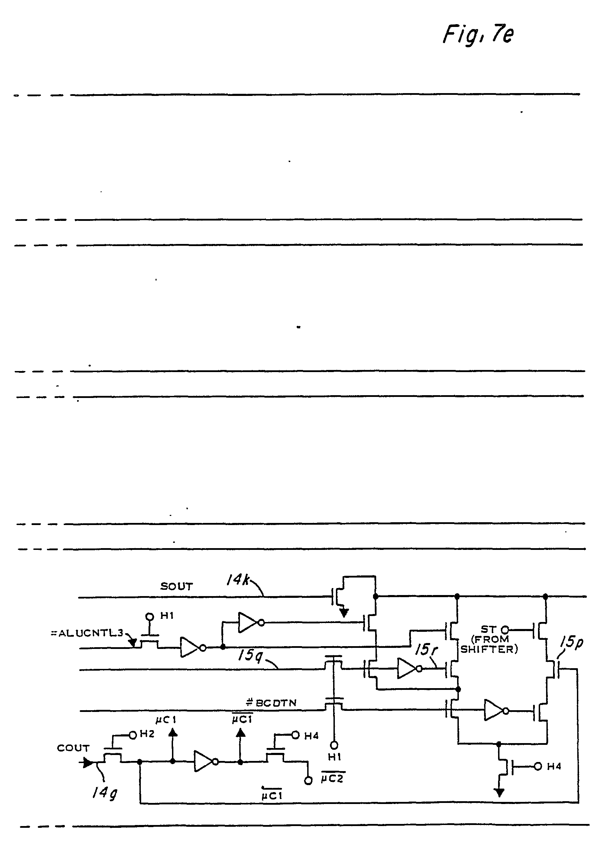

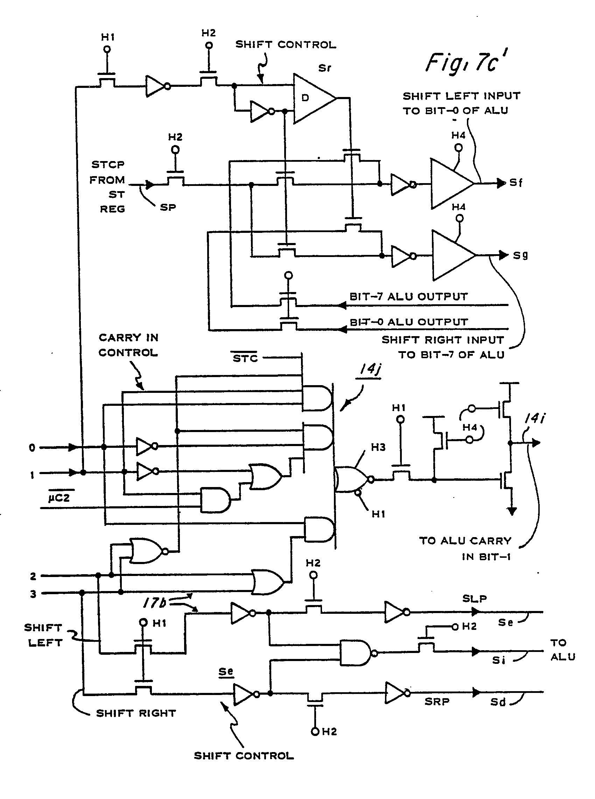

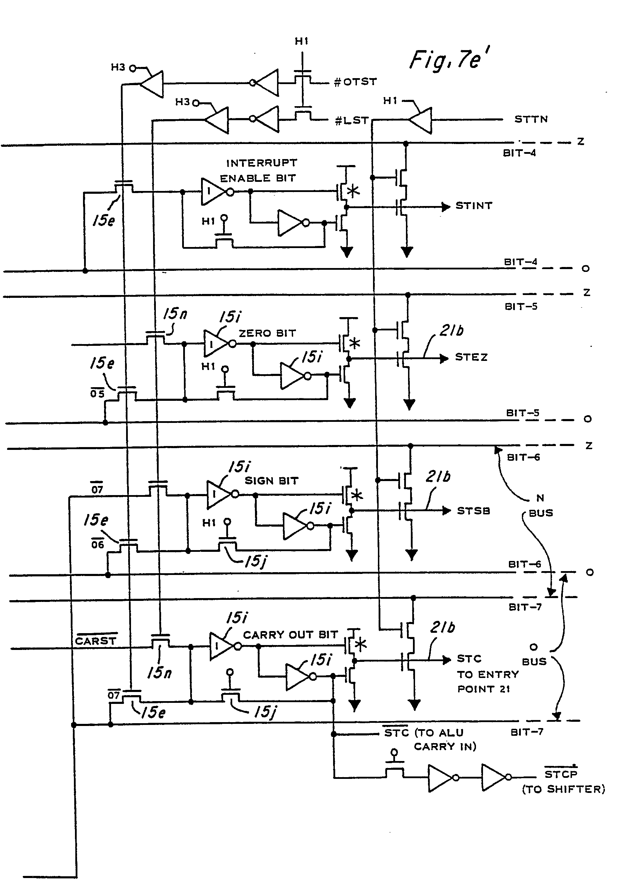

The O or output bus always contains the output of the ALU 14 and shifter S combination. As seen in Figures 5 and 7c, the O bus contents may be loaded onto the MD bus via transistors 16u and OtM, or into the PCH, PCL, MAL, or SP registers via sets of eight each of transistors 15a to 15d, respectively. The status register ST is loaded from O bus by the true-low microinstruction bit #−OtST and four transistors 15e (Figure 7e). The PCH register is loaded by the true-high microinstruction bit #OtPCH. The load signals for the other destination registers (MAL, PCL, SP) are encoded in the two microinstruction bits #LowWrite(1-0), according to the combinations of #LowWrite(1-0) below:

| #LowWrite (1) | (0) | O Bus destination | Pseudo-microinstruction bit |
| --- | --- | --- | --- |
| 0 | 0 | -No write- | |
| 0 | 1 | MAL Register | OtMAL |
| 1 | 0 | PCL Register | OtPAL |
| 1 | 1 | SP Register | OtSP |

There is no microinstruction bit that directly loads the MD bus from the O bus, because the MD bus contents are under control of the peripheral control circuitry 20. This transfer is controlled by the OtM signal sent from the circuitry 20 to the CPU on a control line. OtM is asserted on every memory write cycle (on-chip or extended memory), and on the first state of every long memory cycle.

The O bus may be gated onto the MD bus via transistors 16u by specifying the appropriate values of the #MEMCNT and #WR microinstruction bits so that OtM will be asserted by the peripheral control circuitry 20. The O bus contents may then be loaded into the T/MAH or IR register from the MD bus via transistors 15f and 15g.

In summary, the destinations of the O bus are described below:

| O Bus destination | Microinstruction bit(s) |
| --- | --- |
| ST Register | #−OtST |
| PCH Register | #OtPCH |
| PCL Register | OtPCL |
| MAL Register | OtMAL |
| SP Register | OtSP |
| T Register | #WR,#MDtT |
| IR Register | #WR,#MDtIR |
| Short mem cycle | #WR,#MEM |
| Long mem, cycle 1 | #MEMCNT,#WR,#MEM |
| Long mem, cycle 2 | #WR,#MEM |

The O bus is loaded during phase H4 of the microinstruction cycle. It contains the result of the ALU and shifters operations specified in the current microinstruction.

**MD Bus**

The memory data bus MD is a bidirectional bus that transfers data to and from the CPU 13. Data is valid on MD during phase H4 of the microinstruction cycle, which spans two microinstructions. For example, data may be read via transistors 16b from the MD bus onto the P bus at the beginning of a cycle H1 and the ALU results then loaded back onto MD via transistors 16u at the end of the cycle at H4.

At the beginning of a cycle, the MD bus contents may be loaded on the P or N busses via transistors 16c or 16h, as described earlier (Figures 5 or 7b). Thus the results of the previous microinstruction (or the data read from memory by it), may be loaded into the ALU 14.

At the end of a cycle, the MD bus may be loaded in one of three ways;
1) The O bus contents may be gated into the MD bus via transistors 16u and OtM;
2) The on-chip RAM 12 or ROM 11 may place data onto the MD bus; or
3) The peripheral control circuitry 20 may place data onto the MD bus from ports A, B, C or D, latch 26c, I/O control register 25, etc.

The MD bus contents are controlled by the peripheral control circuitry which sends the OtM signal to the CPU to signal loading the bus from the O bus. The CPU 13 requests use of the MD bus by asserting combinations of the #MEM, #MEMCNT, and #WR signals, as outlined above. The group decode and memory control 27, 28 in the peripheral control circuitry 20 sends signals to the on-chip ROM 11 and RAM 12 to control their accesses to the MD bus.

The timing of read and write accesses to memory is explained with reference to Figure 4. For short memory reads, the data on MD bus is available at the end of the same microinstruction cycle that initiated the read. Data on MD may be loaded into the T/MAH or IR registers during that microinstruction by specifying the #MDtT or #−MDtIR bits, respectively, or may be loaded into the P or N bus on the next microinstruction by specifying the #MDtP or #MDtN bits in the next microinstruction. For short memory cycle writes, the O bus data is placed on the MD bus, and the #WR control asserted.

For long memory reads, the desired address is placed on the AH and AL lines, and the #MEMCNT command asserted in the first of the two cycles required. At the end of the second cycle, the data is available on the MD bus. (By a command "Load Address", LDADDR, the memory address is latched in buffers 19 going to AL' and AH' and the peripheral control circuitry 20 on the first cycle, and need not be asserted on the second cycle.) For long memory writes, the address is specified in the first cycle, and the data is placed on the MD bus for the first and second cycles.

In summary, the destinations of the MD bus in the CPU 13 are described below:

| MD Bus destination | When loaded | Microinstruction bit(s) |
|---|---|---|
| T/MAH Register | End of cycle | #MDtT |
| IR Register | End of cycle | #−MDtIR |
| P Bus | Start of cycle | #MDtP |
| N Bus | Start of cycle | #MDtN |

The MD, P, N, AH, AL and O busses are precharged on H2 or H3 by transistor 16v as indicated.

**ALU Operation**

The arithmetic logic units or ALU 14 as seen in block form in Figure 5 and in detail in Figures 7c and 7c' accepts as inputs the values on the P bus via transistors 14a and N bus via transistors 14b. The ALU outputs its result to the shifter S during H4 via line 14c and transistor 14d. Its operation is controlled by the #AluCntl(3-0) bits inputted via buffers 17b and transistors 14e, and by the #ABL bit going to transistors 14f, both from the current microinstruction. The ALU operates on the values loaded on the P and N busses during H1 of the current microinstruction, and produces an 8-bit ALU output on lines 14c which is input to the shifter S, and also produces two carry bits: Cout on line 14g, an arithmetic full byte carry bit, and Dout on line 14h, a 4th-bit half-carry bit used by the decimal adjust circuitry in the BCD constant register for binary coded decimal operations. The available operations of the ALU controlled by transistors 14e and 14f are defined below:

| #AluCntl | | | | | ALU Output | |
| 3 | 2 | 1 | 0 | #ABL | on lines 14c | Operations |
| --- | --- | --- | --- | --- | --- | --- |
| 0 | 0 | 0 | 0 | 0 | P+N+Cin | Add |
| 0 | 0 | 0 | 0 | 1 | P XNOR N | Exclusive NOR |
| 0 | 0 | 0 | 1 | 1 | P AND N | AND |
| 0 | 0 | 1 | 0 | 1 | (NOT P) OR N | OR |
| 0 | 0 | 1 | 1 | 1 | N | Pass N |
| 0 | 1 | 0 | 0 | 1 | P OR (NOT N) | OR |
| 0 | 1 | 0 | 1 | 1 | P | Pass P |
| 0 | 1 | 1 | 0 | 1 | FF(hex) | all 1's |
| 0 | 1 | 1 | 1 | 1 | P OR N | OR |
| 1 | 0 | 0 | 0 | 1 | P NOR N | NOR |
| 1 | 0 | 0 | 1 | 1 | 00 | All 0's |
| 1 | 0 | 1 | 0 | 1 | NOT P | Invert P |
| 1 | 0 | 1 | 1 | 1 | (NOT P) AND N | AND |
| 1 | 1 | 0 | 0 | 1 | NOT N | Invert N |
| 1 | 1 | 0 | 1 | 1 | P AND (NOT N) | AND |
| 1 | 1 | 1 | 0 | 1 | P NAND N | NAND |
| 1 | 1 | 1 | 1 | 0 | P−N−1+Cin | Subtract |
| 1 | 1 | 1 | 1 | 1 | P XOR N | Exclusive OR |

The carry-in bit Cin on line 14i of the ALU 14 is specified by the #ShiftCntl(3-0) bits 18 of the microinstruction. For operations requiring no shifting of the ALU contents, #ShiftCntl(3,2) bits are zero and the possible carry-in bits are defined in logic 14j of Figure 7c' as follows:

| #ShiftCntl | | | | ALU Carry in on |
| 3 | 2 | 1 | 0 | line 14i |
| --- | --- | --- | --- | --- |
| 0 | 0 | 0 | 0 | 0 |
| 0 | 0 | 0 | 1 | 1 |
| 0 | 0 | 1 | 0 | uC; micro carry bit |
| 0 | 0 | 1 | 1 | STC; status carry bit |

The micro carry bit uC is the carry out Cout on line 14g from the ALU operation of the immediately preceding microinstruction. This is not the same as the shift-out bit Sout on line 14k from the shifter S operation of the previous microinstruction. The status carry bit STC is the carry bit of the status register ST.

The first section of each ALU bit produces a "generate" on line 14m and/or a "propagate" on line 14n. The arithmetic carry-out Cout bit from the ALU 14 on line 14g is generated and/or propagated by transistors 14f, 14p and 14q, depending upon #ABL, and if '1' is there is a carry-out during an add or subtract operation in the ALU. For the add operation, Cout=1 indicates there was a carry, i.e. the sum of the (unsigned) operands exceed $2^8$. For the subtract operation, Cout=0 indicates there was a borrow, i.e., the P operand was lower than the N operand (unsigned). For all other operations (i.e. logical operations), Cout on line 14g

11

is equal to 0. Cout is sent via line 14g to the status register ST circuitry for possible loading into STC, the status carry bit. The decimal half-carry Dout is sent via line 14h to the BCD constant register for use in generating a constant for decimal arithmetic correction. In each bit of the ALU, the propagate bit on line 14n and a carry-dependent bit 14p' are inputs to an exclusive-or circuit 14r, which produces the output 14c.

As an example of ALU operation, an add operation with zero carry in (#AluCntl and #ShiftCntl all zeros) will cause the ALU to calculate the sum of the P and N bus contents. To calculate the difference between the P and N bus contents, #AluCntl=1111 and #ShiftCntl=0001. A '1' must be carried in for this subtract since no borrow was desired. As a complete example, the following two microinstructions read the current byte addressed by the PCL and PCH registers, place it in the T/MAH register, and increment the PCL and PCH registers:

First microinstruction cycle:

| Bit(s) | Operation(s) |
|---|---|
| #PCLtP,#PAL | Place PCL on AL bus via P bus |
| #CPHtAH | Place PCH on AH bus |
| none (default) | Place all zeros on N bus |
| #AluCntl=0000, #ShiftCntl=0001 | Adds P and N with carry uC) to increment PCL by 1 |
| #LowWrite-10 (OtPCL) | ALU output goes back to PCL with no shift, via O bus |
| #MEMCNT,#MEM | 1st cycle of long read |
| #Jump Addr XXXXXXX | Go to this CROM address for second microinstruction cycle |

Second microinstruction cycle:

| Bit(s) | Operation(s) |
|---|---|
| none (dont' care-AH,AH) | The contents of AH and AL busses were latched in buffers 19 on the first cycle |
| #PCHtP | Place contents of PCH register on P bus |
| none (default) for N | Place all zeros on N bus |
| #AluCntl=0000, #ShiftCntl=0010 | Add the micro carry uC from the PCL increment in first cycle |
| #OtPCH | ALU output via O bus (no shift) is placed back in PCH register |
| #MEM | Memory read continues |
| #MDtT | Place the byte read into the T/MAH register |
| #Jump Addr XXXXXXX #Jump Cntl XXXX | Go to next instruction |

12

EP 0 063 458 B1

Notice that an increment was done in the first cycle by using an ALU carry-in of '1'. The second instruction incremented the high byte of the program counter in PCH only if the micro carry bit (uC) generated in the first cycle was '1'.

Shifter operation

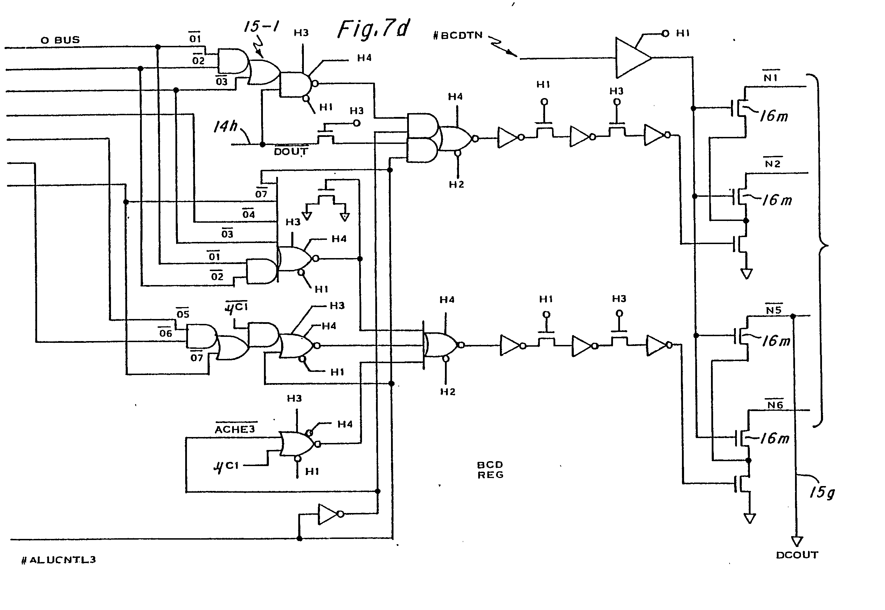

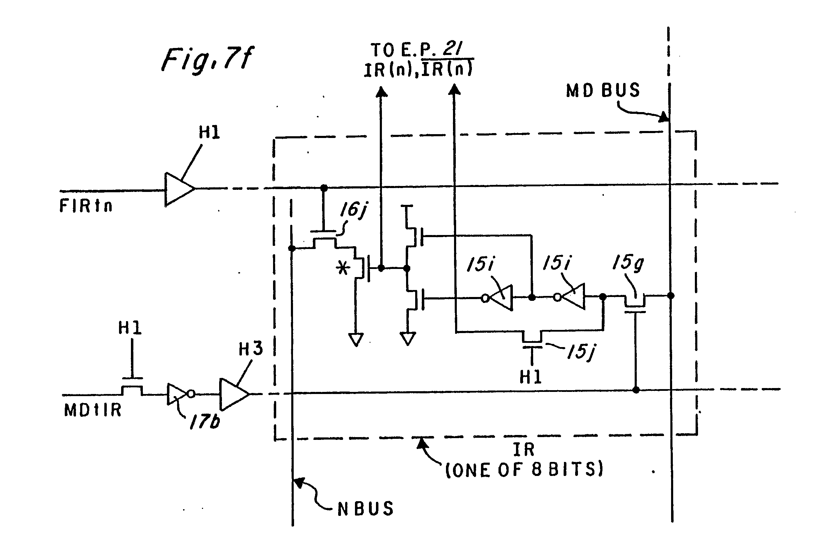

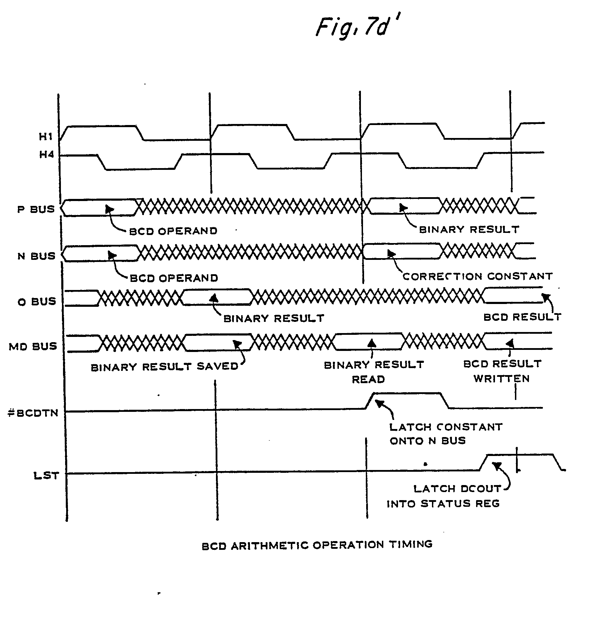

The shifter S of Figures 5 and 7 performs a variety of 1-bit shift operations on the outputs 14c of the ALU 14. The #ShiftCntl(3-0) bits on control lines 18 to the ALU control the following entities:

1) the ALU carry in bit Cin via logic 14j and input line 14i;

2) the shift direction left or right via transistors Sa or Sb, left and right control lines Sc and Sd (or straight on Si), and logic Se; and

3) the bit shifted in via lines Sf and Sg.

The following describes the various combinations of shift control lines:

| #ShiftCntl | | | | ALU | Shift | Shift-in |
|---|---|---|---|---|---|---|
| 3 | 2 | 1 | 0 | Carry in | direction | bit |
| 0 | 0 | 0 | 0 | 0 | | — |
| 0 | 0 | 0 | 1 | 1 | No | — |
| 0 | 0 | 1 | 0 | uC | Shift | — |
| 0 | 0 | 1 | 1 | STC | | — |
| 0 | 1 | 0 | 0 | 1 | | ALU(7) |
| 0 | 1 | 0 | 1 | 0 | Shift | ALU(7) |
| 0 | 1 | 1 | 0 | 1 | Left | STC · |
| 0 | 1 | 1 | 1 | 0 | | STC |
| 1 | 0 | 0 | 0 | 1 | | ALU(0) |
| 1 | 0 | 0 | 1 | 0 | Shift | ALU(0) |
| 1 | 0 | 1 | 0 | 1 | Right | STC |
| 1 | 0 | 1 | 1 | 0 | | STC |
| 1 | 1 | x | x | x | Invalid | — |

For #ShiftCntl=00xx, no shifting is performed and the transistors Sh are turned on by Si and logic Sj, so the ALU output bits go to transistors Sk as inputs to the O bus; the ALU carry-in bit 14i is as described in the ALU description, above. For #ShiftCntl=010X, the ALU output is rotated left via transistors Sa, with the least significant bit, ALU(1), shifted in via line Sf. For #ShiftCntl=011x, the ALU output is rotated left through the status carry bit, STC, via lines Sm and 14k. For #ShiftCntl=100x, the ALU output is rotated right via transistors Sb, and for #ShiftCntl=101x, the output is rotated right through the status carry bit in ST via lines Sn, Sp, Sq and logic Sr. In each case, #ShiftCntl(1) indicated the SLU carry-in bit.

The shift-out bit Sout on line 14k shifted out in a rotate instruction is sent to the status register ST. It will be loaded in ST as the new status carry bit STC if the #—LST microinstruction bit is set.

IR Register

Referring to Figures 5 and 7a, the 8-bit instruction register IR is a register intended to hold the current machine opcode (one of the opcodes or first bytes of the Table A instructions). The opcode is loaded through transistors 15g from the MD bus by the #—MDtIR bit in a microinstruction. IR may be loaded onto the N bus with the #IRtN bit through transistors 16j.

The output of IR, includes true outputs IR0 to IR7 and complement outputs —IR0 to —IR7, all on lines 21b; this output primarily is used in the entry point circuit 21 as will be described.

Each of the bits of the register 15 of Figure 7 basically consists of two inverters 15i with the output coupled back to the input via a transistor 15j. All transistors 15j are clocked on H2 except for IR and ST in which the transistor is clocked on H1.

13

Status register

The status register ST of Figures 5 or 7e is a 4-bit register indicating various conditions of the machine. Each bit of the status register has a special meaning, and has separate circuitry devoted to it. Only bits 4—7 of ST are used in this example, but other embodiments could use additional bits.

STC or the "C" bit referred to in instructions of Table A is the status carry bit. It holds either the carry-out of the ALU 14 from line 14g, the shift-out of the shifter S from line 14k, or the decimal arithmetic carry-out from line 14h. STSB is the status sign bit ("N" in Table A), and contains the most significant bit of the O bus contents. STEZ is the status equal to zero bit, and contains a '1' when all bits of the O bus are zero which is detected by transistors Sz and line Sz2 in shifter S. STINT is the status interrupt enable bit. Bits 3-0 of the status register are not used in this embodiment but may be used in expanded versions of the device; the value of these bits wherein the ST register is loaded onto the N bus is undefined.

The status register bits may be modified in one of two ways:

1) by asserting #—OtST, all bits may be replaced by the contents of the O bus via transistors 15e; or

2) by asserting #—LST the STC, STSB, and STEZ bits may be set according to their particular input circuitry via transistors 15n (the STINT bit is unaffected in this case).

There is no way to individually load the STC, STSB, and STEZ bits; they are loaded together via transistors 15n and #—LST. This feature permits an efficient implementation of the status logic, typically a very costly item (in space used) in single-chip microarchitectures. The special circuitry defining the value of the STC, STSB, and STEZ register bits is described in the following paragraphs.

When the #—LST signal is asserted, the STC bit will be loaded from one of three sources:

1) from the ALU arithmetic carry-out bit Cout on line 14g, via transistors 15p and 15n. Cout is the carry/borrow bit generated by the ALU on arithmetic operations. Cout is loaded if no shifter S operation is specified, i.e. #ShiftCntl=00xx.

2) from the shifter S shift-out bit Sout on line 14k, via transistor 15n. This is the bit shifted out on shifter operations. If a shifter operation is specified (i.e. #ShiftCntl other than 00xx), then Sout is loaded into the carry bit.

3) from a BCD decimal carry/borrow-out bit on line 15q and transistor 15r. This is the carry bit computed by the decimal adjust circuitry within the BCD constant register. It is loaded into the STC status carry bit if the #BCDtN bit is set, indicating a decimal adjust constant is loaded onto the N bus.

When the #BCDtN microinstruction bit is present, indicating a decimal adjust operation, no shift should be applied to the ALU output.

When #—LST is asserted, the input to the STSB bit is bit-7 of the O bus, the most significant bit of the O bus, via transistor 15n.

When #—LST is asserted, the input to the status equal to zero STEZ bit is the micro equal-to-zero bit, uEZ from the shifter S, derived from the transistors Sz. The uEZ bit is simply the logical NOR of all O bus lines. That is, if all O bus line are zero, the uEZ is set to '1'. Otherwise, it is set to '0'.

The status interrupt enable STINT bit may only be modified by loading the O bus contents into the status register ST via transistor 15e when #OtST is asserted. The STINT bit corresponds to bit-4 of the O bus in this case. STINT is output from the CPU 13 to the peripheral control circuitry 20 on a control line from the CPU. If STINT=0, the circuitry 20 will not pass on an interrupt to the CPU via the IACT control line. If STINT=1, the IACT control is asserted by circuitry 20 on an interrupt. By dispatching on the IACT bit, the microcode is able to test for interrupts.

All of the status bits may be loaded from the status register ST to the N bus via transistors 16k. The STEZ, STSB and STC bits go to the entry point circuit 21 via lines 21b.

Microinstruction sequence control with dispatching

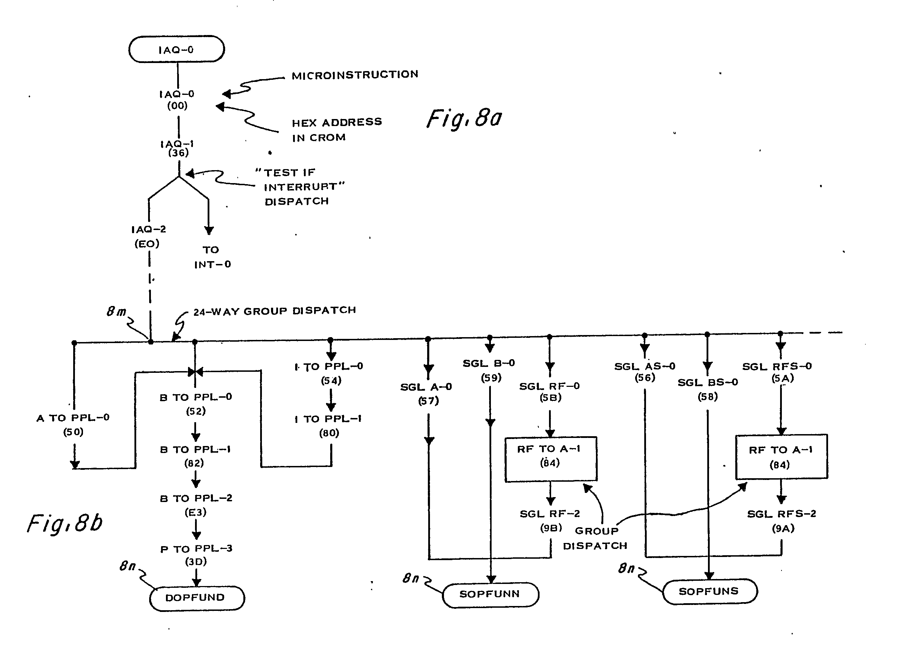

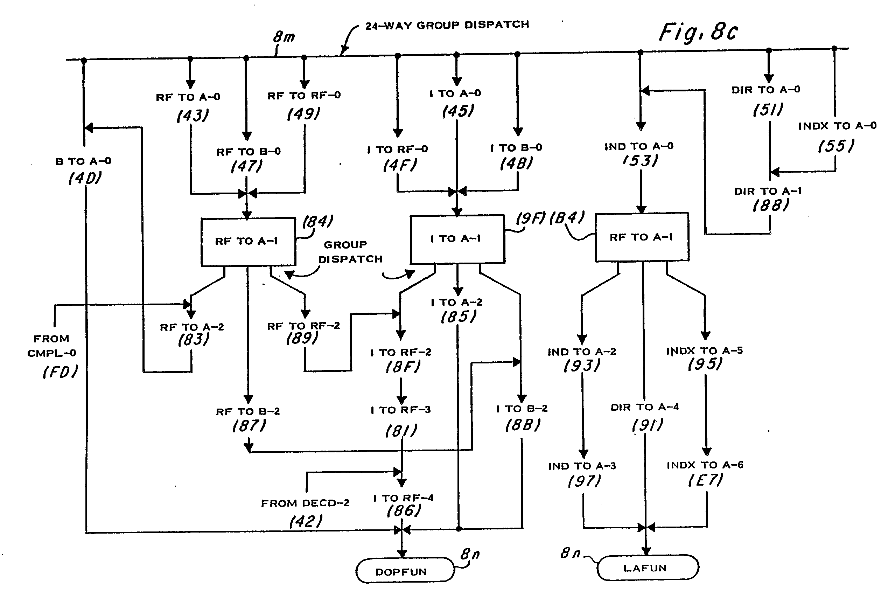

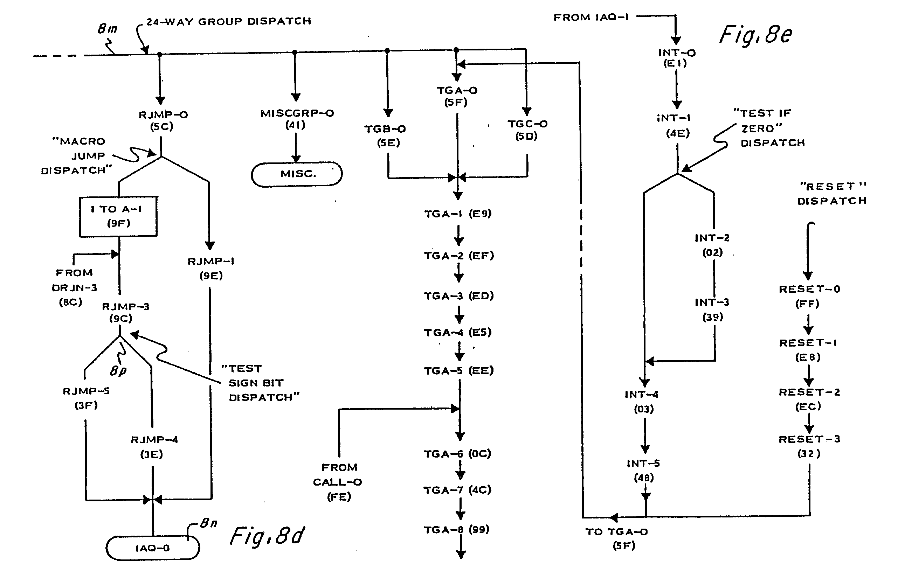

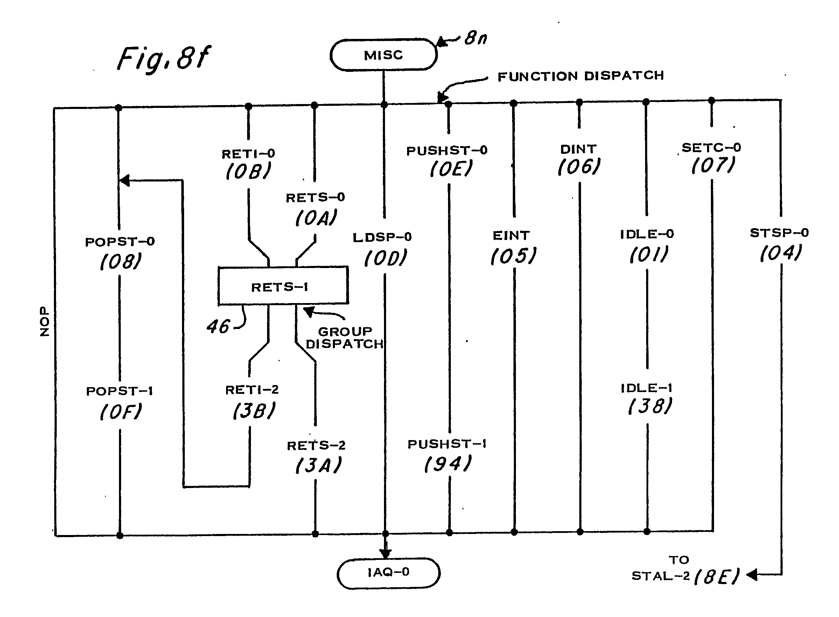

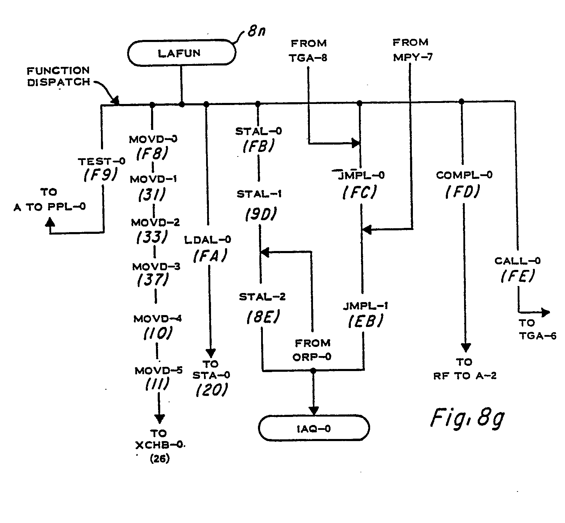

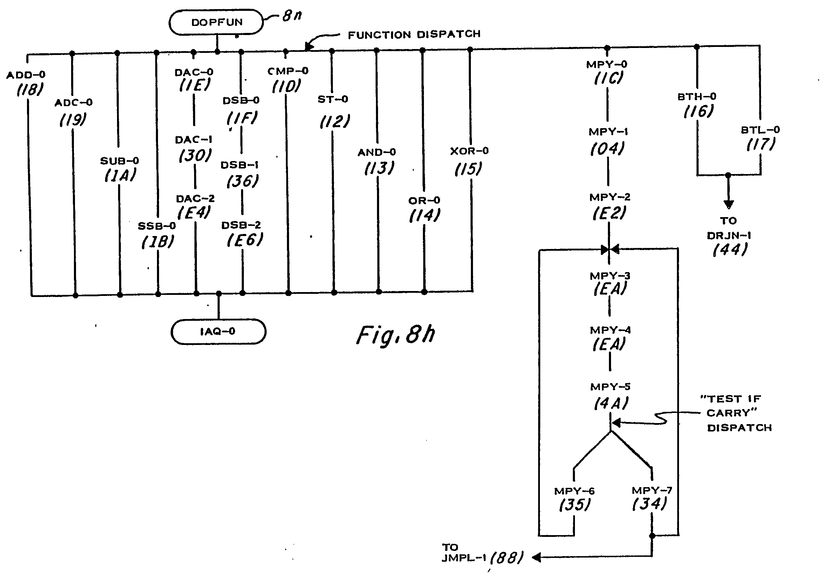

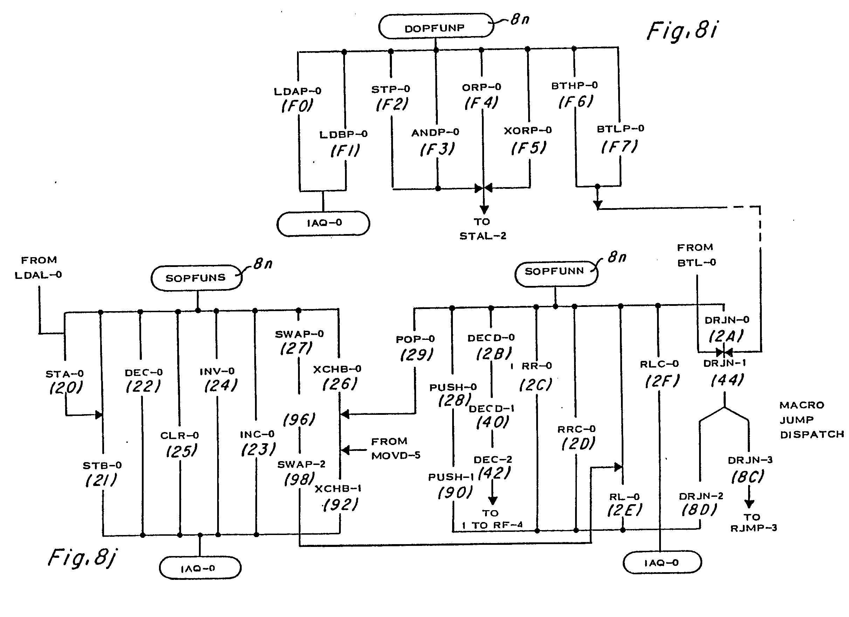

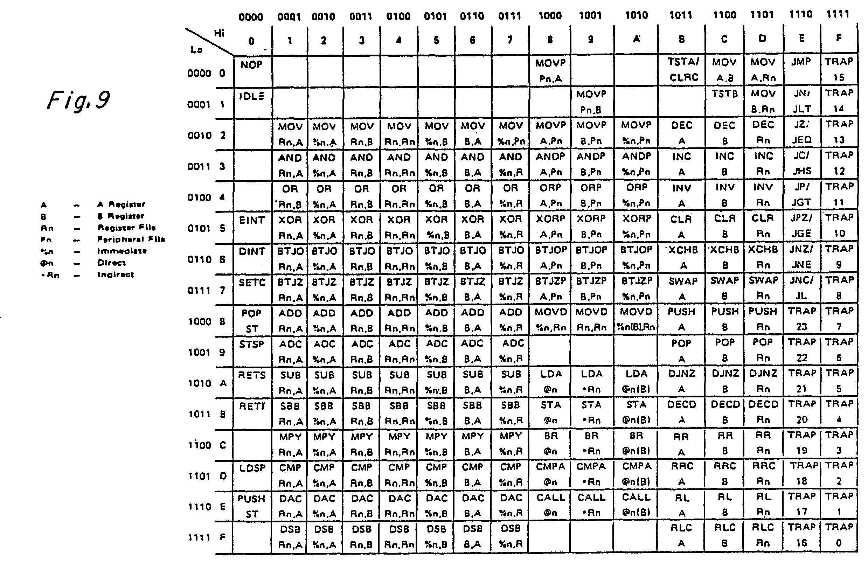

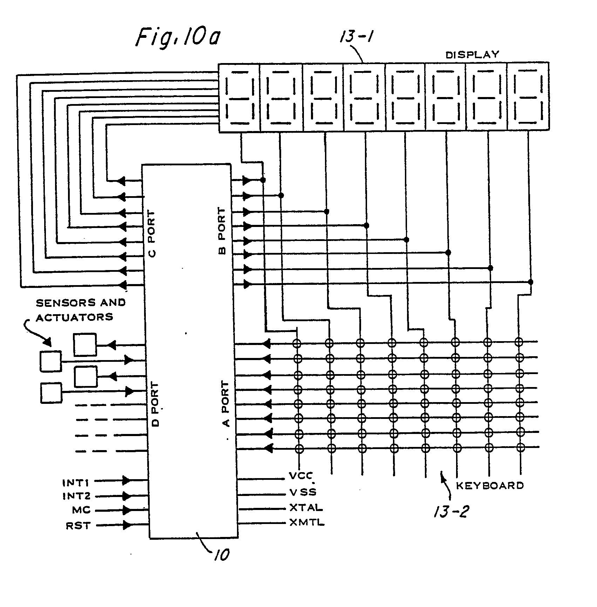

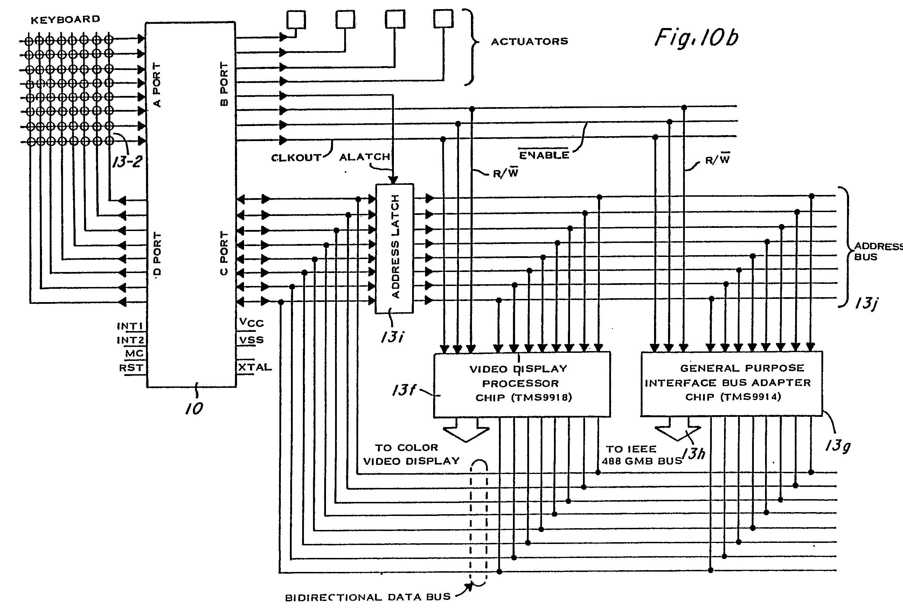

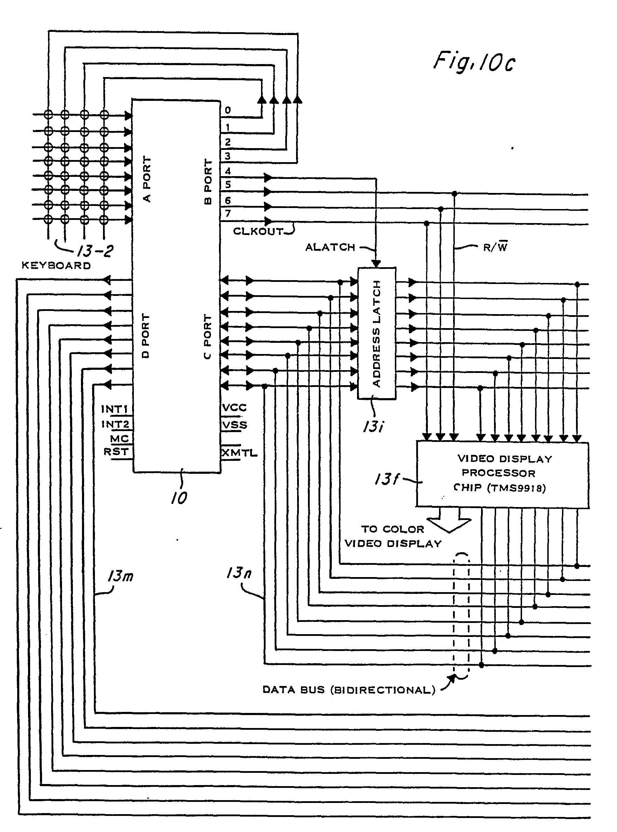

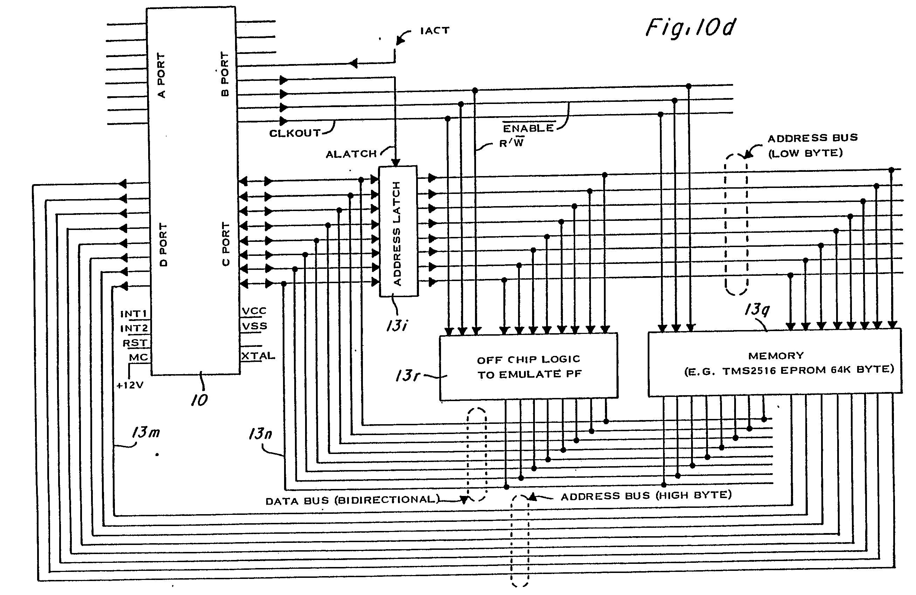

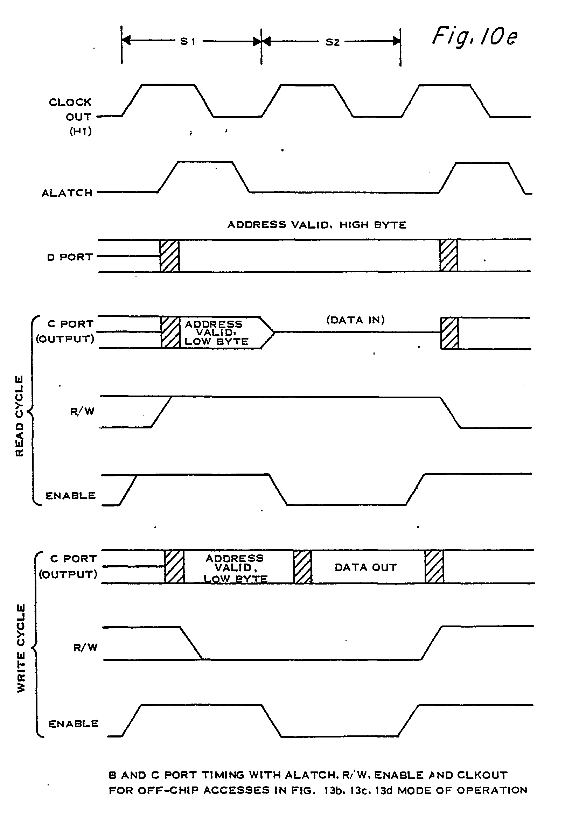

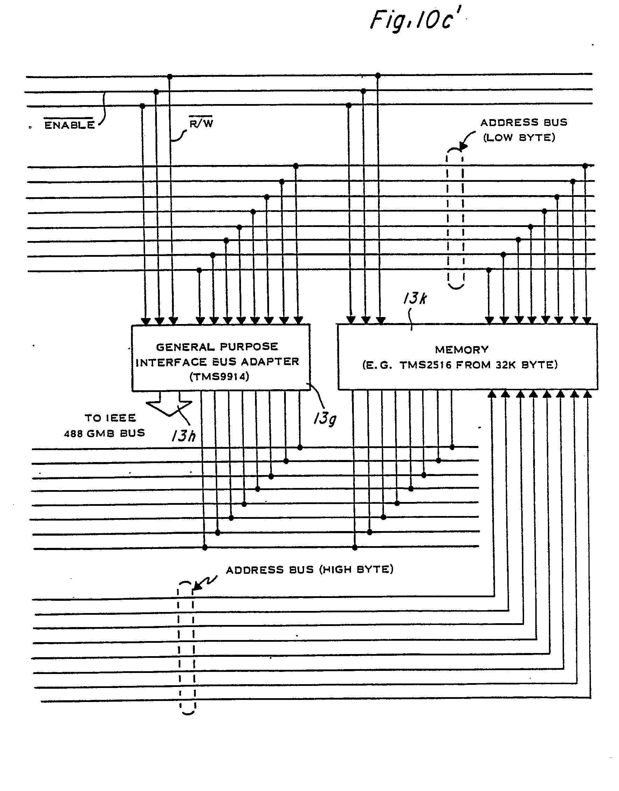

The micro architecture of the invention including entry point circuit 21 and CROM 17 is designed to dispatch on various subfields of the IR contents, providing for the execution of appropriate microcode as in Figure 8 and Table B and C for each machine opcode or Table A instruction. Figure 9 shows a map of the opcodes. The opcode in IR may be considered to have two possible formats, and the entry point circuit 21 seen in detail in Figure 10 responds to these formats to produce the address on lines 21a:

Format 0 is indicated by a '0' in IR(7), the most significant bit of the IR register (all opcodes with 0000 to 0111 for their most significant half). In this format, bits IR(6-4) form a 3-bit "group" field via transistors 21g and bits IR(3-0) form a 4-bit "function" field via transistors 21f. These are the basic arithmetic and logic dual-operand instructions, for the most part.

Format 1 is indicated by a '1' in IR(7) (all opcodes with 1000 to 1111 for MSH). In this format, bits IR(6-3) form a 4-bit "group" field via transistors 21g' and bits IR(2-0) form a 3-bit "function" field via transistors 21f'. These include the peripheral page instructions, single operand instructions, special addressing (direct, indirect, indexed) and traps.

The terms "group" and "function" refer to logical subsets of machine opcodes. In the example shown, the group field in an opcode indicates the addressing mode of the instruction (i.e. which group of Figures 8b to 8d to go to on the first dispatch at decision point 8m), and the function field indicates the arithmetic or logical operation performed on the operands on the second dispatch at points 8n of Figures 8b to 8d, after the operands are fetched. The microarchitecture allows significant sharing of microinstructions among opcodes within the same group or function. In the microcode for the illustrated embodiment, for instance,

14

all opcodes of the format 1 share a microcode state RFtoA-1 which fetches the A register and a general RF register, as seen in Figure 8 and as will be explained in reference to Tables B and C.

The mechanisms for dispatching on the group and function field values in the IR are described herein. Dispatching on an IR subfield may be performed on one of the first microinstructions after the IR is loaded (e.g., at IAQ-2). Thereafter, dispatching may be performed by microinstructions up to and including the next one that reloads the IR. If no dispatching is required during executing a given opcode, then the IR may be used as a general purpose 8-bit register.

The flow of control between microinstructions is determined by how the next microinstruction address on lines 21a to CROM 17 is generated in the circuit of Figure 10, in both conditional and unconditional branching. The dispatching capability of the processor is used to share microinstructions among several macroinstructions.

The microinstructions of Tables B and C, stored in the control ROM or CROM 17 on the chip, may be characterized as horizontally microprogrammed in that each microinstruction indicates the address at which the next microinstruction to be executed is located. The next micro-address is specified by two fields of the CROM output 18 (lines 23 and 24) indicated as inputs in the logic circuit of Figure 10;

1) #JumpAddr(7-0), an 8-bit field indicating a base address in CROM; and

2) #JmpCntl(2-0), a 3-bit code indicating one of eight dispatch offsets from the base address in #JmpAddr(7-0); also complements of #JmpCntl, such as −JmpCnt(12), are used.

If #JmpCntl(2-0)='000', then the #JmpAddr field is simply used directly as the address of the next microinstruction via transistors 21j; and example in Figure 8b is the BtoPPL-0 through BtoPPl-3 series. If #JmpCntl(2-0) is nonzero, it indicates which control lines will replace the low order bits of #JmpAddr via logic circuits 21k, and so form the next micro-address on lines 21a. This technique is referred to herein as dispatching, and is readily implemented in MOS technology as seen in the circuit of Figure 10.

In the example device, a maximum of 256 microinstructions are possible, each consisting of a multi-bit word (outputs 18) in Figure 6, but a total of only 160 microinstructions are required to implement the Table A instruction set, and so only 160 words of CROM are formed. Each of these is only a 45-bit word, containing a possible forty-five outputs 18 of microinstruction control. Additional microcoded functions for the device (new macroinstructions not in Table A) may be added by implementing a subset of the Table A instruction set, or replacing it entirely. The functions executed may be expanded by using a larger CROM 17, requiring more bits in the address 21a, and for more bits 18 for the output, in other embodiments.

All conditional branching in microcode is accomplished by means of dispatching. A base address is specified in the #JmpAddr(7-0) bits of the microinstruction. The #JmpCntl(2-0) lines indicate which control lines then replace the low order bits of this base address to generate the new microinstruction address on lines 21a of Figure 10. For example, Figure 8k depicts dispatching on the IR(3-0) bits, as implemented in the logic circuits 21k of Figure 10.

The dispatch field bits (like bit-3 to bit-0 in Figure 8k) actually replace the low order address bits in the #JmpAddr(7-0) field; they are not ORed with them. For example, suppose #JmpAddr was specified to be 00010001, and the #JmpCntl(2-0) lines set to '110', indicating a dispatch on STC, the status carry bit input to logic circuitry 21m. If STC were '0' the next micro address would be 00010000. The possible dispatch fields implemented in Figure 10 are summarized in Table E, and each of the dispatch possibilities is further explained below; however, the microinstruction sequences for the illustrative instruction set will be examined.

In Figures 8a to 8j, a flow chart of the microinstructions of Tables B and C as executed to implement the macroinstruction set of Table A is illustrated. Figures 8a to 8j reference the microinstructions of Table C by name, as well as the CROM addresses of Table C in hex. Table C is only a partical listing of the microinstruction set. Execution of each of the Table A macroinstructions begins with the instruction acquisition IAQ sequence of Figure 8a, starting at IAQ-0. Assuming no interrupt or reset is asserted, a group dispatch is performed on the group field at IAQ-2, selecting one of twenty-four addresses for one of the operand addressing modes or for miscellaneous jumps or traps. These twenty-four alternatives are shown in Figures 8b to 8d. Note that some of the operand fetch microinstructions are shared by several addressing modes, particularly RFtoA-1 (at address 84) which is used by eight different modes or paths, or "immediate-to-A", ItoA-1, at 9F used in five different paths. All four of the B-register-to-peripheral-page BtoPPL microstates are used in the A-register-to-peripheral and immediate-to-peripheral modes. For the general opcodes, after stepping through the operand fetch microstates of Figures 8b to 8d for the appropriate addressing mode, a function dispatch is performed, using the low order bits of the instruction word (#JmpCntl=001), to select one of up to sixteen possible functions to execute on the operands which have been fetched; these are shown in Figures 8e to 8j and are labelled dual operand function DOPFUN, dual operand function-peripheral DOPFUNP, single operand function normal SOPFNN, single operand function special SOPFUNS, long access function LAFUN, or miscellaneous MISC, all of which end in a return to IAQ-0 at CROM address 00. Note that the mneumonic such as ADD, MOV, CMP, etc., is used for the microinstruction for functions in the flow chart of Figure 8 of Figures 8a—8j or Tables B and C as in the macroinstruction set of Table A.

Dispatch modes for CROM addressing (refer to Table G)

The first type of dispatch is unconditional branching. If no conditional branching of the microcode is desired, #JmpCntl=000. This causes transistors 21j to control for all bits (Figure 10) and the device branches unconditionally to the microinstruction at the address on the eight #JmpAddr lines 23 after the current microinstruction is executed. The address is formed by the CROM bits in the #JmpAddr (7-0) field of the current microinstruction. This type is used for sequences like BtoPPL-0, BtoPPL-1, BtoPPL-2, etc. of Figure 8b.

The next type is function dispatch used to select the function at decision points 8n, SOPFUNN, DOPFUN, etc. in Figures 8a—8d. Function dispatch is defined in Table F. When #JmpCntl=001, the next microinstruction is determined by the low four bits of the IR register. The base address for dispatch is formed in the #JmpAddr(7-0) field of the microinstruction. The next micro address is determined by replacing the bits 3-0 of the base address with bits 3-0 of the IR register, so the offset can be up to sixteen. To avoid confusion, the base address should be a multiple of sixteen (i.e. the lowest four bits of the base address equal '0'). A function dispatch is a dispatch on the "function" field of the instruction word in the register IR. The function field indicates the arithmetic operation to be performed. This is contrasted with the 'group' field, bits 7-4, which indicate the addressing mode of the macro instruction (Table A instruction). Even though format "1" instructions have a 3-bit function field (IR bits 2-1-0), the function dispatch still performs a 16-way branch on the lower four bits of the IR register. The function dispatch for format "1" opcodes thus depends on the value of the IR(3) bit.

Another type is the test sign bits dispatch. An example is the RJmp-3 microstate of Figure 8d, decision point 8p. The sign bit which is the contents of bit-7 the T/MAH register, T(7), may be used for dispatch by specifying #JmpCntl='010'. Two alternative jumps exist here. One is the 8-bit address of the microinstruction to be executed if T(7) is '1', and the other is the address of the microinstruction to be executed if T(7) is '0'. The address for T(7)=1 is the address for T(7)=0 plus 1. The address for T(7)=0 is loaded into the #JmpAddr field, then 1 is added if the test indicates T(7)=1.

The next type of dispatch is "test if zero". The microcode may test the value on the O bus of the immediately preceding microinstruction by specifying #JmpCntl='011'. When this code appears in microinstruction i, it tests the O bus contents of the previously executed microinstruction, i-1. The entry point logic 21 replaces #JmpAddr(0) bit with a bit which is '1' when the O bus is all zeros and '0' otherwise.

Another type of dispatch is "test if interrupt". The microcode tests for a pending interrupt by dispatching on the IACT (Interrupt Active) signal input from the peripheral control circuitry 20. This is accomplished by #JmpCntl=100 in the output 18. This type is used in Figure 8a at IAQ-1 to branch off to INT-0 if an interrupt is signalled. As with other dispatch instructions, two alternative addresses exist, one (E1) is the microinstruction address of INT-0 to branch to if IACT='1', and the other (E0) is the address of IAQ-2 branched to if IACT='0'; these are adjacent addresses. The IACT line is asserted by the peripheral control circuitry 20 when an interrupt condition is detected. IACT can be asserted only when STINT (Status Interrupt Enable) is '1'. Interrupts may be signalled from the external interrupts −INT1 and −INT3 or the internal timer interrupt, INT2.

Another type of dispatch is "group dispatch". This is done at IAQ2, decision point 8m of Figure 8a as well as after RFtoA-1 in Figures 8b and 8c at decision points 8q. Note that another group dispatch is possible because the opcode is still in IR. Group dispatch is defined in. Table E. Dispatching on the group field of the IR register is accomplished by specifying '101' in the #JmpCntl field. The base address field is defined by the #JmpAddr field of the microinstruction. As described above, there are twenty-four groups defined, eight in format 0, IR(7)=0, and sixteen in format 1, IR(7)='1'. The groups may be numbered as in Table E. The group dispatch performs a 24-way dispatch on the group field by replacing the low order bits of #JmpAddr lines 23 with a function of the group number. The high nibble of the IR register, IR(7-4), is placed in the low nibble of the next address, shifted by one bit. The low order bit of the next address is IR(3) OR NOT IR(7). For format '0' instructions, NOT IR(7)='1', and the 0 bit of the next address always equal '1'. Thus, the machine will jump to a micro address which is the base address plus (group *2) +1 for format '0' group numbers. For format '0' instructions, NOT IR(7)='0', and the 0 bit of the next address equals IR(3). Thus, the machine will jump to a micro address +IR(3) for format '1' group numbers.

In a group dispatch, the CROM addresses "base address", "base address+2", "base address+4", etc., may be used for other microinstructions; only alternate CROM addresses are used after the 24-way group dispatch. The example microinstruction set of Tables B and C and Figure 8 uses the group dispatch at IAQ-2 after the instruction is loaded into the IR. Each "group" corresponds to one of the addressing modes, and the microcode executed after the dispatch fetches the appropriate operands for this instruction. A "function" dispatch is then done, and the microcode branches to perform the appropriate ALU operation on the operands. In this manner, the operand fetch microinstructions are shared among the instructions, but each instruction has its own microcode to perform the function of the instruction.

A "test if carry" type of dispatch is also available. The microcode tests the value of the carry bit in status register ST by performing a dispatch on the STC bit. This is indicated by #JmpCntl(2-0)='110'. The bit tested is the value of the STC or status carry bit after the execution of the immediately preceding microinstruction, i.e. the microinstruction executed prior to the one containing the #JmpCntl(2-0)=110 bits. The STC bit is placed in bit (0) of #JmpAddr, and the result used as the next microinstruction address. If the STC bit is '1', control transfers to one address, and if STC='0', control transfers to the next lower address.

16

Another available type of dispatch is "test status register" or macro jump. The contents of the status register are tested with this "macro jump" dispatch by specifying #JmpCntl(2-0)='111'. This dispatch tests eight possible conditions of the status register, indicated by the three bits in IR(2-0). If the condition is true, control transfers to the base address plus 1. If the condition is not true, control transfers to the base address. The conditions tested for macro jump are indicated in Table 1.

The base address field must be even and is placed into the #JmpAddr field of the microinstruction. The result of the condition test is placed in bit 0 of #JmpAddr to form the new microinstruction address. The macro jump dispatch is used in the microcode of Table B and Figure 8 to implement the conditional branch instruction at RJmp-3, selecting Rjmp-4 or -5.

Another type of dispatch is the reset operation, microstate Reset-0 of Figure 8e. When the RESET pin of chip 10 is asserted (driven high externally), the peripheral control circuitry 20 asserts the RST signal to the CPU. The entry point logic 21 of Figure 10 immediately forces the next microinstruction address to be hex FF or all ones by transistors 21n, grounding the lines 21a on H1. Unlike the normal interrupt facility, the microcode does not poll the RST line; rather, the microinstruction executed. The sequence of microinstructions RESET-0 to RESET-3 of Figure 8a executed upon reset results in fetching a subroutine entry point address at address FFFE in memory (in the on-chip ROM 11) and branching to this subroutine.

Addressing modes for macroinstructions

The macroinstructions of Table A are shown also in an instruction map of Figure 9 wherein the most significant half MSH of the instruction is listed across the top and the least significant half LSH is listed down the left side, in binary and hex. Thus, an ADD instruction with an addressing mode of "B, A" has an opcode of 0101000 in binary or 68 in hex; this addressing mode means that the contents of the B register or R1 in RAM 12 is added to the contents of the A register (R0 in the RAM) and the sum is written into the A register, so B is the source address and A is the destination address. The B, A addressing mode uses the least possible states in execution, and shares some of these states with several other instructions, such as MOV, AND, OR, XOR, SUB, CMP, etc., all of which have the same MSH opcode of 0110.

The ADD B,A and MOV B,A instructions (and the like) are dual operand instructions using the A and B registers. Also, single operand instructions can use the A or B register; for example the instruction DEC A (opcode=10110010) means decrement the A register, or the instruction CLR B (opcode=11000101) means clear the B register. Instructions in the 1011 column of Figure 9 operate on the A register, and instructions in the 11-column operate on the B register (with exceptions as noted), and these are single operand instructions. Generally, the A or B register (or B,A) addressing modes require only five machine states to execute, three of these being instruction acquisition shared by all.

Register file addressing is also available for most instructions; this mode is identified by Rn in Figure 9, and means that one of the 128 or 256 registers in the register file RF or RAM 12 is the source or destination address. So, for an instruction "ADD Rn, Rn" the opcode is 00111000 (Figure 9) followed by two 8-bit addresses of the two resigers Rn, Rn used for the source and destination operands; thus three bytes are needed for an ADD Rn, Rn instruction. To execute such an ADD Rn, Rn instruction, ten machine states are used, but the source and destination fetch states are shared with all other similar instructions such as AND, OR, MOV, SUB, CMP, etc., all having a MSH opcode of 0100. Register file addressing with A or B register addressing is used in the MSH columns for 0001 and 0011 opcodes, for all of the common arithmetic and logic instructions. Again, single operand Rn addressing is used for instructions of the Rn or 1101 column of Figure 9. Thus, "ADD R113, A" means add the contents of A register to the contents of the 113th register in RF or RAM 12 and store the sum in the register R113. "MOV R5, R78" means copy the contents of R5 into R78. "DEC R78" means decrement the contents of R78. Since the A and B registers are in the register file as R0 and R1, these may be used in the Rn, Rn addressing mode.

All of the major instructions can use the immediate addressing mode which is specified by "%n" in Figure 9, particularly the 0010, 0101, 0111 and 1010 columns for MSH. Immediate addressing uses the contents of a byte following the opcode byte as an operand. Thus, "MOV %98, R123" means replace the contents of register R123 with the hex number 98; this sequence requires three bytes to define, these being "01110010 10011000 01111011" in machine instruction format (object code in binary as actually coded in ROM 11), and the three bytes would be stored in sequential addresses in the ROM 11, accessed in sequence by incrementing the program counter.

Peripheral file addressing specifies one of the PF addresses or registers P0 to P255 (see Figures 2 to 2d) as an 8-bit field following the opcode. Thus, the I/O ports A, B, C, D, the timer 26 and the I/O control register 25 may be accessed (depending upon the operating mode), all by the instructions in the three columns 1000, 1001, and 1010 of Figure 9 containing a Pn notation. For example, the instruction "MOVP A, P2" means copy the contents of A register into the P2 address (timer data).

As seen in Figure 9, there are five instructions which can use direct memory addressing, these being LDA, STA, BR, CMPA and CALL; in each of these opcode 10001XXX is followed by two bytes which specify a 16-bit address that contains the operand. Direct memory addressing is specified by an "at" sign @, so "LDA @F47D" means copy the contents of memory location F47D (hex) into register A, or BR @F47D means branch to location F47D.

Another addressing mode is register file indirect; the same five instructions, LDA, STA, BR, CMPA and CALL which can use direct can use register file indirect addressing, and these are in the 1001 column of Figure 9. This mode is specified by asterisk * followed by the register name. The specified register contains the least significant half of a 16-bit address. The most significant half of the address is contained in the next higher register. Thus, STA *R45 means copy the contents of register A into address hex 43F8 (where R46 contains 43 and R45 contains F8).

These same five instructions LDA, STA, BR, CMPA and CALL can employ an indexed addressing mode in which the address of the operand is the sum of the contents of B register and a 16-bit direct address n. The address n is preceded by @ and following by (B) so STA @ 43F8(B) means copy the contents of the A register into the memory location specified by the contents of B added to the contents of 43F8 (hex). The opcodes for all these instructions start with 1010 as seen in Figure 9.

The operating modes

With reference to Figure 2a, the primary operating mode of the microcomputer 10 of Figure 1 is the microcomputer mode in which all of the memory is contained within the ROM 11 and RAM 12. The device is initialized by RST or reset to be in the microcomputer mode; that is, zeros are placed in the bit-7 and bit-6 of the I/O control register 25. In this mode, only nine bytes of the peripheral file PF are used, the remaining 247 have no function. The peripheral register numbers P0, P2, etc., and hex addresses of the peripheral file registers for the microcomputer mode are shown in Figure 2a. Port A is used only for input and port B in only an output, while ports C and D are either output or input; thus, registers P9 and P11 define the direction of data in the ports C and D, but no such control registers are needed for ports A and B as they are unconditionally input or output. The port A, B, C, D data registers are contained within the buffers 30 and are accessed by the MD bus, using addresses 04, 06, 08 and 0A (in hex) on the AL bus and page-one or 00000001 on the AH bus. Similarly, AL addresses 09 and 0B access the control registers contained in buffers 30 for ports C and D. A "0" in the control register bit sets the port for input and a "1" sets it for output. An address applied to AL and AH in the unused areas will produce no meaningful result, so the ROM 11 program is of course written to avoid these addresses.

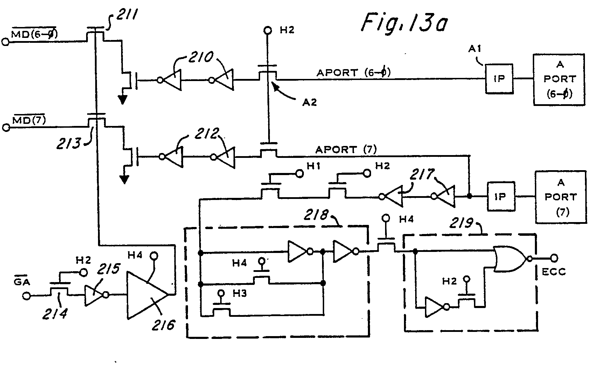

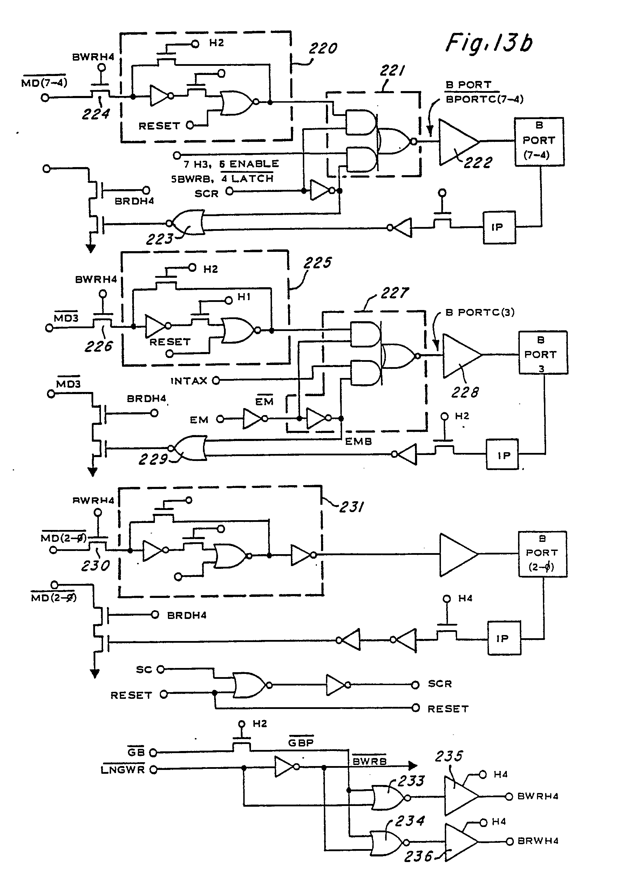

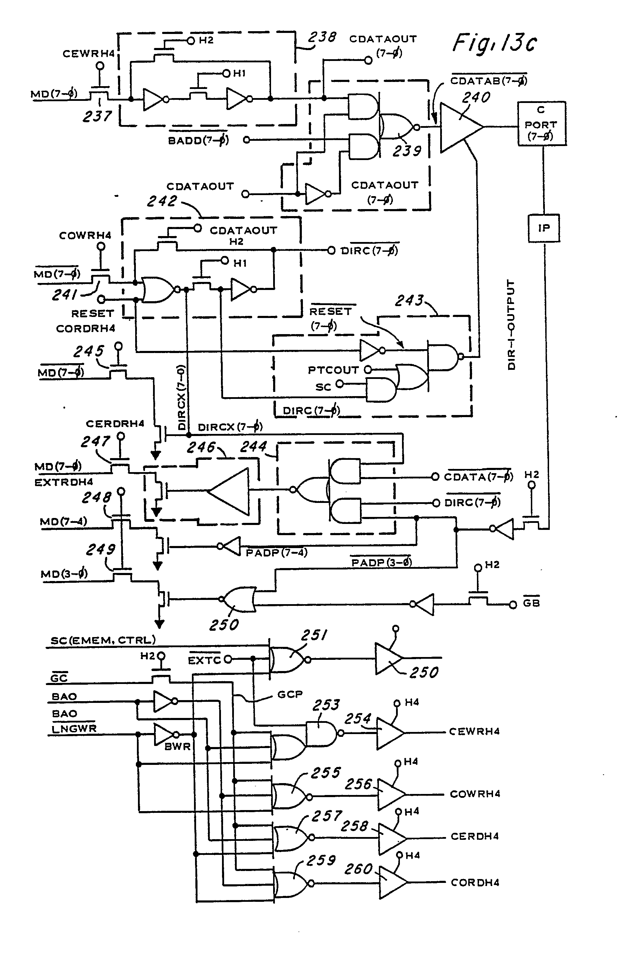

In Figure 10a a system containing an eight digit display 13-1 and a keyboard matrix 31-2 is shown which uses the device of Figure 1 in its microcomputer mode. The C port outputs are used for the segments of the display and the B port outputs drive the digits of the display 13-1 and columns of the keyboard matrix 13-2 as illustrated in U.S. Patents 3,988,604, 3,921,142 or 4,158,431 for example. The rows of the keyboard matrix 13-2 are applied to the A port inputs. A 8×8=64 key matrix is possible, but usually less are needed. Other activators and sensors such as in the microwave oven controller of the Van Bavel patent 4,158,431, assigned to Texas Instruments, may be connected to the D port as inputs or outputs. An example of a program for display scan in the system of Figure 13a is available.

In the peripheral expansion mode of the memory map of Figure 2b, the peripheral page 0100 to 01FF, 256 bytes, is utilized for off-chip accesses. The C port is used as a multiplexed 8-bit address/data bus, and four bits of the B bus are dedicated as control lines ALATCH, R/W, ENABLE and Clock Out as illustrated in the system of Figure 13b. This system employs the microcomputer 10 of Figure 1 as the main processor in a system which uses two other attached processors. One is a video display processor 13f as described in U.S. Patent 4,243,984 issued to Guttag et al, assigned to Texas Instruments. The other is a general purpose interface bus adapter chip 13g which allows the chip 10 to interface with a standard IEEE 488 bus 13h. The chip 10 produces an 8-bit address on the C port which is latched into an 8-bit latch 13i by the address latch signal ALATCH on port B4, then the address is available on an address bus 13j for the chips 13f and 13g when the enable signal on port B6 goes active. The chips 13f and 13g are synchronized with chip 10 by the clock output on port B7. The C port is then used for data from or to the chip 10 and chips 13f and 13g, depending upon the read/write control R/W on port B5. The chips 13f and 13g are thus configured to respond to addresses 0108, 0109 and 010A to 01FF on busses AL and AH. The AH bus of Figure 1 will always contain 01 in this mode for off chip accesses, of course. The A port functions as an input and the D port as input or output in this peripheral expansion mode, so other functions are executed aside from Bccessing the chips 13f and 13g; for example, actuators and sensors, or a keyboard matrix as in Figure 10a may be used here also.

The full expansion mode of Figure 2c and Figure 10c provides the 8-bit address output on C port as in Figure 10b plus another address byte on D port which may address a memory chip 13k, for example. The full expansion mode allows a full 64K (two bytes—C port and D port) of off chip address range; addresses 0108 to EFFF are available for off chip access. As above, port B at address 0106 provides the memory control and clocking on bits B4, B5, B6, B7. The memory chip 13k may be a 32K device, for example, and the lower byte address from C port is latched at 13i while the high byte goes directly to the chip 13k on lines 13m. The data bus 13n going to the C port is shared by the chips 13f, 13g and 13k. The system of figure 10c thus has much greater program capability, compared to that of Figure 10b, but the D port is not available for other I/O. A keyboard matrix 13-2 could be connected to the remaining four bits of the B port (address 0106, bits 0-3) and the A port as shown, however.

The microprocessor mode of Figure 2d allows the chip 10 of Figure 1 to cooperate as an 8-bit microprocessor; all of the addresses in the range 0108 to FFFF are available for off chip accesses. This mode functions the same as the full expansion mode of Figures 2c and 13c except there is no on-chip ROM for program memory; actually the chip contains a ROM 11 but it is not used, so if the ROM code built into the device is not correct then the chip can still be used as a microprocessor in this mode instead of a microcomputer, in which case addresses F000 to FFFF are treated as external memory locations. The treated as external memory locations. The system of Figure 13c may use the chip 10 in the microprocessor mode, in which case the memory chip 13k could be 64K instead of 32K.

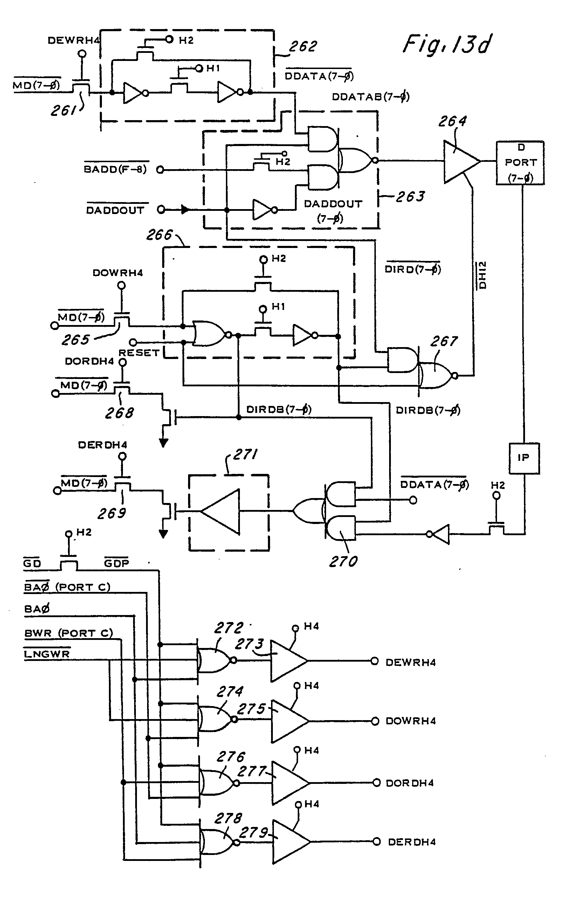

The system emulator mode of Figure 2e facilitates the development of new ROM 11 programs. All on-chip ROM and peripheral file PF is disabled so all addresses 0100 to FFFF access off-chip locations. This mode permits inexpensive development of new systems by allowing the developer to emulate the desired on-chip ROM 11 code, I/O and interrupt structure with temporary external memory chips 13q and logic 13r of Figure 13d. The system emulator mode is enabled when the MC pin is tied to a high voltage source (+12v). The memory interface operates just like the microprocessor mode of Figures 2d and 10c except for the peripheral file PF and pin out. The C and D ports are for addresses and data as in Figure 10c, but the A port is not used (it is emulated off-chip, so the keyboard of Figure 13c, for example, would be connected to the logic 13r). Pin B3 is an interrupt acknowledge line, pins B4 to B7 are used as before, and pins B0 to B2 are not used (emulated off-chip). The CPU 13 in a chip in the emulator mode functions just as if the on-chip ROM and PF is being used, but addresses asserted on the busses AH', AL' result is off-chip access.

## Memory control

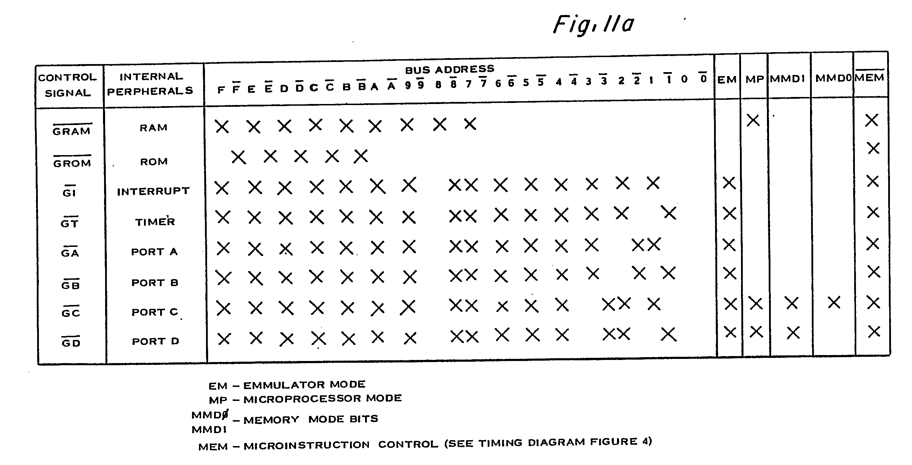

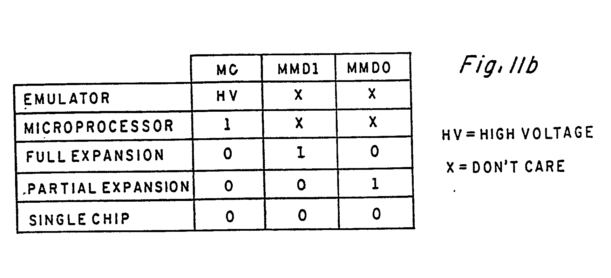

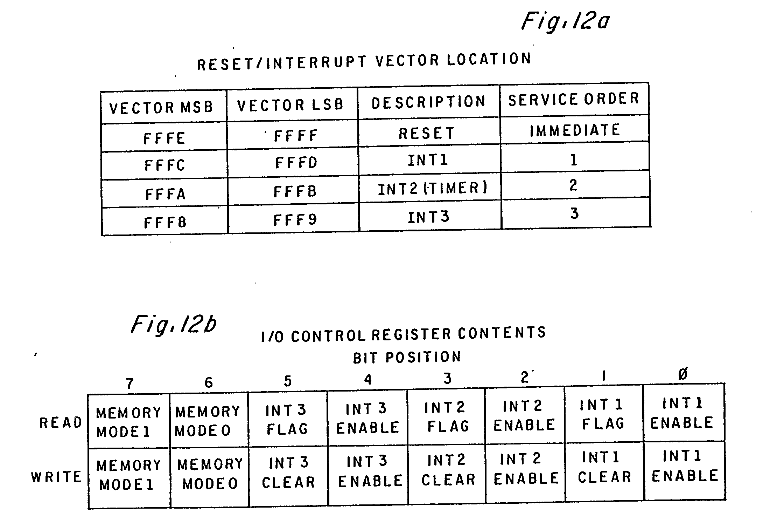

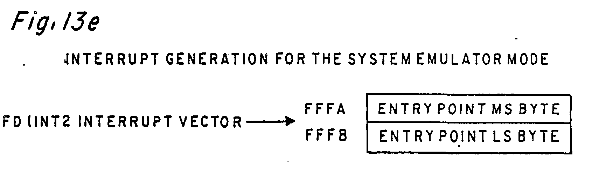

The function of the memory control logic is to control the addressing and timing of all peripherals and all memory expansion modes. The memory control circuitry consists of the circuitry contained in the memory control block 28 and the group decode 27 block. The group decode circuitry 27 handles all the addressing by: 1) decoding the address lines AH' and AL' to determine which internal peripheral, if any, is being addressed (i.e., the RAM 12, ROM 11, INTERRUPT, TIMER, PORTS A, B, C or D) and 2) determine based on which expansion mode that the processor is currently in, if that peripheral exists internally. The group decode 27 outputs of this circuitry identify which peripheral is being addressed. Figure 11a illustrates the decoding of the address AH' and AL' and other inputs to group decode 27 as used to specify an internal peripheral. The group decoder 27 is a circuit implementation of Figure 11a. The group decode circuitry 27 includes a programmable logic array that interfaces to the address bus AH' and AL' and signals MMD0, MMD1, EM and MP from the interrupt logic circuitry 29 and #MEM from the CPU 13. The output of the group decode circuit 27 is the signals which cause the selected one of the internal peripherals to be accessed during a machine state. A microinstruction control bit obtained from the microinstruction word signifies a memory operation. Note that in Figure 16a MEM must be low or active for any of the internal peripherals to be accessed. EM and MP are derived from the interrupt logic circuitry. EM specifies an emulator mode and MP specifies the microprocessor mode. MMD0 and MMD1 are memory mode bits (bits 6, 7 of the register 25) which are internally programmable and determine the current memory expansion mode. Figure 11b illustrates the five memory expansion modes determined by the external memory configuration pin MC and the two internally programmable memory mode bits MMD1 and MMD0 in the control register 25.

## Interrupt logic circuitry

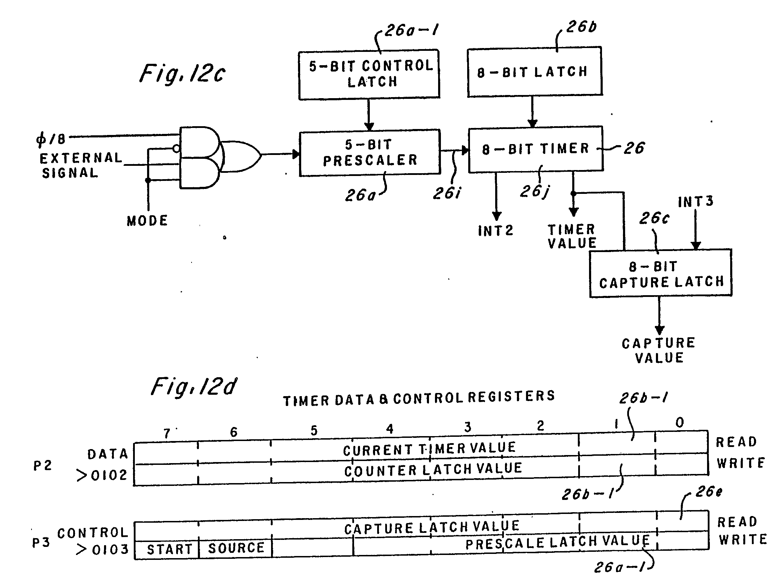

The microprocessor system has the capability to receive two external interrupts INT-1 and INT-3, one internal timer interrupt INT-2 and a reset signal RST. When an interrupt is received by the interrupt logic 29, the peripheral hardware 20 asserts the IACT signal on a control line to the CPU 13. The CPU 13 may then read an interrupt vector supplied by the peripheral control hardware 20 on to the memory data bus MD, indicating which interrupt has occurred. The interrupt vector read requires two cycles, as shown in the timing diagram in Figure 4. It should be noted in Figure 4 that both #MEM and #WR must be low during both cycles of the interrupt vector read. Like a long memory read, the vector is not available until the end of the second microinstruction cycle as seen in Figure 4. The value of the vector supplied by the peripheral circuitry 20 for each interrupt is shown in Figure 12a. There is a difference between the trap vector supplied by the peripheral control circuitry 20 and the trap vector address at which the interrupt subroutine entry point address is stored. The trap vector supplied by the peripheral circuitry 20 is the same as the "TRAPn" opcode for the processor's Table A instruction set. In order to call the interrupt handler, service routine the microcode must generate the trap vector address from the vector (Figure 12a) supplied and read memory 11 at that location to get the address of the interrupt handler subroutine.

Interrupts can be recognized only if the interrupt enable flag STINT in the status register ST of Figure 7e is set. If the flag is cleared, no interrupts will be recognized. Each interrupt can also be individually enabled and disabled in the I/O control register 25 in Figure 12b. The I/O control register is mapped into location P0 of the peripheral file PF, Figure 2. The memory expansion mode, individual interrupt masks, and individual interrupt sets are controlled through this register 25, Figure 12b, by writing the appropriate bits via MD at location P1. The interrupt sources may also be individually tested by reading the interrupt flags via MP at address P1, activing transistors 25b. The interrupt flag values are individually tested by reading the interrupt flags. Interrupt flag values are independent of the interrupt enable values. Figure 12b illustrates the contents of the I/O control register 25 for a read operation or for a write operation. Writing a "1" to an interrupt clear bit location in the I/O control register will clear the corresponding interrupt flag. The interrupt flag is unaffected if a "0" is written to the interrupt clear bit. Once the interrupt is recognized, the status register ST and program counter PCL, PCH contents are pushed on the data stack; the starting address of the interrupt routine is then fetched from the memory location as shown in Figure 12a. The interrupt enable status bit STINT is automatically reset after the interrupt is recognized. It is automatically restored by the interrupt return instruction; it can also be set or reset by program control. The interrupt source can be determined by testing the I/O control register 25 illustrated in Figure 12b. Interrupts 1 and 3 are externally generated as previously discussed. The timer interrupt, interrupt 2, is generated internally and can be reset in the I/O control register 25.

The external interrupt, interrupt 1 and interrupt 3, can be configured to be either level or edge triggered. At the falling edge of interrupt 1 or interrupt 3, the corresponding flag bit in the I/O control register 25 is set independently of the state of the interrupt enable bit. The interrupt then remains pending until the interrupt input returns high, and the interrupt flag bit is cleared.

A network compares the inputs of the interrupt flags with the interrupt enable signals, the set interrupt signal together and the emulator mode signal. If the interrupts have been enabled, i.e., STINT inactive, and a particular interrupt flag signal is active together with this enable signal, interrupt active signal becomes valid. This signal goes to entry point circuit 21, but a microjump on this signal is not performed until after the second state of the instruction acquisition IAQ1, Figure 8. Since this jump is performed into an active interrupt flag, the control ROM 17 will later cause an interrupt acknowledge signal to be produced in the memory control logic. This signal causes the interrupt logic to place a vector on the memory data bus MD corresponding to the highest priority interrupt present. At the same time, the edge protecting latch corresponding to the accepted interrupt is cleared. If more than one interrupt request is made, the highest priority interrupt is accepted and then cleared, but the unaccepted interrupts are not cleared.

The second interrupt is obtained from the timer and input into the interrupt logic circuitry. The remaining processing of this interrupt flag is similar to the interrupt "1" flag processing in that it is input into the interrupt 2 prioritization and when enabled loads the vector address (11111110) for the interrupt service routine on the MD bus "interrupt 2 vector clear".

Interrupt 3 is input on the interrupt-3 pad similar to that for interrupt "1". However, interrupt-3 has a dual purpose. In the nonemulator mode, interrupt-3 is a maskable low priority interrupt that can either be edge or level triggered. This is accomplished in a manner similar to that for interrupt "1".

The reset pad is the input for the reset signal. When the reset pin is asserted externally, the peripheral control circuit 20 asserts the reset signal to the CPU. The entry point logic 21 immediately forces the next microinstruction to the hex FF address. Unlike a normal interrupt facility, the microcode does not pole the RST line; rather, the microinstruction at the control ROM 17 address, hex FF, is unconditionally forced to be the next microinstruction executed. In other words, this address is jam set. The insertion of Reset causes the following actions: By hardware the I/O control register 25 bits 6—7, the two most significant bits (memory mode control), are reset to "0"; the port data direction registers for the ports are loaded with all "1's" thus forcing bidirectional I/O ports to the input mode; all status register ST bits are cleared, and the stack pointer SP is initialized to a value of "1"; This is done by the microinstructions RST-0 to RST-3 of Table B and Figure 8, and circuitry as indicated. The remaining registers in the I/O function must be initialized by the reset service routine as required. Reset must be held active on the reset pin for a minimum of 5 clock cycles to guarantee recognition. When it is removed, the reset function is initialized. Thus, the reset input requires no external synchronization.

The mode control MC voltage is also input into the interrupt logic circuitry via the MC pad. This voltage goes into a circuit to detect high voltage input (i.e., 12 volts) to produce an EM signal which indicates the emulator mode. A normal "1" or Vcc=5v on the MC pad will produce the MP signal or microprocessor mode signal. Both the EM and MP signals are transmitted to the memory control circuitry 28. The EM signal in addition is transmitted to the port B logic. In addition, the emulator mode signal is used together with the interrupt-1 and -3 flag as previously discussed.

Bit position 7 and bit position 6 of register 25 are dedicated to storage of the MMDI and MMD0 bits. It should also be noted that read or write operations can be performed on MMD0 or MMD0.

In emulator mode interrupt-3 becomes a non maskable interrupt (no enable required) and interrupt 1 is a maskable interrupt enabled only by STIT.

Programmable timer/event counter

The programmable timer/event counter of Figures 12c and 12d is an 8 bit binary counter with a programmable prescaled clock source. The basic elements comprising the programmable timer/event counter are: 1) a fixed divide-by-8 pseudorandom shift-counter 26 for which the output 0/8 is an internal input 26i divided by 8; 2) a 5-bit prescaler 26a (binary decrementor) which resides in the memory map of Figure 2a as part of the timer control register at P3, (latch 26a'; these 5 bits of 26a' are write only); 3) A 5 bit control latch (write only) 26a-1; 4) 8 bit time value register (timer decrementer) 26; 5) 8 bit timer latch 26b; and 6) an 8 bit capture latch 26c.

The two accessible locations P2 and P3 (Figure 2) for the timer function differently at read vs. write, as seen in Figure 12d. The location P2, "timer data" contains an 8 bit, write-only latch register 26b-1 and an 8-bit read-only register 26b-2. Note during a read operation, the location P2 will contain the instantaneous count-down value. Figure 12d shows the control register at location P3; here, for write, bit position 7 is the "counter start" command position. A "1" written in bit position 7 will immediately start the timer. Bit position 6 of Figure 12d designates the timer source. A "1" in bit position 6 selects the internally generated PHI/8 (internal clock frequency divided by 8) clock; a "0" selects the external clock source obtained from bit

EP 0 063 458 B1

position 7 in the A port. Bit positions 4-0 of the control register 26b, location P3, contain the prescaler 26a latch value for a write operation. For a read operation, all 8 bits of the timer control register of Figure 12d contains the capture latch value. Figure 12d illustrates the contents of the timer data register P2. Note that in the read mode, the current timer value will be read. However, in the write mode the data written will determine the current latch value. Any number from 0 to 255 can be written into the timer latch. Likewise, the prescale latch can be loaded with any number from 0—31. Thus, the device can count any number up to $256 \times 32 = 8192$. The timer source bit position 6 and a start/stop bit position 7 are also reloaded when loading the prescaler 26a. As long as the start/stop bit is equal to "0", neither the prescaler nor the timer can be decremented, thus stopping the timer. Whenever a "1" is written into the start/stop bit position (regardless of whether it was previously a "0" or "1") the following happens: 1) the 5 bit prescaler latch register 26a-1 (that was loaded together with the start/stop bit position) is transferred into the prescaler value register 25a. The value register 26a for both the prescaler and the value register 26 for the timer are registers that do the actual decrementing. The latch, or capture registers 26a-1 and 26b, do not decrement. The timer latch register 26b is also loaded into the timer value register 26 upon start. The divide by 8 logic (0/8) value is reset to its initial state. The decrement clock inputs to both the prescaler 26a and the timer value register 26 which are then enabled. The timer, whether in internal or external mode, is prescaled by the 5 bit binary counter 26a. The prescaling value is determined by the least significant 5 bits of the timer control register P3, Figure 12d. The actual prescale value is equal to the timer control register prescale latch value 26a-1 plus 1. Thus a value of hex 88 in the timer controller register (i.e. start=1, source=0, prescale=8) would result in a PHI/72 clock output from the prescaler 26a. The prescaler clock is then used at input 26i to decrement the counter 26. The interrupt 2 flag in the I/O control register 25 is set each time the counter value 26 decrements past the 0 value. The prescaler 26a will count down pasts 0000 at which time the timer value register 26 is decremented 1 count via 26i and the prescaler value register 26a is reloaded with the contents of the prescaler latch register 26a-1. The timer 26 continues to be decremented in this fashion until it counts past hex 00 at which time the timer/interrupt flag (interrupt 2 flag) is set to "1" in the I/O control register 25 and the timer value register 26 is reloaded from the timer latch register 26b starting the full time period over again. If at any time during the countdown period, the timer control register bit position 7 change from a "1" to a "0", the timer stops, ceases decrementing. Upon timer start (a "1" in bit position 7 of the timer control register P3) both the prescaler and timer value register 26a, 26 are reloaded with the full latch contents 26a-1, 26b and the system begins to count normally again. Note that there is no way to stop the timer in progress and resume time from where it stopped.

When the timer is in the event counter mode (timer control register bit position 6=1), the counter functions as above except bit position 7 of I/O port A is the decrementing clock source. A positive edge transition on port A bit 7 decrements the count chain. Note that port A bit 7 can function as a positive edge triggered interrupt by loading a start value of "0" into both the prescaler 26a-1 and the timer latch 26b. This timer mode can also be used as an externally clocked, real time clock if the external clock is input to port A pin 7. The maximum pulse frequency should on port A, bit 7, in the event counter mode must not be greater than PHI/8.

Another feature that exists in this timer is the capture latch 26c. This register 26c is loaded from the timer value register 26 whenever the interrupt is active. At the falling edge of interrupt 3, the timer value is loaded into the capture latch. When read, the timer control register P3 contains the capture latch 26c value. This capture latch feature provides the capability to determine when an external event occurred relative to the internal timer and is ideally suited for pulse width measurement. Note that if an interrupt is not desired, interrupts should be totally disabled by the interrupt enable bit or the individual enable bit for interrupt 3 should be disabled.

Since the interrupt 2 flag is raised only after the timer has decremented passed "0" for a given count of N (or division by N), a value of N−1 must be loaded into the latch registers (prescaler 26a-1 or timer 26b).

Referring now to Figure 12c, the divide-by-8 circuit producing PHI/8 is a psendo-random shift counter clocked on the internal clock (H phases) of Figure 4. The output signal 0/8 becomes active after 8 internal clock phases have occurred. Note that for the circuitry 851 to produce 0/8, the start signal must be active. The other source of clock input is the external clock marked "ECC" input. The complex gate circuitry determines which of these two clock sources 0/8 or ECC will be the single clock source for the timer circuitry; this is done by examining the TM and *TM* signals from the timer control register P3. If the bit 6 of the timer control register is "2", then the external clock source EC obtained from the 7th bit of port A is used, otherwise the signal 0/8 is used as a clock source.

Input/output ports

The processor system includes four 8 bit input/output (I/O) ports, A, B, C, and D. These I/O ports can be reconfigured for each of the different processor modes: single chip mode, peripheral expansion mode, full expansion mode, microprocessor mode, and emulator mode as explained in reference to Figures 2 and 10. The I/O configuration during initialization is reset to the single chip mode with four external I/O ports. While two most significant bits in the I/O control register must be "0"s to select the single chip mode, these bits are automatically cleared during reset. There are four 8 bit I/O ports as shown in Figure 2a and Figure 1 for the single chip mode. All four ports are located in the peripheral file PF, addresses 01XX, tied to the MD bus, and may thus be manipulated efficiently with the I/O manipulation instructions of Table A. Referring now to

21

Figure 1, port A is an input 8 bit port with high impedance inputs. Port B is an 8 bit output only port. When port B is read, the value at the I/O pin is being read. Port C and D are 8-bit bidirectional data ports in which each bit can be individually programmed to be input or output. Associated with each bidirectional port is a data register such as P8 or P10 and a data directional register such as P9 or P11. Each I/O bit line can be programmed to be an input or output by setting a "1" in the corresponding data direction register for those lines which are to be outputs. A "0" in a bit of the data direction causes the corresponding I/O line to be a high impedance input. The data register P4, P6, P8, P10 is used to read and write the I/O lines. A "1" in the data register will cause a high on the I/O line if it is programmed as an output.

When the processor is in the peripheral expansion mode, I/O port C and bits 4—7 of I/O port B are used for the memory expansion. Port A, Port D and bits 0—3 of Port B are not affected. Specifically port C bits 0—7 and port B bits 4—7 are used for the external memory interface. The I/O lines of port C 0—7 are used to pass multiplex address/data as shown in Figure 10a. Output lines of port B bits 4—7 are used for memory interface timing and control as shown in Figure 10a. The peripheral expansion mode memory map is shown in Figure 2b.

In the full expansion memory mode, the I/O port C, port D and bits 4—7 of port B are used for the memory expansion. Port A and bits 0—3 of port B are not affected. I/O port C bits 0—7, port D bits 0—7, and port B bits 4—7 are used for external memory interface. I/O port D bits 0—7 are used to pass the most significant byte of the 16 bit address. I/O port C bits 0—7 are used to pass the least significant byte multiplexed address and data as shown in Figure 10b. The output lines for port B bits 4—7 are used for memory interface timing and control. The full expansion mode memory map is shown in Figure 2c.

The I/O configuration for the microprocessor mode is the same as the I/O configuration for the full expansion mode. The processor is placed in the microprocessor mode when the MC pin is tied to Vcc. The microprocessor mode is identical to the full expansion mode, except that the internal on-chip ROM 11 is disabled and removed from the memory map of Figure 2d. The revised memory map is shown in Figure 2d.

The emulator mode is enabled when the MC pin is tied to a high voltage source (+12 volts). In the emulator mode, all on-chip I/O and ROM is disabled and removed from the memory map as shown in Figure 2e. The emulator memory expansion interface operates identical to the microprocessor mode memory map interface with the exception of the memory map and the pin-out. Specifically, in the emulator mode, all internal peripheral files (Ports A, B, C, D, timer, I/O control register, ROM) are disabled. Port B bits 7-4 become external memory control outputs. Port B bit 3 serves as an output for INTA, the external interrupt acknowledge. Port C and port D are configured in the same manner as in the microprocessor or full expansion modes. The emulator mode can support up to 128 interrupts, either maskable or nonmaskable. When the interrupt acknowledge INTA line goes low, the external I/O circuitry must place the appropriate interrupt vector on the data bus. The interrupt vector transfer is independent of the other memory control signals. The interrupt vector is used to form the lower order bit of the memory address which contains the low order bit of the interrupt service routine entry point. The entry point vector is multiplied by 2 to obtain the address bit. Hex FF is the high order byte of the memory address which contains the entry point address least significant bit. The entry point address least significant bit is stored adjacent to the most significant bit. It should be noted that the interrupt vector values are equivalent to the trap opcodes. Thus the interrupt vector corresponding to interrupt 2 is hex FD as before.

The I/O Port A functions as an input port for the single chip mode, the partial expansion mode, the full expansion mode and the microprocessor mode. During the emulator mode, port A is disabled by the group decode circuitry as previously described.

Referring now to Figure 13a, 7 bits of information are obtained from the seven pads of the "A Port" (bits 6-0). Actually there is a separate line of circuitry and pad for each separate bit that are identical to the one shown in Figure 13a. For these 7 bits the signal is transmitted through standard input protection circuitry A-1 and through a device A-2 clocked by H2 and through dual inverters 210 and device 211 activated from the A port enable signal GA generated in the group decode circuitry 27. It should be noted that the A port enable GA signal is clocked through device 214 by H2 and transmitted through inverter 215 into a driver 216 clocked by H4. Bit 7 of A port is different from bits 0-6 and serves two purposes. The first purpose is merely as the 8th bit of information input just as bits 0-6 and thus is transmitted through similar circuitry, gated by H2, transmitted through inverters 212 and controlled by the A port enable signal GA from the group decode circuitry as in A port bits 6-0. In addition the bit 7 may be used as the event counter input (ECC) transmitted to the timer circuitry. To this end, the event counter signal from A7 is transmitted through inverters 217 and further clocked by H1 and H2 into circuitry 218 which latches the occurrence of the event before it is further clocked by H4 through the NOR gate circuitry 219 to the timer as ECC.

In the single chip mode, I/O port B serves as an 8 bit output port. In the partial expansion mode, the full expansion mode and microprocessor mode four bits of port B are external memory controls (CLOCKOUT, ENABLE, RD/WR and ALATCH). In the emulator mode port B bits 7-4 are external memory controls as before but bit 3 serves as an output for INTA, the external interrupt acknowledge line. In these modes (all modes but the emulator mode) where the 4 bits are used for external memory controls, the other 4 bits are unused. If it is desired to emulate an 8-bit output port, circuitry has been included that allows the user to make use of the four unused bits of port B in combination with 4 bits built externally see Figure 10b or 10c. To output from port B, a port B address is output on port C (or port C and D depending on the mode) and external hardware places the bits 0-3 of the memory data bus into the port B bits 3-0 latches and onto the

22

port B pads. The hardware further allows port C to output from the memory data bus bits 7-4 into the external 4 bits of port. Bits 0-3 of the memory data bus, is also output from port C, but are not used externally if the 4 internal B port bits are used. It should be noted that the data output on port B is latch data and thus can be read. To read port B the port B address is sent out to port C and hardware allows only the external port B bits 3-0 or the contents of their data latch to be read onto the memory bus, and allows only port C bits 7-4 to be read from the external port B onto the memory data bus.

Referring now to Figure 13b, the pads for the B port bits 7-4 are shown and the associated circuitry is identical for each individual bit pad. The difference is for the circuit structure 221. The one of the four control lines are input into the NAND gate in the circuit structure 221 according to which bit position. The bit 7 input is the clock or phase H3, the bit 6 input is the enable line, the bit 5 input is the read/write signal (BWRB) and the bit 4 input is the ALATCH signal. Bits 7-4 of MD are clocked through devices 224 by the port B write signal clocked by BWRH4. This line is then transmitted through the circuitry 220 as previously discussed which also includes the reset signal (RESET) for clearing the latch and then into complex gate 221 where it is combined with the single chip mode signal line, SCR, and the respective control line and through device 222 onto the pad for the respective bit. Also, the input can be taken from this bit pad through standard input protection through a device clocked by H2 and inverter and a NOR gate 223 which also receives an input from the single chip mode line. This input can then be read onto the memory bus as shown.

Bit 3 originates from the memory data bus line marked "MD3" through a gating device 226 which is gated by the read/write line originating from the circuitry below in Figure 13b through a series of gating devices and inverter NAND gate 225 which serves the purpose to gate the output by H2 or during a reset operation to change the gate to an input mode. For the output mode, the signal is then transmitted to the gate circuit 227 which receives inputs from the INTAX signal used during the emulator mode as a interrupt acknowledge and also the emulator mode signal EM. Since B3 serves this external acknowledge purpose in the emulator mode, the output from this complex gate 227 is then transmitted through device 228 onto the bit 3 pad. The input from the bit 3 pad is transmitted through the input protection circuitry, clocked by H2 through an inverter, then into a NOR gate 229 which also receives an input from the emulator mode in order to disable the input line during the emulator mode. The bits 2 to 0 of the data bus are input through a gating device 230 which is gated by BWRH4 from the circuitry contained below and through the circuitry 231 which clocks the output onto the respective pads and resets the port to input during a reset condition. The output signal during the output mode is then transmitted through device 232 onto the respective pad. The input from the respective pad is transmitted through the input protection circuitry as before, and gated by H2 through two inverters onto the memory data bus lines for bits 20 marked MD (2-0) and clocked by BRDH4. Note that SCR is the OR of the SC and the reset signal from the interrupt logic circuitry. GB and LNGWR are the B port enable line and read/write line from the memory control circuitry. GB is clocked by H2 and is an input to NOR gate 233 along with LNGWR which is then transmitted through device 235 clocked by H4 to produce the output or write signal BWRH4. In a similar manner, the GBP signal is input into NOR gate 234 together with the inverted LNGWR signal (BWRB) and then transmitted through device 236 clocked by H4 to produce the input or read signal BRDH4.

In the single chip mode, port C is an 8 bit I/O port with one address for data and one address for port direction. In other words, setting a bit in a port direction will determine whether that bit in port C is in input bit or an output bit. Specifically, setting the direction latch to "1" sets the corresponding bit position of the port into an output mode. The signals CDATAOUT from the memory control circuitry enables port C to output an address in the first state of a long read or write cycle and then if in an output mode, allows port C to output the contents of the data latch onto the port C bit pads.

Referring to Figure 13c, bits 7-to-0 of the data from the memory bus, is clocked through device 237 into the data latch circuitry 238. The data is then transmitted through the complex gate circuitry 239. Note that the circuitry 239 also receives the address, BADD (7-0), from the address bus together with the CDATAOUT signal from the memory control circuitry as previously mentioned. This data (or address) is then transmitted over the line marked CDATAB (7-0) to device 240 which also receives an enabling signal CHIZ. The enabled output is then transmitted to the C port pads. CHIZ originates from a circuitry containing a direction latch. The direction latch inputs originate from the memory bus on 7-to-0 lines MD (7-0) clocked through gate 241 by COWRH4 into the direction latch circuitry 242. Note that the direction latch circuitry also receives the reset signal from the interrupt circuitry. This reset signal resets the data latch for each bit to the input mode as previously explained. The output of the data latch is DIRC (7-0).

The reset signal also is input into the complex circuitry 243 together with DIRC (7-0) from circuitry 242. Complex circuitry 243 also receives PTCOUT and SC. SC is the signal for the single chip mode and during the single chip mode PCOUT is disabled allowing the contents of the direction latch to determine the port direction. PTCOUT is enabled and places port C into an output mode in both states of a long write cycle and input mode in the first state of a long read cycle. PTCOUT originates from the memory control circuitry. Inputs from port C originate on the pad for the respective bits 7-0 and are transmitted through the input protection circuitry through a device clocked by H2 and an inverter into complex gate 244. The input data CPADP (7-0) is gated with DIRC (7-0) from the directional latch 242 and is read through device 246 onto the memory bus MD (7-0) clocked in by CERDH4 through device 247. Also the same line to the memory data MD bus can be used to write the data contained in the port C latch 238 which has been gated with the

23

directional latch 242. This enables the user to read the data that is being output or stored in the output latch. The devices 248 and 249 are clocked by a single EXTRDH4 which is used in any nonsingle chip mode to read the C port pads onto the memory data bus in state 2 of a long memory read cycle if a valid external address is provided. However, if port B address is provided, the port B enable signal GB is active and does not allow the bits 3-0 of Port C to be read onto the MD bus via NOR gate 250. These 4 bits are contained in the internal B port and read onto the memory data bus MD (3-0) as previously discussed. The EXTRDH4 signal is produced by the inputs from the memory control circuitry including SC, single chip mode, EXTC signifying an external operation, and LNGWR for the read/write operations. These signals are combined in NOR gate 251 and then clocked by H4 in device 252. CEWRH4 is the output signal for the data and is used to clock device 237 to transfer data from the memory data bus into the port C data latch 238. This signal originates from complex gate 253 which receives inputs from the single chip signal signifying a single chip mode and from the port C enable signal from the group decode circuitry, GC, BAO from the memory control circuitry signifying a data operation and LNGWR from the memory control circuitry signifying a write operation. The signal from 253 is then transmitted through device 254 clocked by H4. The directional or control information is written into the directional latch 242 through device 241 clocked by COWRH4. COWRH4 originates from NOR gate 255 which receives inputs from the decoder circuitry in a form of GCP, BA indicating a write operation into this latch, and LNGWR signifying a write operation. The output from gate 255 is transmitted through device 256 clocked by H4. CERDH4 is the signal that enables the input data from port C to be input on the memory data bus, MD (7-0) through device 247 and originates from NOR gate 257 which receives inputs from GCP, BA, and BWR which is the negated LNGWR signifying a read operation. The output of gate 258 is then transmitted through device 257, clocked by H4. CORDH4 is used to input the contents of the direction register 242 through device 245 onto the memory data bus MD (7-0) and originates from NOR gate 259 which receives inputs of GC, BAO and BWR. The output of gate 259 is transmitted through device 260 clocked by H4.

In the single chip mode, port D is similar to port C in that it is a bidirectional I/O port that contains a directional latch and a "1" set in the latch for a corresponding bit the output mode. In a peripheral expansion mode, port D is the same as the single chip mode. However, in the microprocessor mode full expansion mode and emulator mode, port D serves as a 8 bit high address output.

Referring now to Figure 13d, if port D is in the output mode, the output information is obtained from bits (7-0) of the memory data bus MD and transmitted through device 261 clocked by signal DEWRH4. This information is transmitted through the data latch 262 into complex circuitry 263. The complex circuitry 263 also receives inputs from the data bus address line BADD (F-8) and DADOUT which allows port D to output the high address, BADD (F-8), during the emulator mode, microprocessor mode and full expansion mode. The output from complex gate 263 is then transmitted through device 264 onto the D port pads. Similar circuitry exists for each of the 8 pads. Device 264 is disabled when that bit position is in the input mode determined by the direction latch 266. The contents of the direction latch for each of the bit positions is read from the memory bus MD (7-0) gated by DOWRH4 in device 265 into the direction latch 266. The output of the direction latch is transmitted into complex gate 267 which is combined with the reset signal also input into the directional latch together with the DADOUT signal previously discussed. The output of complex gate 267 is DHIZ which is the disabling signal for the device 264. Two sets of information can be read from port D. The actual data input from the port pad and the contents of the direction latch. The contents of the direction latch is output by the line marked DIRDB (7-0) through a device 268 gated by DORDH4. The input from the D port pads is transmitted through the input protection circuitry clocked by H2 and through an inverter into complex circuitry 270 which also receives the contents of the directional latch. This enables the user to read the input from the pad or the information contained in the output data latch 262 determined by the information for that bit contained in the direction latch. The output of this complex gate is then transmitted through device 271 and through device 269 clocked by the signal DERDH4 onto the memory data bus. The signal DEWRH4 (write data into data latch) used to gate device 261 is produced in NOR gate 272 from the enable D port signal, GDP, LNGWR and BAO, all from the memory control circuitry. BAO signifies a write operation into the latches contained in port D. LNGWR signifies a write operation or output operation from port D. The output from gate 272 is transmitted through device 273 clocked by H4. DOWRH4 is the signal to enable device 265 to enable the user to write into the direction latch 266 and is produced in NOR gate 274 from signals GDP, BAO and LNGWR. The output of NOR gate 274 is transmitted through device 275 clocked by H4. DORDH4 is used to enable the output of the contents of the direction latch onto the memory bus and is produced in NOR gate 276 from the signal GDP, BWR from port C and BAO. The output of NOR gate 276 is transmitted through device 277 clocked by H4. DERDH4 is the signal used to clock device 269 to allow the output of either the contents of the port D data latch 262 or the inputs from the port D input pad and originates from NOR gate 278 which has signals GDP, BAO, and BWR. The output of gate 278 is transmitted through device 279 which is clocked by H4.

The buffers 222, 228, 232 for the B port may be conventional MOS output buffers, while the buffers 240 and 262 for the C and D ports may be conventional tri-state MOS output buffers.

The self-test procedure

A microcomputer 10 constructed according to the invention may contain a self-test procedure as set forth in U.S. Patent 4,158,431 issued to Van Bavel et al, assigned to Texas Instruments. The procedure of patent 4,158,431 consists of exercising all of the display characters 13-1 and keys 13-2 as well as all of the I/O devices on the D port of Figure 10a, all under control of a sequence of macroinstructions in the ROM 11 as manufactured. This self-test procedure establishes that all of the external elements of the system are working and gives some indication that the chip 10 itself is fully functional, but this is not an exhaustive check. Prior to connecting into such a system, however, functional testing must be done. For example, to test the contents of the ROM 11 after manufacture (either prior to delivery to the customer or by the customer as incoming material inspection) it has previously been the practice to read out the entire contents of the ROM, one word at a time, and compare each word with the desired bit pattern. Microcomputer devices which allow such testing are disclosed and claimed in U.S. Patent 3,921,142 issued to John D. Bryant et al and U.S. Patent 4,024,386 issued to E. R. Caudel and Joseph H. Raymond, both assigned to Texas Instruments. Such tests, however, require that the test machine store the entire ROM code, 2048 or 4096 bytes, and require a different check code for each different ROM code. Further, the check requires at least one transfer between test machine and device under test for each type of the ROM. These factors made the test unduly long, require extensive test data or software, and/or use up excessive amounts of program space in the test machine.

The microcomputer 10 may employ a test method in which a two-type macro-code is fixed in the ROM 11 upon manufacture and used to check the remaining macro-code. This two-byte code is different for each ROM code or program and represents some function of all of the other bytes coded in the ROM. For example, it might be the LSB's of the sum of all the other bits in the ROM, or preferably some other function which provides a multiple check of all bits. This two-byte code is referred to as a cyclic redundancy code or CRC and is a 16-bit value which is a function of every bit of data used to create it. The CRC is calculated using every byte of the macrocode in the ROM except the CRC itself which is stored at a location such as F802 and F803 in a 2048 bit ROM 11 or F002 and F003 in a 4096 bit ROM 11.

This test program is loaded into the RAM 12 of the chip 10 while the chip is in the microprocessor mode (Figure 2d) or in one of the expansion modes (Figure 2b or 2c), by a sequence of move double MOVD or move MOV instructions. For example, MOVD %7D02, R10 in the microprocessor mode places the first two bytes of the object code of the test program in RF locations R10, R11. In this manner, all of this code is stored in RAM 12, and then a MOV%00, P1 instruction returns the microcomputer 10 to the single-chip mode of Figure 2a, with the address of R10 in the program counter PCL so execution of the test program code begins. The original code from F902, F903 is compared with the computed value, and the comparison output on C and D ports. About 890,000 machine states are needed by the microprocessor 10 to execute this test program, but this is all internal; the test machine does not need to store unique codes and off-chip accesses are not needed for the bulk of the test.

## Conclusion

The microcomputer described in detail herein is in the form of an N-channel silicon gate integrated circuit in a single silicon chip. However, features of the invention can be used in devices made by other processes such as metal gate, P-channel, CMOS, silicon-on-sapphire, and the like. Also, the memory 11 has been described as a ROM of the fixed-program type, but of course an electrically-programmable ROM or electrically-erasable ROM may be used. The ROM 11 is referred to as a program memory and the RAM 12 as a data memory, and these are the primary functions in many applications; it is understood, however, that "data" from the ROM 11 is used in some algorithms ("data" being numerical constants and the like), and that the device can execute instruction codes from the RAM 12, or program blocks can be down-loaded into RAM 12 from external tape or disc drive, or from a telephone coupler, for example, and executed from RAM 12. Furthermore, additional control lines and functions such as READY, HOLD, bus-status code, etc. as in said application S.N. 210,109 may be used in a device having features of the invention.

TABLE A
The instruction set

| Mnemonic or source code | Opcode (in binary) | Description |
| --- | --- | --- |
| ADC | 0XXX1001 | Add with carry |
| ADD | 0XXX1000 | Add |
| CMP | 0XXX1101 | Compare |
| DAC | 0XXX1110 | Decimal add with carry |
| DEC | 1XXX0010 | Decrement |
| DSB | 0XXX1111 | Decimal subtract with borrow |

TABLE A (continued)
The instruction set

| Mnemonic or source code | Opcode (in binary) | Description |
|---|---|---|
| INC | 1XXX0011 | Increment |
| SBB | 0XXX1011 | Subtract with borrow |
| SUB | 0XXX1010 | Subtract |
| BTJO | 0XXX0110 | Bit test and jump if one |
| BTJZ | 0XXX0111 | Bit test and jump if zero |
| BR | 1XXX1100 | Branch |
| DJNZ | 1XXX1010 | Decrement register and jump if non zero |
| JC(etc.) | 11100XXX | Jump on condition |
| JMP | 11100000 | Jump unconditional |
| LDA | 1XXX1010 | Load a register |
| LDSP | 00001101 | Load stack pointer |
| MOV | 0XX0010,110X00X | Move |
| STA | 10XX1011 | Store a register |
| STSP | 00001001 | Store stack pointer |
| SWAP | 1XXX0111 | Nibble swap |
| XCHB | 11010110 | Exchange with B register |
| AND | 0XXX0011 | And |
| CLR | 1XXX0101 | Clear |
| INV | 1XXX0100 | Invert |
| OR | 0XXX0100 | Or |
| XOR | 0XXX0101 | Exclusive or |
| RL | 1XXX1110 | Rotate left |
| RLC | 1XXX1111 | Rotate left through carry |
| RR | 1XXX1100 | Rotate right |
| RRC | 1XXX1101 | Rotate right through carry |
| CALL | 1XXX1110 | Call |
| RETS | 00001010 | Return from subroutine |
| TRAP | 1111XXXX,11101XXX | Subroutine trap |

TABLE A (continued)
The instruction set

| Mnemonic or source code | Opcode (in binary) | Description |
|---|---|---|
| POP | 1XXX1001 | Pop from stack |
| PUSH | 1XXX1000 | Push on stack |
| CLRC | 10110110 | Clear carry |
| DINT | 00000110 | Disable interrupts |
| EINT | 00000101 | Enable interrupts |
| IDLE | 00000001 | Idle until interrupt |
| NOP | 00000000 | No operation |
| RETI | 00001011 | Return from interrupt |
| SETC | 00000111 | Set carry |
| TSTA | 10110000 | Test A register |
| TSTB | 11000001 | Test B register |
| BTJOP | 10XX0110 | Bit test and jump if one—peripheral |
| BTJZP | 1000X0111 | Bit test and jump if zero—peripheral |
| ANDP | 10XX0011 | And-peripheral |
| MOVP | 10XX0010 | Move to/from peripheral |
| ORP | 10XX0100 | Or-peripheral |
| XORP | 10XX0101 | Exclusive-or peripheral file |

| Mnemonic | Condition for jump (status bit values) | | | Instruction |
|---|---|---|---|---|
| | Carry | Negative | Zero | |
| JC | 1 | x | x | Jump if carry |
| JN | x | 1 | x | Jump if negative |
| JNC | 0 | x | x | Jump if no carry |
| JNZ | x | x | 0 | Jump if nonzero |
| JP | x | 0 | 0 | Jump if positive |
| JPZ | x | 0 | x | Jump if positive or zero |
| JZ | x | x | 1 | Jump if zero |

## TABLE B
### Microinstructions

| CROM 17 Address | | Micro-instruction | CROM 17 Address | | Micro-instruction |
|---|---|---|---|---|---|
| Hex | Binary | | Hex | Binary | |
| 00 | 00000000 | IAQ-0 | 1D | 00011101 | CMP-0 |
| 01 | 00000001 | IDLE-0 | 1E | 00011110 | DAC-0 |
| 02 | 00000010 | INT-2 | 1F | 00011111 | DSB-0 |
| 03 | 00000011 | INT-4 | 20 | 00100000 | STA-0 |
| 04 | 00000100 | MPY-1 | 21 | 00100001 | STB-0 |
| 05 | 00000101 | EINT-0 | 22 | 00100010 | DEC-0 |
| 06 | 00000110 | DINT-0 | 23 | 00100011 | INC-0 |
| 07 | 00000111 | SetC-0 | 24 | 00100100 | INV-0 |
| 08 | 00001000 | POPST-0 | 25 | 00100101 | CLR-0 |
| 09 | 00001001 | STSP-0 | 26 | 00100110 | SCHB-0 |
| 0A | 00001010 | RETS-0 | 27 | 00100111 | SWAP-0 |
| 0B | 00001011 | RETI-0 | 28 | 00101000 | PUSH-0 |
| 0C | 00001100 | TGA-6 | 29 | 00101001 | POP-0 |
| 0D | 00001101 | LDSP-0 | 2A | 00101010 | DRJN-0 |
| 0E | 00001110 | PushST-0 | 2B | 00101011 | DecD-0 |
| 0F | 00001111 | LDST-0 | 2C | 00101100 | RR-0 |
| 10 | 00010000 | MOVD-4 | 2D | 00101101 | RRC-0 |
| 11 | 00010001 | MOVD-5 | 2E | 00101110 | RL-0 |
| 12 | 00010010 | ST-0 | 2F | 00101111 | RLC-0 |
| 13 | 00010011 | AND-0 | 30 | 00110000 | DAC-1 |
| 14 | 00010100 | OR-0 | 31 | 00110001 | MOVD-1 |
| 15 | 00010101 | XOR-0 | 32 | 00110010 | RESET-2 |
| 16 | 00010110 | BTH-0 | 33 | 00110011 | MOVD-2 |
| 17 | 00010111 | BTL-0 | 34 | 00110100 | MPY-7 |
| 18 | 00011000 | ADD-0 | 35 | 00110101 | MPY-6 |
| 19 | 00011001 | ADC-0 | 36 | 00110100 | IAQ-1 |
| 1A | 00011010 | SUB-0 | 37 | 00110101 | MOVD-3 |
| 1B | 00011011 | SBB-0 | 38 | 00110000 | IDLE-1 |
| 1C | 00011100 | MPY-0 | 39 | 00110001 | INT-3 |

TABLE B (cont)

| CROM 17 Address | | Micro-instruction | CROM 17 Address | | Micro-instruction |
|---|---|---|---|---|---|
| Hex | Binary | | Hex | Binary | |
| 3A | 00111010 | RETS-2 | 58 | 01011000 | SgIBS-0 |
| 3B | 00111011 | RETI-2 | 59 | 01011001 | SgIB-0 |
| 3C | 00111000 | DSB-1 | 5A | 01011010 | SgIRFS-0 |
| 3D | 00111101 | BtoPPL-3 *(3) | 5B | 01011011 | SgIRF-0 |
| 3E | 00111110 | RJMP-4 | 5C | 01011100 | RJMP-0 |
| 3F | 00111111 | RJMP-5 | 5D | 01011101 | TGC-0 |
| 40 | 01000000 | DecD-1 | 5E | 01011110 | TGB-0 |
| 41 | 01000001 | MiscGrp-0 | 5F | 01011111 | TGA-0 |
| 42 | 01000010 | DecD-2 | 80 | 10000000 | ItoPPI-1 |
| 43 | 01000011 | RFtoA-0 | 81 | 10000001 | ItoRF-3 *(3) |
| 44 | 01000100 | DRJN-1 | 82 | 10000010 | BtoPPL-1 *(2) |
| 45 | 01000101 | ItoA-0 | 83 | 10000011 | RFtoA-2 |
| 46 | 01000110 | RETS-1 *(2) | 84 | 10000100 | RFtoA-1 *(8) |
| 47 | 01000111 | RFtoB-0 | 85 | 10000101 | ItoA-2 |
| 48 | 01001000 | INT-5 | 86 | 10000110 | ItoRF-4 *(2) |
| 49 | 01001001 | RFtoRF-0 | 87 | 10000111 | RFtoB-2 |
| 4A | 01001010 | MPY-5 | 88 | 10001000 | DIRtoA-1 *(2) |
| 4B | 01001011 | ItoB-0 | 89 | 10001001 | RFtoRF-2 |
| 4C | 01001100 | TGA-7 | 8A | 10001010 | MPY-4 |
| 4D | 01001101 | BtoA-0 *(2) | 8B | 10001011 | ItoB-2 *(2) |
| 4E | 01001110 | INT-1 | 8C | 10001100 | DRJN-3 |
| 4F | 01001111 | ItoRF-0 | 8D | 10001101 | DRJN-2 |
| 50 | 01010000 | AtoPPL-0 | 8E | 10001110 | STAL-2 |
| 51 | 01010001 | DIRtoA-0 *(2) | 8F | 10001111 | ItoRF-2 *(3) |
| 52 | 01010010 | BtoPPL-0 *(3) | 90 | 10010000 | PUSH-1 |
| 53 | 01010011 | INDtoA-0 *(3) | 91 | 10010001 | DIRtoA-4 |
| 54 | 01010100 | ItoPPL-0 | 92 | 10010010 | XCHB-1 |
| 55 | 01010101 | INDXtoA-0 | 93 | 10010011 | INDtoA-2 |
| 56 | 01010110 | SgIAS-0 | 94 | 10010100 | PUSHST-1 |
| 57 | 01010111 | SgIA-0 | 95 | 10010101 | INDXtoA-5 |

29

TABLE B (cont)

| CROM 17 Address | | Micro-instruction | CROM 17 Address | | Micro-instruction |
|---|---|---|---|---|---|
| Hex | Binary | | Hex | Binary | |
| 96 | 10010110 | SWAP-1 | EB | 11101011 | JMPL-1 |
| 97 | 10010111 | INDtoA-3 | EC | 11101100 | RESET-2 |
| 98 | 10011000 | SWAP-2 | ED | 11101101 | TGA-3 |
| 99 | 10011001 | TGA-8 | EE | 11101110 | TGA-5 |
| 9A | 10011010 | SgIRFS-2 | EF | 11101111 | TGA-2 |
| 9B | 10011011 | SgIRF-2 | F0 | 11110000 | LDAP-0 |
| 9C | 10011100 | RJMP-3 | F1 | 11110001 | LDBP-0 |
| 9D | 10011101 | STAL-1 | F2 | 11110010 | STP-0 |
| 9E | 10011110 | RJMP-1 | F3 | 11110011 | ANDP-0 |
| 9F | 10011111 | ItoA-1 *(5) | F4 | 11110100 | ORP-0 |
| E0 | 11100000 | IAQ-2 | F5 | 11110101 | XDRP-0 |
| E1 | 11100001 | INT-0 | F6 | 11110110 | BTHP-0 |
| E2 | 11100010 | MPY-2 | F7 | 11110111 | BTLP-0 |
| E3 | 11100011 | BtoPPL-2 *(3) | F8 | 11111000 | MOVD-0 |
| E4 | 11100100 | DAC-2 | F9 | 11111001 | TEST-0 |
| E5 | 11100101 | TGA-4 | FA | 11111010 | LDAL-0 |
| E6 | 11100110 | DSB-2 | FB | 11111011 | STAL-0 |
| E7 | 11100111 | INDXtoA-6 | FC | 11111100 | JmpL-0 |
| E8 | 11101000 | RESET-1 | FD | 11111101 | CMPL-0 |
| E9 | 11101001 | TGA-1 | FE | 11111110 | CALL-0 |
| EA | 11101010 | MPY-3 | FF | 11111111 | RESET-0 |

*(n)—microinstruction is shared in n sequences

TABLE C
The microinstruction set

| Micro-instruction | Microinstruction bits | Operations |
|---|---|---|

IAQ-0 (00)   First half of instruction fetch; increment PCL via ALU

|  | #PCHtAH | PCH goes to AH bus |
|---|---|---|
|  | #PCLtP, #PAL | PCL goes to AL bus via P bus |
|  | default N | All zeros to N bus for input to ALU |
|  | #AluCntl=0000 | Add P and N for increment |
|  | #ShftCntl=0001 | Carry-in is "1" |
|  | #OtPCL | ALU output goes to PCL |
|  | #MEMCNT, #MEM | First half of long read |
|  | #JmpAddr=(36) | Unconditional jump to IAQ-1 |
|  | #JmpCntl=000 |  |

IAQ-1 (36)   Second half of inst. fetch; increment PCH; sample Interrupts

|  | Don't Care to AH, AL | Address went out on AH', AL' during first half |
|---|---|---|
|  | #PCHtP | PCH to P bus for ALU input |
|  | default N | All zeros to N bus for ALU input |
|  | #AluCntl=0000 | Add P and N |
|  | #ShftCntl=0010 | Increment on uC of PCL |
|  | #OtPCH | ALU output goes to PCH |
|  | #MEM | Second half of long read |
|  | #MDtIR | Instruction from memory goes to IR |
|  | #JmpAddr=(EO) | Test for interrupt; if not go to IAQ-2 |
|  | #JmpCntl=100 |  |

IAQ-2 (EO)   Prefetch B register; Group dispatch to addressing mode

|  | default AH | All zeros to AH bus |
|---|---|---|
|  | #ONEtAL | 01 on AL bus for B register address |
|  | #PAL | AL to P bus for pass |
|  | default N | All zeros to N bus for pass |
|  | #AluCntl=0000 | Add P and N for pass P |
|  | #ShftCntl=0000 | Zero carry in |
|  | #OtMAL | ALU output (B register address) goes to MAL |
|  | #MEM | Short memory read cycle to fetch B register |
|  | #MDtT | B register contents loaded into T register from MD bus |
|  | #JmpAddr=(40) | 24-Way Group dispatch based on contents of IR |
|  | #JmpCntl=101 |  |

BtoA-0 (4D)   B Register to A Register Addressing Mode; Fetch A Register to MAL

|  | default AH, AL | All zeros to AH, AL for A register address |
|---|---|---|
|  | #PAL | Zeros to P bus for pass |
|  | default | zeros to N bus for pass |
|  | #AluCntl=0000 | Add P plus N (pass zeros) |
|  | #ShftCntl=0000 | Zero carry in |
|  | #OtMAL | Zeros to MAL |
|  | #MEM | Fetch A Register, result on MD bus |
|  | #JmpAddr=(10) | Function dispatch to DOPFUN, using function field in IR |
|  | #JmpCntl=001 |  |

31

EP 0 063 458 B1

RFtoA-0 (43)   Register file to A Register Addressing Mode; 1st Half of long read; increment PCL

| | |
|---|---|
| #PCHtAH | Address for immediate fetch |
| #PCLtP | PCL to P bus |
| #PAL | PCL to AL via P bus |
| default N | Zeros to N bus for increment |
| #AluCntl=0000 | Add P plus N |
| #ShftCntl=0001 | Carry in is 1 to increment PCL |
| #OtPCL | Result from ALU back to PCL |
| #MEMCNT, #MEM | First half of long read |
| #JmpAddr=(84) | Uncond jump to RFtoA-1 (84) |
| #JmpCntl=000 | |

RFtoA-1 (84)   Second half of Register File Fetch; increment PCH; shared microstate

| | |
|---|---|
| Don't Care to AH, AL | Address bus continues from previous state |
| #PCHtP | Set up PCH for increment |
| default N | Zeros to N bus |
| #AluCntl=0000 | Add P plus zeros for increment |
| #ShftCntl=0010 | Microcarry uC in from PCL incr |
| #OtPCH | Sum to PCH |
| #MEM | 2nd half of long read; data on MD bus |
| #JmpAddr=(80) | Group Dispatch using field in IR |
| #JmpCntl=101 | |

RFtoA-2 (83)   Fetch register file operand

| | |
|---|---|
| default AH | Zeros to AH for RF address |
| #PAL,#MDtP | Low byte of RF address comes from previous memory fetch |
| default N | Zeros to N bus for pass |
| #AluCntl=0000 | Pass P bus to MAL using Add |
| #ShftCntl=0000 | Zero carry-in |
| #OtMAL | Result to MAL via O bus |
| #MEM | Short memory read |
| #MDtT | Read source operand into T register |
| #JmpAddr=(4D) | Uncond Jump to BtoA-0 for A register fetch |
| #JmpCntl=000 | |

RFtoB-0 (47)   Register file to B Register addressing mode; First half of long read; increment PCL

| | |
|---|---|
| #PCHtAH | Address for immediate fetch |
| #PAL,#PCLtP | PCL to AL and P bus |
| default N | Zeros to N for increment |
| #AluCntl=0000 | Add P plus N |
| #ShftCntl=0001 | Carry-in is 1 for increment |
| #OtPCL | Result back to PCL |
| #MEMCNT, #MEM | First half of long read |
| #JmpAddr=(84) | Uncond Jump to RFtoA-1 |
| #JmpCntl=000 | |

RFtoB-2 (87)   Fetch RF operand

| | |
|---|---|
| default AH | Zeros high byte for of RF address |
| #MDtP,#PAL | Low byte of RF address comes from previous fetch |
| default N | Zeros to N for pass P |
| #AluCntl=0000 | Add P plus N for pass |
| #ShftCntl=0000 | Zero carry |
| #OtMAL | Result to MAL |
| #MEM | Short read cycle |
| #MDtT | Read source operand into T register |
| #JmpAddr=(8B) | Uncond jump to ItoB-2 |
| #JmpCntl=000 | |

32

# EP 0 063 458 B1

RFtoRF-0 (49)  Register file to register file addressing mode; fetch RF and increment PCL

| | |
|---|---|
| #PCHtAH | High byte of address |
| #PCLtP,#PAL | PCL to AL and P bus for RF address |
| default N | Zeros to N for increment |
| #AluCntl=0000 | Add P plus N |
| #ShftCntl=0001 | Carry-in is 1 for increment |
| #OtPCL | Result back to PCL |
| #MEMCNT;#MEM | First half of long read |
| #JmpAddr=(84) | Uncond jump to RFtoA-1 |
| #JmpCntl=000 | |

RFtoRF-2 (89)  Fetch register file operand

| | |
|---|---|
| default AH | High byte of register file address |
| #MDtP,#PAL | Low byte of address comes from previous fetch |
| default N | Zeros to N for pass P |
| #AluCntl=0000 | Add P plus N for pass |
| #ShftCntl=0000 | Zero carry |
| #OtMAL | Result to MAL |
| #MEM | Short read cycle |
| #MDtT | Source operand from RF to T register |
| #JmpAddr=(8F) | Uncond jump to ItoRF-2 to fetch destination operand |
| #JmpCntl=000 | |

ItoA-0 (45)  Fetch immediate operand; increment PCL

| | |
|---|---|
| #PCHtAH | Address for immediate fetch |
| #PCLtP,#PAL | PCL to AL and P bus for fetch and increment |
| default N | Zeros to N bus |
| #AluCntl=0000 | Add P plus N |
| #ShftCntl=0001 | Carry-in is 1 for increment |
| #OtPCL | Result back to PCL |
| #MEMCNT,#MEM | First half of long read |
| #JmpAddr=(9F) | Unconditional jump to ItoA-1 |
| #JmpCntl=000 | |

ItoA-1 (9F)  Second half of immediate fetch; increment PCH; shared microstate

| | |
|---|---|
| don't care AH, AL | Address defined in first half |
| #PCHtP | Set up PCH for increment |
| default N | Zeros to N bus |
| #AluCntl=0000 | Add P plus N |
| #ShftCntl=0010 | Micro carry in from PCL increment |
| #OtPCH | Result back to PCH |
| #MEM | Second half of long read |
| #MDtT | Source operand to T register |
| #JmpAddr=(80) | 3-way group dispatch on IR field |
| #JmpCntl=101 | |

ItoA-2 (85)  Fetch Register A as destination operand

| | |
|---|---|
| default AH, AL | Zeros to AH and AL for A register address |
| default P, N | Zeros to P and N busses |
| #AluCntl=0000 | Add P plus N; all zeros |
| #ShftCntl=0000 | Zero carry in |
| #OtMAL | Zeros to MAL |
| #MEM | Short read cycle for A register, result on MD |
| #JmpAddr=(12) | Function dispatch on IR low; DOPFUN |
| #JmpCntl=001 | |

33

ItoB-0 (4B)   Immediate operand to B register addressing mode

| | |
|---|---|
| #PCHtAH | High address for immediate fetch |
| #PCLtP,#PAL | PCL to AL and P bus for fetch and increment |
| default N | Zeros to N for increment |
| #AluCntl=0000 | Add P plus N |
| #ShftCntl=0001 | Carry in is 1 for increment |
| #OtPCL | Result back to PCL |
| #MEMCNT,#MEM | First half long read |
| #JmpAddr=(9F) | Jump to ItoA-1 (shared state) |
| #JmpCntl=000 | |

ItoB-2 (8B)   Fetch B register for destination operand

| | |
|---|---|
| default AH | Zeros to AH bus for register file address |
| #ONEtAL | 01 to AL bus for B register address |
| #PAL | 01 to P bus |
| default N | Zeros to N for pass |
| #AluCntl=0000 | Add P plus N for pass |
| #ShftCntl=0000 | Zero carry in |
| #OtMAL | Output to MAL |
| #MEM | Short read cycle for B register, result on MD |
| #JmpAddr=(10) | Function dispatch using IR low; to DOPFUN |
| #JmpCntl=001 | |

ItoRF-0 (4F)   Immediate operand to register file mode; increment PCL

| | |
|---|---|
| #PCHtAH | High byte of address for immed fetch |
| #PCLtP,#PAL | PCL to AL and P bus for fetch and increment |
| default N | Zeros to N |
| #AluCntl=0000 | Add PCL plus zeros with carry for increment |
| #ShftCntl=0001 | Carry-in=1 |
| #OtPCL | Result to PCL |
| #MEMCNT,#MEM | 1st half of long read |
| #JmpAddr=(9F) | Unconditional jump to ItoA-1 (shared) |
| #JmpCntl=000 | |

ItoRF-2 (8F)   Address fetch for register file destination operand; increment PCL

| | |
|---|---|
| #PCHtAH | Microcode same as ItoRF-0 |
| #PCLtP,#PAL | |
| default N | |
| #AluCntl=0000 | |
| #ShftCntl=0001 | |
| #OtPCL | |
| #MEMCNT,#MEM | |
| #JmpAddr=(81) | Uncond jump to ItoRF-3 |
| #JmpCntl=000 | |

ItoRF-3 (81)   Second half of register file address fetch

| | |
|---|---|
| don't care AH, AL | Address busses continued from previous cycle |
| #PCHtP | Set up PCH for increment |
| default N | Zeros to N bus |
| #AluCntl=0000 | Add P plus N |
| #ShftCntl=0010 | Increment on micro carry from PCL |
| #OtPCH | Result back to PCH |
| #MEM | Second half of long read |
| #JmpAddr=(86) | Unconditional jump to ItoRF-4 |
| #JmpCntl=000 | |

EP 0 063 458 B1

ItoRF-4 (86)   Fetch register file operand

| | |
|---|---|
| default AH | Zeros to AH for register file address |
| #MDtP,#PAL | LSH of address comes from fetch in previous state |
| default N | Zeros to N for pass P |
| #AluCntl=0000 | Add P plus N (Pass P) |
| #ShftCntl=0000 | Zero carry in |
| #OtMAL | Result to MAL |
| #MEM | Short read cycle for destination operand |
| #JmpAddr=(10) | Function dispatch on IR low; to DOPFUN |
| #JmpCntl=001 | |

AtoPPL-0 (50)   Addressing Mode for A register to peripheral page logical; fetch A register to T register as source operand

| | |
|---|---|
| default AH, AH | Zeros for A register address |
| don't care P,N | No ALU operation so P,N ALU and carry controls are "don't care" |
| don't care #AluCntl | |
| don't care #ShftCntl | |
| #MEM | Short read cycle |
| #MDtT | A reg contents to T reg as source operand |
| #JmpAddr=(52) | Uncond jump to BtoPPL-0 |
| #JmptCntl=000 | |

CMP-0 (1D)   Compare Function; Dual Op; Reg File

| | |
|---|---|
| don't care AH, AL | No memory cycle |
| #MDtP | Destination operand from memory to P bus |
| #TtN | Source operand from T reg to N bus |
| #AluCntl=0111 | Subtract |
| #ShftCntl=0001 | Carry-in=1 |
| #LST | Latch Status |
| #JmpAddr=(00) | Uncond jump to IAQ |
| #JmpCntl=000 | |

ST-0 (12)   Store Function; Move Source to Destination; Reg File

| | |
|---|---|
| default AH | Zeros to AH bus for RF address |
| #MALtAL | AL address from MAL |
| default P | Zeros to P bus for pass N |
| #TtN | Source operand from T reg to N bus |
| #AluCntl=0000 | Add function for pass |
| #ShftCntl=0000 | No carry-in |
| #LST | Latch Status |
| #MEM, #WR | Generates OtM; write result to dest address |
| #JmpAddr=(00) | Uncond jump to IAQ |
| #JmpCntl=000 | |

AND-0 (13)   AND Function; Dual Operand; Reg File

| | |
|---|---|
| default AH | Zeros to AH for RF address |
| #MALtAL | AL address from MAL |
| #MDtP | Destination operand from memory to P bus |
| #TtN | Source operand from T reg t N bus |
| #AluCntl=0001 | AND function in ALU |
| #ShftCntl=0000 | No carry-in |
| #LST | Latch Status |
| #MEM, #WR | Generate OtM; write result to destination address |
| #JmpAddr=(00) | Uncond jump to IAQ |
| #JmpCntl=000 | |

35

OR-0 (14) OR Function

  Same microcode as AND-0 except #AluCntl=0111 for OR

XOR-0 (15) XOR Function

  Same microcode as AND-0 except #AluCntl=1111 for XOR

BTH-0 (16) Bit Test, High; Dual Operand; Reg file

| Don't care AH, AL | No memory cycle |
| #MDtP | Destination operand for memory to P bus |
| #TtN | Source operand from T reg to N bus |
| #AluCntl=0001 | AND function |
| #ShftCntl=0000 | No carry-in |
| #LST | Latch Status |
| #JmpAddr=(44) | Uncond jump to DRJN-1 then RJMP-3 |
| #JmpCntl=000 | |

BTL-0 (17) Bit Test, Low

  Same microcode as BTH-0 except #AluCntl=1011 for inverted-P and N

ANDP-0 (F3) And Function for Peripheral Page; Dual Operand

| #ONEtAH | Peripheral page address |
| #MALtAL | AL from MAL |
| #MDtP | Destination operand from memory to P bus |
| #TtN | Source operand from T reg to N bus |
| #AluCntl=0001, | |
|  #ABL=1 | Logical AND |
| #ShftCntl=0000 | No carry |
| #LST | Latch status |
| #MEMCNT, #MEM, #WR | 1st half long write; ALU result on MD (OtM) |
| #JmpAddr=(8E) | Uncond jump to STAL-2 |
| #JmpCntl=000 | |

ORP-0 (F4) OR Function for Peripheral Page; Dual Operand

  Microcode same as ANDP-0 (F3) except #AluCntl=0111, #ABL=1
  for OR instead of AND

XORP-0 (F5) Exclusive OR Function for Peripheral Page; Dual Operand

  Microcode same as ANDP-0 (f3) except #AluCntl=1111, #ABL=1
  for XOR

BTHP-0 (F6) Bit Test High Function, Peripheral; Dual Operand

| Don't Care AH, AL | No memory cycle |
| #MDtP | Destination operand from memory to P bus |
| #TtN | Source operand from T reg to N bus |
| #AluCntl=0001, | |
|  #ABL=1 | P AND N performed in ALU |
| #ShftCntl=0000 | No carry |
| #LST | Latch status |
| #JmpAddr=(44) | Uncond jump to DRJN-1 |
| #JmpCntl=0000 | |

BTLP-0 (F7) Bit Test Low Function, Peripheral; Dual Operand

  Microcode same as BTHP-0 (F6) except #AluCntl=1011, #ABL=1
  for (Not P) AND N function

36

PUSH-0 (28)  Push Function; Single Operand is in T reg from Addressing Mode;
Increment stack Pointer

| | |
|---|---|
| Don't care AH | No memory cycle |
| #SPtAL, #PAL | SP to ALU via AL and P busses |
| default N | Zeros to N |
| #AluCntl=0000 | Add zeros to SP with carry-in for increment |
| #ShftCntl=0001 | Carry-in=1 |
| #OtSP | Result back to SP |
| #JmpAdr=90 | Uncond jump to Push-1 |
| #JmpCntl=000 | |

PUSH-1 (90)  Push con't; Write single operand onto stack

| | |
|---|---|
| default AH | Zeros to AH for RF address |
| #SPtAL | R address is SP |
| default P | Zeros to P bus |
| #TtN | Operand from T reg to N for pass N |
| #AluCntl=0000 | Add zeros to T for pass |
| #ShftCntl=0000 | No carry-in |
| #MEM, #WR | Short memory write; OtM asserted; write T reg contents on stack |
| #JmpAddr=(00) | Uncond jump to IAQ-0 |
| #JmpCntl=000 | |

POP-0 (29)  Pop Stack; Fetch Top of Stack and Decrement stack Pointer

| | |
|---|---|
| default AH | Zeros to AH for RF address |
| #SPtAL | RF address is SP |
| #PAL | SP to P for decrement in ALU |
| default N | Zeros to N bus |
| #AluCntl=1111 | P minus N minus 1 |
| #ShftCntl=0000 | No carry-in |
| #OtSP | Result back to SP |
| #MEM | Read top of stack from RF |
| #MDtT | From memory back to T reg |
| #JmpAddr=(92) | Uncond jump to XCHB-1 for dest write |
| #JmpCntl=000 | |

DecD-0 (2B)  Decrement Double: Least Sig Half Register Decrement, Back to Memory

| | |
|---|---|
| default AH | For RF address |
| #MALtAL | Reg address from MAL |
| #MDtP | LSH from memory to P bus |
| default N | Zeros to N bus for decrement P |
| #AluCntl=1111 | Decrement LSH |
| #ShftCntl=0000 | |
| #LST | Latch status; save borrow |
| #MEM, #WR | Write LSH lack to MEM; OtM asserted |
| #JmpAddr=(40) | Uncond jump to DecD-1 |
| #JmpCntl=000 | |

DecD-1 (40)  Load Zeros to T (for sharing with SUB microcode)

| | |
|---|---|
| Don't Care AL, AH | No memory cycle |
| default N, P | Zeros to N and P busses |
| #AluCntl=0000 | Add zeros |
| #ShftCntl=0000 | No carry |
| OtM, #MDtT | ALU output to T reg (zeros) |
| #JmpAddr=(42) | Uncond jump to DecD-2 |
| #JmpCntl=000 | |

DecD-2 (42)   Decrement MAL to Point to the Most Sig Half

|  |  |
|---|---|
| Don't Care AH | No memory cycle |
| #MALtAL, #PAL | MAL to P via AL bus |
| default N | Zeros to N bus |
| #AluCntl=1111 | Decrement P bus (MAL Reg) |
| #ShftCntl=0000 | |
| OtM | Result to MD bus |
| #JmpAddr=(81) | Uncond Jump to ItoRF-4 then to Sub-0 |
| #JmpCntl=000 | |

DRJN-0 (2A)   Decrement Reg and Jump on Not Zero; First State decrements and
writes back, set u zero

|  |  |
|---|---|
| default AH | RF address is zeros on AH |
| #MALtAL | RF address is destination in MAL |
| #MDtP | Destination operand to P bus from memory |
| default N | Zeros on N bus for decrement |
| #AluCntl=1111 | Subtract for decrement; set u zero |
| #ShftCntl=0000 | |
| #MEM; #WR | Write ALU output via OtM to destination |
| #JmpAddr=(44) | Uncond jump to DRJN-1 |
| #JmpCntl=000 | |

DRJN-1 (44)   Con't; 1st half of Offset Fetch

|  |  |
|---|---|
| #PCHtAH | PCH to address high and |
| #PCLtP, #PAL | PCL to address low to fetch immed offset |
| default N | Zeros to N bus for increment P |
| #AluCntl=0000 | Add P bus (PCL) to zeros, carry-in=1 |
| #ShftCntl=0001 | Carry-in=1 for increment |
| #OtPCL | Result back to PCL |
| #MEMCNT, #MEM | 1st half of long read |
| #JmpAddr=(8C) | "Micro equal zero" dispatch; if UEZ=1 go to DRJN-1 (8D), else to DRJN-3 (8C) |
| #JmpCntl=011 | |

DRJN-2 (8D)   Con't; No jump, return to IAQ; 2nd half of Immed Fetch

|  |  |
|---|---|
| Don't care AH, AL | No memory cycle |
| #PCHtP | PCH to P bus |
| default N | Zeros to N for increment |
| #AluCntl=0000 | Add P bus (PCH) plus zeros |
| #ShftCntl=0010 | Micro carry-in; increment PCH if carry from PCL |
| #OtPCH | Result back to PCH |
| #MEM; #MDtT | 2nd half long read; offset back to T reg |
| #JmpAddr=(00) | Uncond jump to IAQ-0 |
| #JmpCntl=000 | |

DRJN-3 (8C)   Con't; Jump Condition Valid; 2nd Half Immed Fetch

Microcode same as DRJN-2 (8D) except #JmpAddr=(9C) to go to
RJMP-3 to complete relative jump

RR-0 (2C)   Rotate Right Circular; Single Operand Function

| default AH | Zeros for RF address on AH |
|---|---|
| #MALtAL | RF address in MAL from addressing mode |
| #MDtP | Destination operand from memory to P bus |
| default N | Zeros to N for pass P |
| #AluCntl=0000 | Add zeros to P |
| #ShftCntl=1001 | Rotate right, carry-in=0 |
| #LST | Latch status |
| #MEM, #WR | Result to MD; OtM asserted; write in destination address |
| #JmpAddr=(00) | Uncond jump to IAQ |
| #JmpCntl=000 | |

RRC-0 (2D)   Rotate Right Thru Carry

Microcode same as RR-0 (2C) except #ShftCntl=1011 for rotate right thru carry

RL-0 (2E)   Rotate Left Circular; shared as 4th rotate in Swap Function

Microcode same as RR-0 (2C) except #ShftCntl=0101 for rotate left

RLC-0 (2F)   Rotate Left Thru Carry

Microcode same as RR-0 (2C) except #ShftCntl=0111 for rotate left thru carry

STA-0 (20)   Store A (Move from A) Function; Fetch A Reg to Move to B Reg or RF

| default AH, AL | Zeros for Reg A address |
|---|---|
| Don't Care P, N, | |
| #AluCntl | No ALU operation |
| #MEM, #MDtT | Read A reg to T reg |
| #JmpAddr=(21) | Uncond jump to STB-0 to write A reg to destination address |

STB-0 (21)   Store B (Move from B) Function; Move T Reg to Destination Address in MAL; used for MOV A,B; MOV A, RF; MOV B, RF; TST A; TST B

| default AH | Zeros on AH for RF address |
|---|---|
| #MALtAL | Destination address to AL |
| default P | Zeros to P bus |
| #TtN | Source operand from T reg to N bus |
| #AluCntl=0000 | Pass destination operand |
| #ShftCntl=0000 | Carry-in=0 |
| #LST | Latch status |
| #MEM, #WR | Result via OtM to destination address in RF |
| #JmpAddr=(00) | Uncond jump to IAQ |
| #JmpCntl=000 | |

DEC-0 (23)   Decrement; Single Operand Function

Microcode same as Decrement Double DecD-0 (2B) except #JmpAddr=(00); #JmpCntl=000 for return to IAQ

INC-0 (23)   Increment; Single Operand Function

Microcode same as DEC-0 (22) except #AluCntl=0000; #ShftCntl=0001 for add-1 or increment

INV-0 (24)  Invert; Single Operand Function

| | |
|---|---|
| default AH | Zeros to AH for RF address |
| #MALtAL | RF address is in MAL from addressing mode |
| #MDtP | Destination operand from memory to P bus |
| don't care N | One operand so N bus is don't care |
| #AluCntl=1010, | |
| #ABL=1 | Invert P |
| #ShftCntl=0000 | Carry-in 0 |
| #LST | Latch status |
| #MEM, #WR | Write result via OtM to destination address |
| #JmpAddr=(00) | Uncond jump to IAQ |
| #JmpCntl=000 | |

CLR-0 (25)  Clear; Single Operand Function

Microcode same as INV-0 (24) except #AluCntl=1001 for zeros

XCHB-0 (26)  Exchange B Reg with Destination Operand; 1st state-write destination operand in B reg.

| | |
|---|---|
| default AH | Zeros to AH for RF address |
| #ONEtAL | B reg address to AL |
| #MDtP | Destination operand from memory to P bus |
| default N | Zeros to N bus for pass P |
| #AluCntl=0000 | Add P plus zeros |
| #ShftCntl=0000 | Carry-in=0 |
| #LST | Latch status |
| #MEM, #WR | Write via OtM to B reg |
| #JmpAddr=(92) | Uncond jump to XCHB-1 |
| #JmpCntl=000 | |

XCHB-1 (92)  Write B Reg to Destination Location

| | |
|---|---|
| default AH | Zeros to AH for RF address |
| #MALtAL | MAL to AL for destination address |
| default P | Zeros to P bus for pass N |
| #TtN | B reg operand from T reg to N bus |
| #AluCntl=0000 | Add zeros to N using Add |
| #ShftCntl=0000 | No carry-in |
| #MEM, #WR | Memory writes; generates OtM; T reg contents thru ALU to Destination |
| #JmpAddr=(00) | Uncond jump to IAQ |
| #JmpCntl=000 | |

SWAP-0 (27)  Single Operand Swap function; First rotate back to MD bus

| | |
|---|---|
| don't care AH, AL | No memory cycle |
| #MDtP | Operand from ALU to P bus |
| default N | Zeros to N bus for pass P |
| #AluCntl=0000 | Add zeros to P for Pass |
| #ShftCntl=0101 | Shift is "rotate left circular" |
| #OtM | Result back to MD bus |
| #JmpAddr=(96) | Uncond jump to SWAP-1 |
| #JmpCntl=000 | |

SWAP-1 (96)  Second rotate back to MD bus

Same microcode as SWAP-0 (27); uncond jump to SWAP-2

SWAP-2 (98)  Third rotate back to MD bus

Same as SWAP-0 (27); uncond jump to RL-0 (2E) for 4th rotate to complete byte swap

# EP 0 063 458 B1

LDAL-0 (FA)   Load A Reg From Long Addressing Mode; 1st Half of Long Operand Read

| | |
|---|---|
| #TtAH | T Reg has high byte of long address |
| #MALtAL | MAL has low byte of long address |
| default P, N | Zeros to P and N busses for pass zero |
| #AluCntl=0000 | Pass zeros by Add operation |
| #ShftCntl=0000 | No carry-in |
| #OtMAL | Zeros to MAL (to share STB-0) |
| #MEMCNT, #MEM | 1st half long read |
| #JmpAddr=(20) | Uncond jump to STA-0 to read 2nd, write A |
| #JmpCntl=000 | |

STAL-0 (FB)   Store A Reg to Long Addressing Mode; Read A Reg

| | |
|---|---|
| default AH, AL | A Reg address is all zeros |
| Don't care P, N | |
| #AluCntl, #ShftCntl | No ALU cycle |
| #MEM | Read A Reg; contents on MD bus |
| #JmpAddr=(9D) | Uncond jump to STAL-1 |
| #JmpCntl=000 | |

STAL-1 (9D)   Store A Long Write Operation

| | |
|---|---|
| #TtAH | T has address high |
| #MALtAL | MAL has address low |
| #MDtP | A coming from memory to P bus |
| default N | Zeros to N bus for pass |
| #AluCntl=0000 | Add operation for pass |
| #ShftCntl=0000 | No carry-in |
| #LST | Latch status |
| #MEMCNT; #MEM, #WR | 1st half long write; ALU to MD by OtM |
| #JmpAddr=(8E) | Uncond jump to STAL-2 |
| #JmpCntl=000 | |

STAL-2 (8E)   Store A Long Write (con't)

| | |
|---|---|
| default AH | Zeros to AH for RF |
| #ONEtAL | 0001 to AL for B Reg address |
| #MDtP | Result from prior state from MD to P bus |
| default N | Zeros to N for Pass |
| #AluCntl=0000 | Pass MD back around to MD |
| #ShftCntl=0000 | No carry-in |
| #MEM, #WR | Generates OtM; 2nd half of long write |
| #JmpAddr=(00) | Uncond jump to IAQ |
| #JmpCntl=000 | |

CMPL-0 (FD)   Compare Long; 1st Half of Long Operand Fetch

| | |
|---|---|
| #TtAH | T Reg has high byte of address |
| #MALtAL | MAL Reg has low byte of address |
| Don't Care P, N | |
| Don't Care #AluCntl, #ShftCntl | No ALU cycle |
| #MEMCNT, #MEM | 1st half of long read |
| #JmpAddr=(83) | Uncond jump to RFtoA-2 |
| #JmpCntl=000 | |

41

JmpL-0 (FC)   Long Jump Function; Enters with High byte in T reg, Low Byte in MAL

| | |
|---|---|
| Don't Care AH, AL | No memory cycle |
| default P | Zeros to P bus |
| #TtN | T reg (High byte of long address) to N bus |
| #AluCntl=0000 | Pass N using Add |
| #ShftCntl=000 | No carry-in |
| #OtPCH | ALU output to PCH |
| #JmpAddr=(EB) | Uncond jump to JmpL-1 |
| #JmpCntl=000 | |

JmpL-1 (EB)   Jump Long; Move Low byte of address to PCL

| | |
|---|---|
| don't care AH | No memory cycle |
| #MALtAL, #PAL | Low byte to P bus via AL bus |
| default N | Zeros to N for pass P bus |
| #AluCntl=0000 | Pass P using Add |
| #ShftCntl=0000 | No carry-in |
| #OtPCL | Low byte from ALU to PCL |
| #JmpAddr=(00) | Uncond jump to IAQ |
| #JmpCntl=000 | |

Call-0 (FE)   Long Call Function; Enters with high byte of address in T reg, low byte in MAL

| | |
|---|---|
| Don't Care AH | No memory cycle |
| #SPtAL, #PAL | SP to P bus via AL bus |
| default N | Zeros to N bus |
| #AluCntl=0000 | Zeros with carry for increment |
| #ShftCntl=0001 | Carry-in=1 |
| #OtSP | Incremented SP back to SP |
| #JmpAddr=(OC) | Uncond jump to trap sequence TGA-6 |
| #JmpCntl=000 | |

INT-0 (E1)   Interrupt Routine: Int Ack; Subtract for Idle Test

| | |
|---|---|
| default AH, AL | Zeros to AH, AL busses to put out known value during Int Acknowledge |
| #MDtP | Instruction to P bus for Idle Test |
| default N | Zeros to N bus for decrement |
| #AluCntl=1111 | Subtract one to check for zero |
| #ShftCntl=0000 | Carry-in=0 |
| #MEMCNT | 1st half of Int Ack; asserts Int Ack |
| #JmpAddr=(4E) | Uncond jump to INT-1 |
| #JmpCntl=000 | |

INT-1 (4E)   Interrupt Routine; Increment SP; Test for Zero (Idle)

| | |
|---|---|
| don't care AH | Address latched during INT-0 |
| #SPtAL, #PAL | SP to AL bus and P bus |
| default N | Zeros to N for increment |
| #AluCntl=0000 | Add for increment |
| #ShftCntl=0001 | Carry-in=1 |
| #OtSP | Result bck to SP |
| #MDtIR | Vector from device to IR; Int Ack asserted |
| #JmpAddr=(02) | Jump on micro equal zero; if Idle go to INT-4, else go to INT-2 |
| #JmpCntl=011 | |

INT-2 (02)  Decrement PCL for all instructions except idle

| | |
|---|---|
| don't care AH | No memory cycle |
| #PAL, #PCLtP | PCL to P bus via AL |
| default N | Zeros to N for decrement |
| #AluCntl=1111 | Subtract to decrement PCL |
| #ShftCntl=0000 | Carry-in=0 |
| #OtPCL | Result back to PCL |
| #JmpAddr=(39) | Uncond jump to INT-3 |
| #JmpCntl=000 | |

INT-3 (39)  Decrement PCH if Borrow from PCL

| | |
|---|---|
| don't care AH, AL | No memory cycle |
| #PCHtP | PCH to P bus |
| default N | Zeros to N bus |
| #AluCntl=1111 | Decrement PCH if borrow |
| #ShftCntl=0010 | uC in |
| #OtPCH | Result to PCH |
| #JmpAddr=(03) | Uncond jump to INT-4 |
| #JmpCntl=000 | |

(Note: Interrupts are one address apart because they share the trap code which rotates the address left).

INT-4 (03)  Write Status to Stack

| | |
|---|---|
| default AH | Zeros to AH for RF address |
| #SPtAL | SP to AL for stack write |
| default P | Zeros to P bus for pass N |
| #STtN | Status Reg to N bus |
| #AluCntl=0000 | Pass N bus using Add |
| #ShftCntl=0000 | Carry-in=0 |
| #MEM, #WR | Write Status Reg to Stack |
| #JmpAddr=(48) | Uncond jump to INT-5 |
| #JmpCntl=000 | |

INT-5 (48)  Clear Int Enable in Status

| | |
|---|---|
| don't care AH, AL | No memory cycle |
| default P, N | Zeros to P and N busses |
| #AluCntl=0000 | ALU all zeros |
| #ShftCntl=0000 | Carry-in=0 |
| #OtST | Zeros to Status Reg |
| #JmpAddr=(5F) | Uncond jump to TGA-0 |
| #JmpCntl=000 | |

# EP 0 063 458 B1

TABLE E
Group Dispatch
Selection of addressing mode

| Format "0" | | | | Format "1" | | | |
|---|---|---|---|---|---|---|---|
| IR contents | CROM address | | Micro-instruction | IR contents | CROM address | | Micro-instruction |
| | Hex | Binary | | | Hex | Binary | |
| 0000XXXX | 41 | 01000001 | MISC-0 | 10000XXX | 50 | 01010000 | AtoPPL-0 |
| 0001XXXX | 43 | 01000011 | RFtoA-0 | 10001XXX | 51 | 01010001 | DIRtoA-0 |
| 0010XXXX | 45 | 01000101 | ItoA-0 | 10010XXX | 52 | 01010010 | BtoPPL-0 |
| 0011XXXX | 47 | 01000111 | RFtoB-0 | 10011XXX | 53 | 01010011 | INDtoA-0 |
| 0100XXXX | 49 | 01001001 | RFtoRF-0 | 10100XXX | 54 | 01010100 | ItoPPL-0 |
| 0101XXXX | 4B | 01001011 | ItoB-0 | 10101XXX | 55 | 01010101 | INDXtoA-0 |
| 0110XXXX | 4D | 01001101 | BtoA-0 | 10110XXX | 56 | 01010110 | SglAS-0 |
| 0111XXXX | 4F | 01001111 | ItoRF-0 | 10111XXX | 57 | 01010111 | SglA-0 |
| | | | | 11000XXX | 58 | 01011000 | SglBS-0 |
| | | | | 11001XXX | 59 | 01011001 | SglB-0 |
| | | | | 11010XXX | 5A | 01011010 | SglRFS-0 |
| | | | | 11011XXX | 5B | 01011011 | SglRF-0 |
| | | | | 11100XXX | 5C | 01011100 | RJmp-0 |
| | | | | 11101XXX | 5D | 01011101 | TGC-0 |
| | | | | 11110XXX | 5E | 01011110 | TGB-0 |
| | | | | 11111XXX | 5F | 01011111 | TGA-0 |

CROM Address=Base Address bits J7, J6, J5 (base address is 40 in hex); plus the 4-bit group field or IR7, IR6, IR5, IR4 multiplied by 2 or left shifted one bit; plus IR3 or $\overline{IR7}$.

| J7 | J6 | J5 | IR7 | IR6 | IR5 | IR4 | IR3 or $\overline{IR7}$ |
|---|---|---|---|---|---|---|---|

44

**EP 0 063 458 B1**

TABLE F
Function dispatch
Selection of function to be executed
for dual operand function

| Opcode: IR contents | CROM address | | Microinstruction |
| --- | --- | --- | --- |
| | Hex | Binary | |
| 0XXX0010 | 12 | 00010010 | ST-0 |
| 0XXX0011 | 13 | 00010011 | AND-0 |
| 0XXX0100 | 14 | 00010100 | OR-0 |
| 0XXX0101 | 15 | 00010101 | XOR-0 |
| 0XXX0110 | 16 | 00010110 | BTH-0 |
| 0XXX0111 | 17 | 00010111 | BTL-0 |
| 0XXX1000 | 18 | 00011000 | ADD-0 |
| 0XXX1001 | 19 | 00011001 | ADC-0 |
| 0XXX1010 | 1A | 00011010 | SUB-0 |
| 0XXX1011 | 1B | 00011011 | SBB-0 |
| 0XXX1100 | 1C | 00011100 | MPY-0 |
| 0XXX1101 | 1D | 00011101 | CMP-0 |
| 0XXX1110 | 1E | 00011110 | DAC-0 |
| 0XXX1111 | 1F | 00011111 | DSB-0 |

CROM Address=Base address bits J7, J6, J5, J4 (here hex 10); plus function field of OPCODE (IR3, IR2, IR1, IR0)

| J7 | J6 | J5 | J4 | IR3 | IR2 | IR1 | IR0 |
| --- | --- | --- | --- | --- | --- | --- | --- |

45

### TABLE G
Summary of dispatch modes

| Dispatch mode | Microcode bits #JmpCntl | | | Operation |
|---|---|---|---|---|
| | 2 | 1 | 0 | |
| Unconditional | 0 | 0 | 0 | Unconditional jump to #JmpAddr(7-0) location. |
| Function | 0 | 0 | 1 | Function dispatch; 16-way branch on low-order 4 bits of IR |
| Test sign bit. | 0 | 1 | 0 | 2-way branch on T(7), MSB of T Reg |
| Test if zero | 0 | 1 | 1 | Micro equal zero, uEZ, bit from ALU tested. |
| Test for interrupt | 1 | 0 | 0 | Interrupt active bit is tested |
| Group | 1 | 0 | 1 | Group dispatch—24-way branch on high order 5 bits of IR. |
| Test if carry | 1 | 1 | 0 | Test STC bit |
| Test status | 1 | 1 | 1 | Macro jump; test status bits dependent or low-order 3 bits of IR. |
| Reset | X | X | X | Forces µA to FF unconditionally, regardless of current #JmpAddr or #JmpCntl bit |

### TABLE H
Memory control

| #MEMCNT (current) | #MEMCNT (previous) | #MEM | #WR | Memory reference | OtM |
|---|---|---|---|---|---|
| 0 | 0 | 0 | 0 | —No Mem Reference— | 0 |
| 0 | 0 | 0 | 1 | Gate O bus to MD bus | 1 |
| 0 | 0 | 1 | 0 | Short memory read | 0 |
| 0 | 0 | 1 | 1 | Short memory write | 1 |
| 0 | 1 | 0 | 0 | 2nd State int. vector | 0 |
| 0 | 1 | 0 | 1 | *Illegal* | 1 |
| 0 | 1 | 1 | 0 | 2nd State long read | 0 |
| 0 | 1 | 1 | 1 | 2nd State long write | 1 |
| 1 | 0 | 0 | 0 | 1st State int. vector | 1 |
| 1 | 0 | 0 | 1 | *Illegal* | 1 |
| 1 | 0 | 1 | 0 | 1st State long read | 1 |
| 1 | 0 | 1 | 1 | 1st State long write | 1 |
| 1 | 1 | x | x | *Illegal* | 1 |

# EP 0 063 458 B1

### TABLE I
### Macrojumps

| IR Bits | | | Condition tested | | | Comment |
|---|---|---|---|---|---|---|
| 2 | 1 | 0 | STC | STSB | STEZ | |
| 0 | 0 | 0 | — | — | — | Unconditionally jump |
| 0 | 0 | 1 | — | 1 | — | Jump if negative |
| 0 | 1 | 0 | — | — | 1 | Jump if zero |
| 0 | 1 | 1 | 1 | — | — | Jump if carry |
| 1 | 0 | 0 | — | 0 | 0 | Jump if positive |
| 1 | 0 | 1 | — | 0 | — | Jump if positive or zero |
| 1 | 1 | 0 | — | — | 0 | Jump if not zero |
| 1 | 1 | 1 | 0 | — | — | Jump if no carry |

## Claims

1. An electronic digital processor system comprising:
internal memory means (11, 12) for storage of data and instructions which define operations on said data and other functions of the system;
arithmetic and logic means (14) for performing said operations on said data;
register means (15) for temporary storage of said data and temporary storage of addresses for accessing said internal memory means;
a plurality of data paths (16, MD, AH, AL) coupling said internal memory means, said arithmetic and logic means, and said register means; and
control and timing circuitry means (21, 17) coupled to said data paths, said control and timing circuitry means receiving instructions from said internal memory means via said data paths and generating command signals to said arithmetic and logic means, to said data paths, and to said register means for execution of said instructions to define the operation of the processor system;
characterized by peripheral control circuitry means (25, 26, 26A, 26B, 26C, 27, 28) for providing one of a plurality of memory configurations which provide access to said internal memory means while providing offset addressing access to peripheral components including a plurality of multi-bit input/output ports (A, B, C, D) for providing input and output of information for the processor system, said peripheral control circuitry means being coupled to said data paths for transferring addresses and data and receiving command signals from said control and timing circuitry means.

2. An electronic digital processor system as set forth in claim 1, further characterized in that said peripheral control circuitry means comprises a peripheral file (PF) having a plurality of address locations within a given address range and separate from said register means, a plurality of directional control registers (P7, P9, P11) for the input/output ports included within said peripheral file, an interval timer (26) including a plurality of counter and control registers (26, 26A, 26B, 26C), and interrupt control circuitry (29) including at least one interrupt control register (25) and having outputs coupled to said control and timing circuitry means.

3. An electronic digital processor system as set forth in claim 2, further characterized by offset circuitry (BCD) included in said peripheral file and coupled to said data paths to provide offset addressing for said peripheral file by loading said data paths with an offset address when accessing peripheral components in said peripheral file.

4. An electronic digital processor system as set forth in either of claims 2 or 3, further characterized in that said memory configurations are internally programmable according to values of bit positions in said register means coupled to said peripheral file by said data paths.

5. An electronic digital processor system as set forth in claim 5, further characterized in that said memory configurations are determined by internally programmable bits of bit positions of a register contained within said interrupt control circuitry.

6. An electronic digital processor system as set forth in claim 5, further characterized in that said memory configurations are determined by a combination of internally programmable bits of bit positions of register means and by an input for an external device.

7. An electronic digital processor system as set forth in claim 5, further characterized in that said memory configurations are determined by a combination of internally programmable bits of bit positions of said register means and an external programmable bit input.

8. An electronic digital processor system as set forth in claim 4, further characterized in that said memory configurations are determined by internally programmable bits of bit positions contained within a register of said interrupt control circuitry and by an external programmable bit input.

9. An electronic digital processor system as set forth in claim 8, further characterized in that said memory configurations include a first configuration (Figure 2A) providing said internal memory means for storage of said data and said instructions, a plurality of input/output ports, an output port, and an input port for transmission of output data and reception of input data from an external device.

10. An electronic digital processor system as set forth in claim 9, further characterized in that said memory configurations include a second configuration (Figure 2B) that provides said internal memory means for storage of data and instructions, an input/output port, an output port, and an input port for the transmission of output data and reception of input data from said external device, and means for addressing, sending, and receiving said data to an external memory means.

11. An electronic digital processor system as set forth in claim 10, further characterized in that said memory configurations include a third configuration (Figure 2C) providing said internal memory means for storage of data and instructions, an input port and an output port for the transmission of output data and reception of input data and means for addressing, receiving and sending said data to said external memory means.

12. An electronic digital processor system as set forth in claim 11, further characterized in that said memory configurations include a fourth configuration (Figure 2D) providing an input port and an output port for the transmission of output data and the reception of input data from said external device, said internal memory means for the storage of data, and an addressing, receiving and sending means coupled to said external memory means for the storage of said instructions.

13. An electronic digital processor system as set forth in claim 12, further characterized in that said memory configurations include a fifth configuration (Figure 2E) providing said internal memory means for storage of data, and an addressing, sending, and receiving means connected to said external memory means for the storage of said data and said instructions.

14. An electronic digital processor system as set forth in claim 1, wherein said internal memory means comprises first internal memory means (11) for storage of instruction which define operations of the system on data, and second internal memory means (12) for storage of data;

further characterized by interrupt control circuitry for receiving an input from a terminal (INT-1, INT-2, INT-3,) of said processor system and coupled to said control and timing circuitry means to interrupt the execution of a sequence of said command signals, a plurality of input/output registers (30) and coupling means (MD) connecting said input/output registers to said data paths for access by addresses in said register means, a plurality of input/output terminals (A, B, C, D) coupled to said input/output registers, and emulator control means (25, 13R—Figure 13D) for receiving an input from a terminal of said device and coupled to said control and timing circuitry means to disable said first internal memory means, whereby addresses are output to said input/output registers, and said interrupt control circuitry and to disable said coupling means whereby said input/output registers are not accessed by addresses from said register means.

15. An electronic digital processor system as set forth in claim 14, further characterized by external memory means (13Q—Figure 13D) for storage of commands which define operations in the system on said data having an address input and a data output, and external bus means coupled to said address input and said data output of said external memory means, and coupled to said input/output terminals for receiving addresses from said register means and for transferring data from the external memory means to said register means.

16. An electronic digital processor system as set forth in claim 1, wherein said internal memory means comprises first internal memory means (11) for permanently storing instruction words defining the operations of the system, and second internal memory means defining a read/write memory (12) for the storage of data, said control and timing circuitry means generating said command signals in response to instruction words from said first memory means or from said read/write memory;

further characterized by control latch means (25, 26, 26A, 26B, 26C) accessed via said data paths by said control and timing circuitry means to select the functions of said plurality of input/output ports to define a single-chip microcomputer mode using the ports as data I/O and an expanded memory mode using at least one port as an external memory address and another port as an external memory control;

and means (27, 28, 18) for loading said control latch means with data stored in the memory means or the read/write memory via said data paths and said register means to switch from said microcomputer mode to said expanded memory mode to load instruction words into said read/write memory in response to instruction words and to switch from said expanded memory mode to said microcomputer mode to execute said instruction word which has been loaded into said read/write memory.

17. An electronic digital processor system as set forth in claim 16, further characterized by a reset control (RST) and means for loading said control latch means to define said microcomputer mode when the reset control is activated.

18. A method of operating a microcomputer device of the type having:

an arithmetic/logic unit (14);

a plurality of data/address registers (15);

bus means (16) for accessing the arithmetic/logic unit and the registers;

an instruction register (IR);

a read/write memory (12) accessed via said bus means using said register; and

memory means (11) for permanently storing instruction words and control means (17, 22) for defining the operation of the arithmetic/logic unit, the registers and said bus means in response to instruction words in the instruction register;

wherein a plurality of multi-bit input/output ports (A, B, C, D) are provided for access to external circuitry via said bus means;

characterized in that the method comprises the steps of:

fetching an instruction word to set the device in an operation mode in which at least one of the ports is an address output and at least one of the ports includes memory control signal outputs to access an external memory;

loading instruction words via said ports and said bus means to the read/write memory;

fetching another instruction word to generate commands setting the device in an operating mode wherein the ports function only as data input/output;

fetching a sequence of instruction words from said read/write memory to generate commands causing the performance of operations in the arithmetic/logic unit; and

activating selected bits of at least one of said ports based upon the results of said operations.

19. A method as set forth in claim 18, further characterized by generating a microinstruction address from each said instruction word in the instruction register, and coupling said microinstruction address to a microcode store within said control means to start outputting a sequence of microinstructions from the microcode store.

20. A method as set forth in either of claims 18 or 19, further characterized in that setting the device in an operating mode includes loading a control latch with data fetched from the memory means.


**Patentansprüche**

1. Elektronisches, digitales, Prozessorsystem, enthaltend: ein internes Speichermittel (11, 12) zum Speichern von Daten und von Operationen an den Daten und andere Funktionen des Systems definierenden Befehlen; ein Rechen- und Logikmittel (14) zur Durchführung der Operationen an den Daten; ein Registermittel (15) zum Zwischenspeichern der Daten und zum Zwischenspeichern von Adressen für den Zugriff auf das interne Speichermittel; mehrere Datenwege (16, MD, AH, AL), die das interne Speichermittel, das Rechen- und Logikmittel und das Registermittel miteinander koppeln; und Steuerungs- und Zeitablaufschaltungsmittel (21, 17), die mit den Datenwegen gekoppelt sind und die über die Datenwege von dem internen Speichermittel Befehle empfangen und Befehlssignale für das Rechen- und Logikmittel, die Datenwege und das Registermittel für die Ausführung der Befehle zur Definition der Operation des Prozessorsystems erzeugen, gekennzeichnet durch Peripherie - Steuerschaltungsmittel (25, 26, 26A, 26B, 26C, 27, 28) zur Schaffung einer von mehreren Speicherkonfigurationen, die einen Zugriff auf das interne Speichermittel ermöglichen, während sie einen Offset - Adressierungszugriff auf periphere Komponenten einschließlich mehrerer Mehrbit - Eingabe/Ausgabe - Anschlüsse (A, B, C, D) zum Eingeben und Ausgeben von Befehlen für das Prozessorsystem ermöglichen, wobei die Peripherie - Steuerschaltungsmittel mit den Datenwegen gekoppelt sind, damit Adressen und Daten übertragen und Befehlssignale von dem Steuerungs- und Zeitablaufsteuermittel empfangen werden.

2. Elektronisches, digitales Prozessorsystem nach Anspruch 1, dadurch gekennzeichnet, daß die Peripherie - Steuerschaltungsmittel eine periphere Datei (PF) mit mehreren Adressenplätzen innerhalb eines gegebenen Adressenbereichs getrennt von dem Registermittel enthalten, mehrere Richtungssteuerregister (P7, P9, P11) für die Eingabe/Ausgabe - Anschlüsse innerhalb der peripheren Datei enthalten, einen Intervallzeitgeber (26) mit mehreren Zähl- und Steueregistern (26, 26A, 26B, 26C) enthalten und eine Unterbrechungssteuerschaltung (29) mit wenigstens einem Unterbrechungssteuerregister (25) enthalten, das mit dem Steuerungs- und Zeitablaufschaltungsmittel gekoppelte Ausgänge aufweist.

3. Elektronisches, digitales Prozessorsystem nach Anspruch 2, gekennzeichnet durch eine Offsetschaltung (BCD), die in der peripheren Datei enthalten ist und mit den Datenwegen gekoppelt ist, damit eine Offset - Adressierung für die periphere Datei durch Laden der Datenwege mit einer Offset-Adresse erhalten wird, wenn ein Zugriff auf periphere Komponenten in der peripheren Datei erfolgt.

4. Elektronisches, digitales Prozessorsystem nach Anspruch 2 oder 3, dadurch gekennzeichnet, daß die Speicherkonfigurationen entsprechend Werten von Bitpositionen in dem über die Datenwege mit der peripheren Datei gekoppelten Registermittel intern programmierbar sind.

5. Elektronisches, digitales Prozessorsystem nach Anspruch 5, dadurch gekennzeichnet, daß die Speicherkonfigurationen durch intern programmierbare Bits an Bitpositionen eines in der Unterbrechungssteuerschaltung enthaltenen Registers bestimmt werden.

6. Elektronisches, digitales Prozessorsystem nach Anspruch 5, dadurch gekennzeichnet, daß die Speicherkonfigurationen durch eine Kombination intern programmierbarer Bits an Bitpositionen eines Registermittels und durch eine Eingabe für ein externes Gerät bestimmt werden.

49

7. Elektronisches, digitales Prozessorsystem nach Anspruch 5, dadurch gekennzeichnet, daß die Speicherkonfigurationen durch eine Kombination intern programmierbarer Bits an Bitpositionen des Registermittels und einen externen programmierbaren Biteingang bestimmt werden.

8. Elektronisches, digitales Prozessorsystem nach Anspruch 4, dadurch gekennzeichnet, daß die Speicherkonfigurationen durch intern programmierbare Bits an Bitpositionen innerhalb eines Registers der Unterbrechungssteuerschaltung und durch einen extern programmierbaren Biteingang bestimmt werden.

9. Elektronisches, digitales Prozessorsystem nach Anspruch 8, dadurch gekennzeichnet, daß die Speicherkonfigurationen eine erste Konfiguration (Fig. 2A), die das interne Speichermittel für das Speichern der Daten und der Befehle vorsieht, mehrere Eingabe/Ausgabe - Anschlüsse, einen Ausgabeanschluß, und einen Eingabeanschluß zum Übertragen von Ausgangsdaten und für den Empfang von Eingangsdaten von einem externen Gerät enthalten.

10. Elektronisches, digitales Prozessorsystem nach Anspruch 9, dadurch gekennzeichnet, daß die Speicherkonfigurationen eine zweite Konfiguration (Fig. 2B), die das interne Speichermittel für das Speichern von Daten und Befehlen vorsieht, einen Eingabe/Ausgabe - Anschluß, einen Ausgabeanschluß und einen Eingabeanschluß für das Übertragen von Ausgangsdaten und für den Empfang von Eingangsdaten von dem externen Gerät sowie Mittel zum Adressieren, Senden und Empfangen der Daten zu einem externen Speichermittel enthalten.

11. Elektronisches, digitales Prozessorsystem nach Anspruch 10, dadurch gekennzeichnet, daß die Speicherkonfigurationen eine dritte Konfiguration (Fig. 2C), die das interne Speichermittel für das Speichern von Daten und Befehlen vorsieht, einen Eingabeanschluß und einen Ausgabeanschluß für das Übertragen von Ausgangsdaten und den Empfang von Eingangsdaten sowie Mittel zum Adressieren, Empfangen und Senden der Daten zu dem externen Speichermittel enthalten.

12. Elektronisches, digitales Prozessorsystem nach Anspruch 11, dadurch gekennzeichnet, daß die Speicherkonfigurationen eine vierte Konfiguration (Fig. 2D) enthalten, die einen Eingabeanschluß und einen Ausgabeanschluß für das Übertragen von Ausgangsdaten und den Empfang von Eingangsdaten von dem externen Gerät vorsieht, das interne Speichermittel für das Speichern von Daten vorsieht und ein Adressierungs-, Empfangs- und Sendemittel, das mit dem externen Speichermittel gekoppelt ist, für das Speichern der Befehle vorsieht.

13. Elektronisches, digitales Prozessorsystem nach Anspruch 12, dadurch gekennzeichnet, daß die Speicherkonfigurationen eine fünfte Konfiguration (Fig. 2E) enthalten, die das interne Speichermittel für das Speichern von Daten vorsieht und ein Adressierungs-, Sende- und Empfangsmittel, das mit dem externen Speichermittel verbunden ist, für das Speichern der Daten und der Befehle vorsieht.

14. Elektronisches, digitales Prozessorsystem nach Anspruch 1, bei welchem das interne Speichermittel ein erstes internes Speichermittel (11) zum Speichern von Operationen des Systems an Daten definierenden Befehlen sowie ein zweites internes Speichermittel (12) zum Speichern von Daten enthält, gekennzeichnet durch eine Unterbrechungssteuerschaltung zum Empfangen eines Eingangssignals von einem Anschluß (INT-1, INT-2, INT-3) des Prozessorsystems, die mit dem Steuerungs- und Zeitablaufschaltungsmittel verbunden ist, damit die Ausführung einer Folge der Befehlssignale unterbrochen wird, mehrere Eingabe/Ausgabe - Register (30) und ein Kopplungsmittel (MD), das die Eingabe/Ausgabe - Register mit den Datenwegen für einen Zugriff durch Adressen in dem Registermittel verbinden, mehrere an der Eingabe/Ausgabe - Register angeschlossene Eingabe/Ausgabe - Anschlüsse (A, B, C, D), und ein Emulatorsteuermittel (25, 13R—Fig. 13D) für den Empfang eines Eingangssignals von einem Anschluß des Geräts, das an das Steuerungs- und Zeitablaufschaltungsmittel angeschlossen ist, damit das erste interne Speichermittel unwirksam gemacht wird, wodurch Adressen zu den Eingabe/Ausgabe - Registern ausgegeben werden, und an die Unterbrechungssteuerschaltung angeschlossen ist, damit das Kopplungsmittel unwirksam gemacht wird, wodurch kein Zugriff auf die Eingabe/Ausgabe - Register durch Adressen aus dem Registermittel erfolgt.

15. Elektronisches, digitales Prozessorsystem nach Anspruch 14, gekennzeichnet durch ein externes Speichermittel (13Q—Fig. 13D) zum Speichern von Befehlen, die Operationen an den Daten in dem System definieren, mit einem Adresseneingang und einem Datenausgang, und ein mit dem Adresseneingang und dem Datenausgang des externen Speichermittels verbundenes externes Busmittel, das mit den Eingabe/Ausgabe - Anschlüssen für den Empfang von Adressen aus dem Registermittel und zum Übertragen von Daten aus dem externen Speichermittel zu dem Registermittel gekoppelt ist.

16. Elektronisches, digitales Prozessorsystem nach Anspruch 1, bei welchem das interne Speichermittel ein erstes internes Speichermittel (11) zum dauerhaften Speichern von Operationen des Systems definierenden Befehlswörtern sowie ein zweites internes Speichermittel zur Bildung eines Lese/Schreib - Speichers (12) zum Speichern von Daten enthält, wobei das Steuerungs- und Zeitablaufschaltungsmittel die Befehlssignale in Abhängigkeit von Befehlswörtern aus dem ersten Speichermittel oder aus dem Lese/Schreib - Speicher erzeugt, gekennzeichnet durch ein Steuerspeichermittel (25, 26, 26A, 26B, 26C), auf das über die Datenwege durch das Steuerungs- und Zeitablaufschaltungsmittel ein Zugriff ausgeübt wird, damit die Funktionen der mehreren Eingabe/Ausgabe - Anschlüsse für die Festlegung eines Ein - Chip - Microcomputermodus unter Verwendung der Anschlüsse aus Daten - Eingabe/Ausgabe - Anschlüssen sowie eines erweiterten Speichermodus unter Verwendung wenigstens eines Anschlusses als externe Speicheradresse und eines weiteren Anschlusses als externe Speichersteuerung ausgewählt werden, und Mittel (27, 28, 18) zum Laden des Steuerspeichermittels mit in dem Speichermittel oder dem

50

.

# EP 0 063 458 B1

Lese/Schreib - Speicher gespeicherten Daten über die Datenwege und das Registermittel, damit von dem Mikrocomputermodus in den erweiterten Speichermodus zum Laden von Befehlswortern in den Lese/Schreib - Speicher in Abhängigkeit von Befehlswörtern umgeschaltet wird und von dem erweiterten Speichermodus in den Mikrocomputermodus zur Ausführungs des in dem Lese/Schreib - Speicher geladenen Befehlsworts umgeschaltet wird.

17. Elektronisches, digitales Prozessorsystem nach Anspruch 16, gekennzeichnet durch eine Rücksetzsteuerung (RST) und Mittel zum Laden des Steuerspeichermittels für die Festlegung des Mikrocomputermodus, wenn die Rücksetzsteuerung aktiviert ist.

18. Verfahren zum Betreiben eines Mikrocomputergeräts des Typs mit: einer Rechen/Logik - Einheit (14); mehreren Daten/Adressen - Registern (15); einem Busmittel (16) für den Zugriff auf die Rechen/Logik - Einheit und die Register; einem Befehlsregister (IR); einem Lese - Schreib - Speicher (12), auf den über das Busmittel unter Verwendung der Register zugegriffen wird; und einem Speichermittel (11) zum dauerhaften Speichern von Befehlswörtern sowie einem Steuermittel (17, 22) zum Festlegen der Operation der Rechen/Logik - Einheit, der Register und des Busmittels in Abhängigkeit von Befehlswörtern in dem Befehlsregister; wobei mehrere Mehrbit - Eingabe/Ausgabe - Anschlüsse (A, B, C, D) für den Zugriff auf externe Schaltungseinheiten über das Busmittel vorgesehen sind, dadurch gekennzeichnet, daß das Verfahren folgende Schritte enthält: Holen eines Befehlsworts zum Versetzen des Geräts in einen Operationsmodus, in dem wenigstens einer der Anschlüsse ein Adressenausgang ist und wenigstens einer der Anschlüsse Speichersteuersignalausgänge für den Zugriff auf einen externen Speicher enthält; Laden von Befehlswörtern über die Anschlüsse und das Busmittel in dem Lese/Schreib - Speicher; Hohlen eines weiteren Befehlsworts zum Erzeugen von Befehlen, die das Gerät in einen Operationsmodus einstellen, in dem die Anschlüsse nur als Daten - Eingabe/Ausgabe - Anschlüsse wirken; Holen einer Folge von Befehlswörtern aus dem Lese/Schreib - Speicher zur Erzeugung von Befehlen, die die Durchführung von Operationen in der Rechen/Logik - Einheit bewirken; und Aktivieren ausgewählter Bits an wenigstens einem der Anschlüsse auf der Basis der Ergebnisse der Operationen.

19. Verfahren nach Anspruch 18, gekennzeichnet durch Erzeugen einer Mikrobefehlsadresse aus jedem Befehlswort in dem Befehlsregister und Koppeln der Mikrobefehlsadresse an einen Mikrocodespeicher innerhalb des Steuermittels zum Starten der Ausgabe einer Folge von Mikrobefehlen aus dem Mikrocodespeicher.

20. Verfahren nach Anspruch 18 oder 19, dadurch gekennzeichnet, daß das Einstellen des Geräts in einen Operationsmodus das Laden eines Steuerspeichers mit Daten aus dem Speichermittel enthält.

## Revendications

1. Système de processeur numérique électronique comportant:

des moyens de mémoire interne (11, 12) destinés à mémoriser des données et des instructions qui définissent des opérations sur lesdites données et autres fonctions du système;

des moyens arithmétiques et logiques (14) pour effectuer lesdites opérations sur lesdites données;

des moyens de registres (15) destinés à mémoriser temporairement lesdites données et à mémoriser temporairement des adresses pour accéder auxdits moyens de mémoire interne;

plusieurs chemins de données (16, MD, AH, AL) couplant lesdits moyens de mémoire interne, lesdits moyens arithmétiques et logiques et lesdits moyens de registres, et

des moyens de circuits de commande de temporisation (21, 17) couplés avec lesdits chemins de données, lesdits moyens de circuits de commande et de temporisation recevant des instructions desdits moyens de mémoire interne par lesdits chemins de données et produisant des signaux de commande pour lesdits moyens arithmétiques et logiques, vers lesdits chemins de données et vers lesdits moyens de registres pour l'exécution desdits instructions afin de définir le fonctionnement du système processeur;

caractérisé par des moyens de circuits de commande périphérique (25, 26, 26A, 26B, 26C, 27, 28) destinés à produire l'une de plusieurs configurations de mémoire qui donnent accès auxdits moyens de mémoire interne tout en produisant un accès d'adressage décalé vers des composants périphériques comprenant plusieurs connexions d'entrée/sortie à bits multiples (A, B, C, D) afin d'assurer une entrée et une sortie d'information pour le système processeur, lesdits moyens de circuits de commande périphérique étant couplés avec lesdits chemins de données pour transférer des adresses et des données et pour recevoir des signaux de commande provenant desdits moyens de circuits de commande et de temporisation.

2. Système de processeur numérique électronique selon la revendication 1, caractérisé en outre en ce que lesdits moyens de circuits de commande périphérique comprennent un fichier périphérique (PF) contenant plusieurs positions d'adresses dans une plage d'adresses donnée et séparé desdits moyens de registres, plusieurs registres de commande directionnelle (P7, P9, P11) pour les connexions d'entrée/sortie incluses dans ledit fichier périphérique, un temporisation d'intervalles (26) comprenant plusieurs compteurs et registres de commande (26, 26A, 26B, 26C) et un circuit de commande d'interruption (29) comprenant au moins un registre de commande d'interruption (25) et ayant des sorties couplées avec lesdits moyens de circuits de commande et de temporisation.

3. Système de processeur numérique électronique selon la revendication 2, caractérisé en outre par un circuit de décalage (BCD) inclus dans ledit fichier périphérique et couplé avec lesdits chemins de données

# EP 0 063 458 B1

pour produire un adressage décalé dudit fichier périphérique en chargeant lesdits chemins, de données avec une adresse décalée en accédant à des composants périphériques dans ledit fichier périphérique.

4. Système de processeur numérique électronique selon la revendication 2 ou 3, caractérisé en outre en ce que lesdits configurations de mémoire sont programmables intérieurement en fonction de valeurs de positions binaires dans lesdits moyens de registres couplés avec ledit fichier périphérique par lesdits chemins de données.

5. Système de processeur numérique électronique selon la revendication 5, caractérisé en outre en ce que lesdits configurations de mémoire sont déterminées par des bits programmables intérieurement de positions binaires d'un registre contenu dans ledit circuit de commande d'interruption.

6. Système de processeur numérique électronique selon la revendication 5, caractérisé en outre en ce que lesdites configurations de mémoire sont déterminées par une combinaison de bits programmables intérieurement de positions binaires des moyens de registres et par une entrée pour un dispositif extérieur.

7. Système de processeur numérique électronique selon la revendication 5, caractérisé en outre lesdites configurations de mémoire sont déterminées par une combinaison de bits programmables intérieurement de positions binaires desdits moyens de registres et une entrée de bits extérieure programmable.

8. Système de processeur numérique électronique selon la revendication 4, caractérisé en outre en ce que lesdites configurations de mémoire sont déterminées par des bits programmables intérieurement de positions binaires contenues dans un registre dudit circuit de commande d'interruption et par une entrée de bits extérieure programmable.

9. Système de processeur numérique électronique selon la revendication 8, caractérisé en outre en ce que lesdits configurations de mémoire comprennent une première configuration (figure 2A) constituant lesdits moyens de mémoire interne pour la mémorisation desdites données et desdites instructions, plusieurs connexions d'entrée/sortie, une connexion de sortie et une connexion d'entrée pour l'émission de données de sortie et la réception de données d'entrée provenant d'un dispositif extérieur.

10. Système de processeur numérique électronique selon la revendication 9, caractérisé en outre en ce que lesdites configurations de mémoire comprennent une seconde configuration (figure 2B) qui produit lesdits moyens de mémoire interne pour mémoriser des données et des instructions, une connexion d'entrée/sortie, une connexion de sortie et une connexion d'entrée pour la transmission de données de sortie et la réception de données d'entrée provenant dudit dispositif extérieur et des moyens pour adresser, envoyer et recevoir lesdites données avec des moyens de mémoire extérieure.

11. Système de processeur numérique électronique selon la revendication 10, caractérisé en outre en ce que lesdites configurations de mémoire comprennent une troisième configuration (figure 2C) produisant lesdits moyens de mémoire interne pour mémoriser des données et des instructions, une connexion d'entrée et une connexion de sortie pour la transmission de données de sortie et la réception de données d'entrée et des moyens d'adressage, de réception et d'envoi desdites données vers lesdits moyens de mémoire extérieure.

12. Système de processeur numérique électronique selon la revendication 11, caractérisé en outre en ce que lesdites configurations de mémoire comprennent une quatrième configuration (figure 2D) produisant une connexion d'entrée et une connexion de sortie pour la transmission de données de sortie et la réception de données d'entrée provenant dudit dispositif extérieur, lesdits moyens de mémoire interne pour mémoriser des données et des moyens d'adressage, de réception et d'envoi couplés avec lesdits moyens de mémoire extérieure pour la mémorisation desdites instructions.

13. Système de processeur numérique électronique selon la revendication 12, caractérisé en outre en ce que lesdites configurations de mémoire comprennent une cinquième configuration (figure 2E) produisant lesdits moyens de mémoire interne pour mémoriser des données et des moyens d'adressage, d'envoi et de réception connectés auxdits moyens de mémoire extérieure pour la mémorisation desdites données et desdits instructions.

14. Système de processeur numérique électronique selon la revendication 1, dans lequel lesdits moyens de mémoire interne comprennent des premiers moyens de mémoire interne (11) pour mémoriser une instruction qui définit des opérations du système sur des données et des seconds moyens de mémoire interne (12) pour mémoriser des données; caractérisé en outre par un circuit de commande d'interruption destiné à recevoir une entrée provenant d'une borne (INT-1, INT-2, INT-3) dudit système processeur et couplés avec lesdits moyens de circuit de commande et de temporisation pour interrompre l'exécution d'une séquence desdits signaux de commande, plusieurs registres d'entrée/sortie (30) et des moyens de couplage (MD) connectant lesdits registres d'entrée/sortie auxdits circuits de données pour accéder par des adresses dans lesdits moyens de registres, plusieurs bornes d'entrée/sortie (A, B, C, D) couplées avec lesdits registres d'entrée/sortie, et des moyens de commande d'émulateur (25, 13R—figure 13D) pour recevoir une entrée provenant d'une borne dudit dispositif et couplés avec lesdits moyens de circuit de commande et de temporisation pour inhiber lesdits premiers moyens de mémoire interne, de manière que des adresses soient sorties vers lesdits registres d'entrée/sortie et lesdits circuits de commande d'interruption et pour inhiber lesdits moyens de couplage de manière que l'accès ne soit pas donné auxdits registres d'entrée/sortie par des adresses provenant desdits moyens de registres.

15. Système de processeur numérique électronique selon la revendication 14, caractérisé en outre par des moyens de mémoire extérieure (13Q-figure 13D) pour mémoriser des commandes qui définissent des opérations dans le système sur lesdites données, ayant une entrée d'adresse et une sortie de données, et des moyens de ligne omnibus extérieure couplés avec ladite entrée d'adresse et ladite sortie de données desdits moyens de mémoire extérieure et couplés avec lesdites bornes d'entrée/sortie pour recevoir des adresses desdits moyens de registres et pour transférer des données depuis les moyens de mémoire extérieure vers lesdits moyens de registres.

16. Système de processeur numérique électronique selon la revendication 1, dans lequel lesdits moyens de mémoire interne comprennent des premiers moyens de mémoire interne (11) pour mémoriser de façon permanente des mots d'instruction définissant les opérations du système et des seconds moyens de mémoire interne définissant une mémoire à lecture/écriture (12) pour mémoriser des données, lesdits moyens de circuits de commande et de temporisation produisant lesdits signaux de commande en réponse à des mots d'instruction provenant desdits premiers moyens de mémoire ou de ladite mémoire de lecture/écriture;

caractérisé en outre par des moyens de verrouillage de commande (25, 26, 26A, 26B, 26C) dont l'accès est donnée par lesdits chemins de données, par lesdits moyens de circuits de commande et de temporisation pour sélectionner les fonctions desdites plusieurs connexions d'entrée/sortie afin de définir un mode de micro-organateur sur une seule pastille utilisant les connexions comme des entrées et sorties de données et une mode de mémoire étendue utilisant au moins une connexion comme une adresse de mémoire extérieure et une autre connexion comme une commande de mémoire extérieure;

et des moyens (27, 28, 18) pour charger lesdits moyens de verrouillage de commande avec des données mémorisées dans lesdits moyens de mémoire ou ladite mémoire de lecture/écriture par lesdits chemins de données et lesdits moyens de registres pour passer dudit mode de micro-ordinateur audit mode de mémoire étendue afin de charger des mots d'instruction dans ladite mémoire de lecture/écriture en réponse à des mots d'instruction et pour passer dudit mode de mémoire étendue audit mode de micro-ordinateur afin d'exécuter ledit mot d'instruction qui a été chargé dans ladite mémoire de lecture/écriture.

17. Système de processeur numérique électronique selon la revendication 16, caractérisé en outre par une commande de mise au repos (RST) et des moyens pour charger lesdits moyens de verrouillage de commande afin de définir ledit mode de micro-ordinateur quand la commande de mise au repos est activée.

18. Procédé de commande d'un dispositif micro-ordinateur du type comprenant:
une unité arithmétique/logique (14);
plusieurs registres de données/adresses (15);
des moyens de lignes omnibus (16) destinés à accéder à l'unité arithmétique/logique et aux registres;
un registre d'instruction (IR);
une mémoire à lecture/écriture (12) dont l'accès est donné par lesdits moyens de lignes omnibus utilisant ledit registre; et
des moyens de mémoire (11) destinés à mémoriser de façon permanente des mots d'instruction et des moyens de commande (17, 22) pour définir l'opération de l'unité arithmétique/logique, les registres et lesdits moyens de lignes omnibus en réponse aux mots d'instruction dans le registre d'instruction;
dans lequel plusieurs connexions d'entrée/sortie à bits multiples (A, B, C, D) sont prévues pour accéder au circuit extérieur par lesdits moyens de ligne omnibus;
caractérisé en ce que le procédé consiste:
à extraire un mot d'instruction pour mettre le dispositif dans un mode d'opération dans lequel l'une au moins des connexions est une sortie d'adresse et l'une au moins des connexions comporte des sorties de signal de commande de mémoire pour accéder à une mémoire extérieure;
à charger des mots d'instruction par lesdites connexions et lesdits moyens de lignes omnibus vers ladite mémoire à lecture/écriture;
à extraire un autre mot d'instruction pour produire des commandes mettant en place le dispositif dans un mode d'opération dans lequel les connexions fonctionnent seulement comme une entrée/sortie de données
à extraire une séquence de mots d'instruction de ladite mémoire à lecture/écriture pour produire des commandes entraînant l'exécution d'opérations dans l'unité arithmétique/logique; et
à activer des bits sélectionnés dans l'une au moins desdites connexions sur la base des résultats desdites opérations.

19. Procédé selon la revendication 18, caractérisé en outre en ce qu'il consiste à produire une adresse de micro-instruction à partir de chaque mot d'instruction dans le registre d'instruction et à coupler ladite adresse de micro-instruction avec une mémoire de microcode dans lesdits moyens de commande pour démarrer la sortie d'une séquence de micro-instructions à partir de la mémoire de micro-code.

20. Procédé selon la revendication 18 ou 19, caractérisé en outre en ce que la mise en place du dispositif dans un mode d'opération consiste à charger un registre de commande avec des données extraites des moyens de mémoire.

Fig. 1a

Fig. 1b

SEMICONDUCTOR CHIP

EP 0 063 458 B1

Fig. 2

MEMORY MAP

Fig. 2a

PF REGS USED
FOR SINGLE-
CHIP MICRO-
COMPUTER
MODE

| PF REG NO. | HEX ADDRESS | FUNCTION |
|---|---|---|
| P0 | 0100 | I/O REG 25 |
| P1 | 0101 | |
| P2 | 0102 | TIMER DATA |
| P3 | 0103 | TIMER CONTROL |
| P4 | 0104 | PORT A DATA |
| P5 | 0105 | |
| P6 | 0106 | PORT B DATA |
| P7 | 0107 | |
| P8 | 0108 | PORT C DATA |
| P9 | 0109 | PORT C DIRECTION |
| P10 | 010A | PORT D DATA |
| P11 | 010B | PORT D DIRECTION |
| | 010C | |
| | | PF REGISTERS AT 010C TO 01FF UNUSED |
| | 01FE | |
| | 01FF | |

Fig. 2b

PF REGS
FOR PERIPHERAL
EXPANSION MODE

Fig. 2c

MEMORY MAP
FOR FULL
EXPANSION MODE

4

Fig. 2d

MEMORY MAP
FOR MICRO-
PROCESSOR MODE

Fig. 2e

MEMORY MAP
FOR SYSTEM
EVALUATOR MODE

Fig.3

*Fig. 3a*

CELLS MIRRORED ABOUT ₵
SO CLOCK BUS H2   H4 SHARED

CLOCK H2
CLOCK H4
P BUS (BIT-3)
P BUS (BIT-2)
N BUS (BIT-3)
N BUS (BIT-2)
O BUS (BIT-3)
O BUS (BIT-2)
MD BUS (BIT-3)
MD BUS (BIT-2)
METAL

POLY

#TtN → T/MAH REG BIT-2

#TtAH

#MDtT

#MDtP

#MDtN

#PCHtP → PCH REG BIT-2

#PCHtAH

#OtPCH

#PCLtP → PCL REG BIT-2

OtPCL

#PAL

#MALtAL → POLY-SILICON CONTROL LINES

OtMAL

#SPtAL

OtSP → SP REG BIT-2

SP REG BIT-3
AH BUS
AL BUS
AL   AH
METAL BUS LINES
METAL BUS LINES

7

Fig.3b

Fig. 4

Fig. 5a

Fig. 5b

Fig. 6

Fig. 7

| | | | | (Fig. 18b | TIMER |
| | | | | (Fig. 18c | |
| | | | | (Fig. 17b | REG. 25 |
| | | | | (Fig. 17 | INT. 29 |
| | | | | (Fig. 10 | EP 21 |
| | | | | (Fig. 7f | IR |
| | | | | (Fig. 7e | ST |
| | | | | (Fig. 7d | BCD |
| | | | | | S |
| | | | | (Fig. 7c | ALU |
| | | | | | T/MAH |
| (Fig. 7c') | | | | | MD1P, MD1N |
| | | | | | PCH |
| | | | | (Fig. 7b | PCL |
| | | | | | MAL |
| | | | | | SP |
| | | | | | ADD. BUF. L |
| | | | | | ADD. BUF. H |

(Fig. 7a

Fig. 7a

ADDRESS BUFFER (LOW BYTE)
ONE OF 8 BITS

AL BUS    AH BUS

15i    15i

19

15j

LDADDR

15i    15i

19

15j
H2

AL' BUS

AH' BUS

ADDRESS BUFFER
(HIGH BYTE)
ONE OF 8 BITS

Fig.7b

Fig. 7c

Fig. 7d

*Fig. 7e*

*Fig. 7f*

TO E.P. *21*
IR(n), $\overline{IR(n)}$

MD BUS

H1

FIRIn

H1

H3

MD↑IR

*17b*

*16j*

*15i*  *15i*  *15g*

*15j*

H1

NBUS

IR
(ONE OF 8 BITS)

EP 0 063 458 B1

Fig. 7b'

Fig. 7c'

*Fig. 7d'*

BCD ARITHMETIC OPERATION TIMING

Fig. 7e'

Fig. 7c"

Fig. 8a

Fig. 8b

Fig. 8c

Fig.8e

Fig.8d

Fig. 8f

*Fig. 8g*

Fig. 8h

31

Fig.8i

DOPFUNP ─8n

LDAP-0
(F0)

LDBP-0
(FI)

STP-0
(F2)

ANDP-0
(F3)

ORP-0
(F4)

XORP-0
(F5)

BTHP-0
(F6)

BTLP-0
(F7)

IAQ-0

TO
STAL-2

FROM
LDAL-0

SOPFUNS ─8n

FROM
BTL-0

SOPFUNN ─8n

DRJN-0
(2A)

STA-0
(20)

DEC-0
(22)

INV-0
(24)

SWAP-0
(27)

XCHB-0
(26)

(96)

POP-0
(29)

PUSH-0
(28)

DECD-0
(2B)

DECD-1
(40)

RR-0
(2C)

RLC-0
(2F)

DRJN-1
(44)

STB-0
(21)

CLR-0
(25)

INC-0
(23)

SWAP-2
(98)

XCHB-1
(92)

FROM
MOVD-5

DEC-2
(42)

PUSH-1
(90)

RRC-0
(2D)

RL-0
(2E)

DRJN-2
(8D)

MACRO
JUMP
DISPATCH

DRJN-3
(8C)

TO
RJMP-3

Fig.8j

IAQ-0

I TO RF-4

IAQ-0

Fig. 9

A  — A Register
B  — B Register
Rn — Register File
Pn — Peripheral File
%n — Immediate
@n — Direct
•Rn — Indirect

32

EP 0 063 458 B1

| Lo \ Hi | 0000 0 | 0001 1 | 0010 2 | 0011 3 | 0100 4 | 0101 5 | 0110 6 | 0111 7 | 1000 8 | 1001 9 | 1010 A | 1011 B | 1100 C | 1101 D | 1110 E | 1111 F |
|---|---|---|---|---|---|---|---|---|---|---|---|---|---|---|---|---|
| 0000 0 | NOP | | | | | | | | MOVP Pn,A | | | TSTA/ CLRC | MOV A,B | MOV A,Rn | JMP | TRAP 15 |
| 0001 1 | IDLE | | | | | | | | | MOVP Pn,B | | | TSTB | MOV B,Rn | JN/ JLT | TRAP 14 |
| 0010 2 | | MOV Rn,A | MOV %n,A | MOV Rn,B | MOV Rn,Rn | MOV %n,B | MOV B,A | MOV %n,Pn | MOVP A,Pn | MOVP B,Pn | MOVP %n,Pn | DEC A | DEC B | DEC Rn | JZ/ JEQ | TRAP 13 |
| 0011 3 | | AND Rn,A | AND %n,A | AND Rn,B | AND Rn,Rn | AND %n,B | AND B,A | AND %n,R | ANDP A,Pn | ANDP B,Pn | ANDP %n,Pn | INC A | INC B | INC Rn | JC/ JHS | TRAP 12 |
| 0100 4 | | OR Rn,B | OR %n,A | OR Rn,B | OR Rn,Rn | OR %n,B | OR B,A | OR %n,R | ORP A,Pn | ORP B,Pn | ORP %n,Pn | INV A | INV B | INV Rn | JP/ JGT | TRAP 11 |
| 0101 5 | EINT | XOR Rn,A | XOR %n,A | XOR Rn,B | XOR Rn,Rn | XOR %n,B | XOR B,A | XOR %n,R | XORP A,Pn | XORP B,Pn | XORP %n,Pn | CLR A | CLR B | CLR Rn | JPZ/ JGE | TRAP 10 |
| 0110 6 | DINT | BTJO Rn,A | BTJO %n,A | BTJO Rn,B | BTJO Rn,Rn | BTJO %n,B | BTJO B,A | BTJO %n,R | BTJOP A,Pn | BTJOP B,Pn | BTJOP %n,Pn | XCHB A | XCHB B | XCHB Rn | JNZ/ JNE | TRAP 9 |
| 0111 7 | SETC | BTJZ Rn,A | BTJZ %n,A | BTJZ Rn,B | BTJZ Rn,Rn | BTJZ %n,B | BTJZ B,A | BTJZ %n,R | BTJZP A,Pn | BTJZP B,Pn | BTJZP %n,Pn | SWAP A | SWAP B | SWAP Rn | JNC/ JL | TRAP 8 |
| 1000 8 | POP ST | ADD Rn,A | ADD %n,A | ADD Rn,B | ADD Rn,Rn | ADD %n,B | ADD B,A | ADD %n,R | MOVD %n,Rn | MOVD Rn,Rn | MOVD %n(B),Rn | PUSH A | PUSH B | PUSH Rn | TRAP 23 | TRAP 7 |
| 1001 9 | STSP | ADC Rn,A | ADC %n,A | ADC Rn,B | ADC Rn,Rn | ADC %n,B | ADC B,A | ADC %n,R | | | | POP A | POP B | POP Rn | TRAP 22 | TRAP 6 |
| 1010 A | RETS | SUB Rn,A | SUB %n,A | SUB Rn,B | SUB Rn,Rn | SUB %n,B | SUB B,A | SUB %n,R | LDA @n | LDA •Rn | LDA @n(B) | DJNZ A | DJNZ B | DJNZ Rn | TRAP 21 | TRAP 5 |
| 1011 B | RETI | SBB Rn,A | SBB %n,A | SBB Rn,B | SBB Rn,Rn | SBB %n,B | SBB B,A | SBB %n,R | STA @n | STA •Rn | STA @n(B) | DECD A | DECD B | DECD Rn | TRAP 20 | TRAP 4 |
| 1100 C | | MPY Rn,A | MPY %n,A | MPY Rn,B | MPY Rn,Rn | MPY %n,B | MPY B,A | MPY %n,R | BR @n | BR •Rn | BR @n(B) | RR A | RR B | RR Rn | TRAP 19 | TRAP 3 |
| 1101 D | LDSP | CMP Rn,A | CMP %n,A | CMP Rn,B | CMP Rn,Rn | CMP %n,B | CMP B,A | CMP %n,R | CMPA @n | CMPA •Rn | CMPA @n(B) | RRC A | RRC B | RRC Rn | TRAP 18 | TRAP 2 |
| 1110 E | PUSH ST | DAC Rn,A | DAC %n,A | DAC Rn,B | DAC Rn,Rn | DAC %n,B | DAC B,A | DAC %n,R | CALL @n | CALL •Rn | CALL @n(B) | RL A | RL B | RL Rn | TRAP 17 | TRAP 1 |
| 1111 F | | DSB Rn,A | DSB %n,A | DSB Rn,B | DSB Rn,Rn | DSB %n,B | DSB B,A | DSB %n,R | | | | RLC A | RLC B | RLC Rn | TRAP 16 | TRAP 0 |

Fig. 10a

Fig. 10b

KEYBOARD

ACTUATORS

A PORT

B PORT

13-2

CLKOUT    ALATCH

ENABLE

R/W̄

R/W̄

D PORT

C PORT

ADDRESS LATCH

ADDRESS
BUS

13i

13j

INT1
INT2
MC
RST

VCC
VSS

XTAL

10

VIDEO DISPLAY
PROCESSOR
CHIP (TMS9918)

13f

GENERAL PURPOSE
INTERFACE BUS ADAPTER
CHIP (TMS9914)

13g

TO COLOR
VIDEO DISPLAY

TO IEEE
488 GMB BUS

13h

BIDIRECTIONAL DATA BUS

EP 0 063 458 B1

34

*Fig.10c*

KEYBOARD

A PORT

B PORT

0
1
2
3
4
5
6
7

CLKOUT

ALATCH

R/W̄

*13-2*

D PORT

C PORT

ADDRESS LATCH

INT1
INT2
MC
RST

VCC
VSS

XMTL

*13i*

*10*

VIDEO DISPLAY
PROCESSOR
CHIP (TMS9918)

*13f*

TO COLOR
VIDEO DISPLAY

*13m*

*13n*

DATA BUS (BIDIRECTIONAL)

Fig.10d

*Fig. 10e*

B AND C PORT TIMING WITH ALATCH, R/W, ENABLE AND CLKOUT
FOR OFF-CHIP ACCESSES IN FIG. 13b, 13c, 13d MODE OF OPERATION

*Fig.10c'*

ENABLE        R/W                    ADDRESS BUS
                                     (LOW BYTE)

13k

GENERAL PURPOSE
INTERFACE BUS ADAPTER          MEMORY
(TMS9914)              (E.G. TMS2516 FROM 32K BYTE)

TO IEEE
488 GMB BUS    13h              13g

ADDRESS BUS (HIGH BYTE)

## Fig. 11a

| CONTROL SIGNAL | INTERNAL PERPHERALS | BUS ADDRESS | EM | MP | MMD1 | MMD0 | MEM |
|---|---|---|---|---|---|---|---|
| | | F F̄ E Ē D D̄ C C̄ B B̄ A Ā 9 9̄ 8 8̄ 7 7̄ 6 6̄ 5 5̄ 4 4̄ 3 3̄ 2 2̄ 1 1̄ 0 0̄ | | | | | |
| G̅R̅A̅M̅ | RAM | X X X X X X X X X | | X | | | X |
| G̅R̅O̅M̅ | ROM | X X X X X | | | | | X |
| G̅I̅ | INTERRUPT | X X X X X X X   XX X X X X X X | X | | | | X |
| G̅T̅ | TIMER | X X X X X X X   XX X X X X X   X | X | | | | X |
| G̅A̅ | PORT A | X X X X X X X   XX X X X X   XX | X | | | | X |
| G̅B̅ | PORT B | X X X X X X X   XX X X X X   X X | X | | | | X |
| G̅C̅ | PORT C | X X X X X X X   XX X X X   XX X | X | X | X | X | X |
| G̅D̅ | PORT D | X X X X X X X   XX X X X   XX   X | X | X | X | | X |

EM – EMMULATOR MODE
MP – MICROPROCESSOR MODE
MMD0 – MEMORY MODE BITS
MMD1
MEM – MICROINSTRUCTION CONTROL (SEE TIMING DIAGRAM FIGURE 4)

| | MC | MMD1 | MMD0 |
|---|---|---|---|
| EMULATOR | HV | X | X |
| MICROPROCESSOR | 1 | X | X |
| FULL EXPANSION | 0 | 1 | 0 |
| .PARTIAL EXPANSION | 0 | 0 | 1 |
| SINGLE CHIP | 0 | 0 | 0 |

*Fig. IIb*

HV = HIGH VOLTAGE

X = DON'T CARE

## Fig. 12a

### RESET/INTERRUPT VECTOR LOCATION

| VECTOR MSB | VECTOR LSB | DESCRIPTION | SERVICE ORDER |
|---|---|---|---|
| FFFE | FFFF | RESET | IMMEDIATE |
| FFFC | FFFD | INT1 | 1 |
| FFFA | FFFB | INT2 (TIMER) | 2 |
| FFF8 | FFF9 | INT3 | 3 |

## Fig. 12b

### I/O CONTROL REGISTER CONTENTS
### BIT POSITION

| | 7 | 6 | 5 | 4 | 3 | 2 | 1 | Ø |
|---|---|---|---|---|---|---|---|---|
| READ | MEMORY MODE1 | MEMORY MODE0 | INT3 FLAG | INT3 ENABLE | INT2 FLAG | INT2 ENABLE | INT1 FLAG | INT1 ENABLE |
| WRITE | MEMORY MODE1 | MEMORY MODE0 | INT3 CLEAR | INT3 ENABLE | INT2 CLEAR | INT2 ENABLE | INT1 CLEAR | INT1 ENABLE |

*Fig. 12c*

```
                    ┌─────────────┐    ┌─────────────┐
                    │ 5-BIT CONTROL│    │ 8-BIT LATCH │  26b
                    │    LATCH    │ 26a-1         │
                    └──────┬──────┘    └──────┬──────┘
                           │                  │
φ/8 ─────────┐      ┌──────▼──────┐    ┌──────▼──────┐
EXTERNAL ────┐│     │   5-BIT     │    │ 8-BIT TIMER │── 26
SIGNAL       ││     │  PRESCALER  │──▶│             │
             ││     └──────┬──────┘    └──┬───┬──────┘
             ││        26a     26i      26j
MODE ────────┘                    INT2  TIMER    26c   INT3
                                        VALUE
                                              ┌──────────────┐
                                              │   8-BIT      │
                                              │CAPTURE LATCH │
                                              └──────┬───────┘
                                                     │
                                                  CAPTURE
                                                   VALUE
```

*Fig. 12d*

TIMER DATA & CONTROL REGISTERS

| | 7 | 6 | 5 | 4 | 3 | 2 | 1 | 0 | |
|---|---|---|---|---|---|---|---|---|---|
| DATA | | | | CURRENT TIMER VALUE | | | | | READ |
| P2 >0102 | | | | COUNTER LATCH VALUE | | | | | WRITE |

26b-1

| | | | | | | | | | |
|---|---|---|---|---|---|---|---|---|---|
| CONTROL | | | | CAPTURE LATCH VALUE | | | | | READ |
| P3 >0103 | START | SOURCE | | | PRESCALE LATCH VALUE | | | | WRITE |

26a-1

Fig.13a

Fig.13b

Fig. 13c

Fig.13d

*Fig. 13e*

INTERRUPT GENERATION FOR THE SYSTEM EMULATOR MODE

FD (INT2 INTERRUPT VECTOR ⟶

FFFA | ENTRY POINT MS BYTE
FFFB | ENTRY POINT LS BYTE